# EUROPEAN PATENT APPLICATION

(11) **EP 4 694 155 A1**
(43) Date of publication of application: **11.02.2026**
(21) Application number: 24777605.7
(22) Date of filing: 28.02.2024
(51) Int. Cl.: H04N 21/485

(54) **DISPLAY DEVICE AND DEVICE CONTROL METHOD**

(30) Priority: 30.03.2023 CN 202310331670; 30.10.2023 CN 202311431246; 15.12.2023 CN 202311735527; 29.12.2023 CN 202311861631
(71) Applicant: Hisense Visual Technology Co., Ltd., Economic and Technical Development Zone Qingdao, Shandong 266555 (CN)
(72) Inventor: DENG, Zijing, Qingdao, Shandong 266555 (CN); WANG, Xiaochen, Qingdao, Shandong 266555 (CN)
(74) Representative: Pfenning, Meinig & Partner mbB
(86) International application number: PCT/CN2024/079095
(87) International publication number: WO 2024/198815

(57) **Abstract**

The present disclosure relates to the technical field of Bluetooth, and relates to a display device and a device control method. The display device comprises: a monitor, a user input interface, a Bluetooth module, a communication apparatus, a memory, and at least one processor which is connected to the monitor, the user input interface, the Bluetooth module, the communication apparatus and the memory, wherein the at least one processor is configured to execute a computer instruction so as to enable the display device to: in response to a selection instruction for target channel combination information, start a broadcast corresponding to the target channel combination information; determine at least one audio receiving device by means of the Bluetooth module performing scanning and/or on the basis of connected audio receiving devices in a device manager; and on the basis of position information of a target audio receiving device among the at least one audio receiving device and a position information list corresponding to the target channel combination information, determine broadcast isochronous stream (BIS) configuration information corresponding to the target channel combination information, thereby implementing a channel configuration function.

## Description

### Cross-Reference to Related Applications

This disclosure claims priority to Chinese Patent Application No. 202311431246.X filed on October 30, 2023, Chinese Patent Application No. 202311735527.4 filed on December 15, 2023, Chinese Patent Application No. 202311861631.8 filed on December 29, 2023, and Chinese Patent Application No. 202310331670.0 filed on March 30, 2023, all of which are hereby incorporated by reference in their entireties.

### Technical Field

The disclosure relates to the field of Bluetooth technology, in particular to a display apparatus and an apparatus control method.

### Background

Currently, while playing music or videos, a television can establish an Access Control List (ACL) connection with a Bluetooth speaker, and transmit the audio to be played to the Bluetooth speaker via the ACL link, to achieve better sound playback effects. After receiving the audio to be played, the Bluetooth speaker can play the audio.

With the introduction of the new generation Bluetooth audio technology standard-Low Energy Audio (LE Audio), an increasing number of devices can support LE Audio technology. For televisions that support Bluetooth-based LE Audio technology, there is a need for an effective method for sound channel configuration.

### Summary

In a first aspect, the disclosure provides a display apparatus, including: a display configured to display images and/or a user input interface: a user input interface configured to receive a command from a user; a Bluetooth module configured to perform an operation related to a Bluetooth protocol; a communicating device configured to communicate with an external device based on a predetermined protocol; a memory configured to store computer instructions and data associated with the display apparatus; at least one processor, connected with the display, the user input interface, the Bluetooth module, the communicating device, and the memory, and configured to execute computer instructions to cause the display apparatus to perform: in response to an instruction for selecting target sound channel combination information, initiating a broadcast corresponding to the target sound channel combination information; determining at least one audio receiving device; where the at least one audio receiving device includes an audio receiving device scanned via the Bluetooth module and/or a connected audio receiving device in a device manager; determining BIS configuration information corresponding to the target sound channel combination information based on azimuth information of a target audio receiving device from the at least one audio receiving device and an azimuth information list corresponding to the target sound channel combination information; where the BIS configuration information includes a corresponding relationship between the target audio receiving device and a BIS identifier, and the target audio receiving device is configured to receive BIS audio data broadcast by the display apparatus based on the corresponding BIS identifier.

In a second aspect, the disclosure provides a device control method, including: in response to an instruction for selecting target sound channel combination information, initiating a broadcast corresponding to the target sound channel combination information; determining at least one audio receiving device; where the at least one audio receiving device includes an audio receiving device scanned via a Bluetooth module and/or a connected audio receiving device in a device manager; determining BIS configuration information corresponding to the target sound channel combination information based on azimuth information of a target audio receiving device from the at least one audio receiving device and an azimuth information list corresponding to the target sound channel combination information; where the BIS configuration information includes a corresponding relationship between the target audio receiving device and a BIS identifier, and the target audio receiving device is configured to receive BIS audio data broadcast by a display apparatus based on the corresponding BIS identifier.

### Brief Description of Figures

FIG. 1 is a schematic diagram illustrating one-to-one audio transmission for unicast media audio according to some embodiments.
FIG. 2 is a schematic diagram illustrating one-to-two audio transmission for unicast media audio according to some embodiments.
FIG. 3 is a schematic diagram illustrating a relationship between extended broadcasting, periodic broadcasting, and BIS according to some embodiments.
FIG. 4 is a schematic diagram illustrating a relationship between extended advertising packets, auxiliary advertising packets, periodic advertising packets, and BIS according to some embodiments.
FIG. 5 is a schematic diagram illustrating continuous BIG transmission according to some embodiments.
FIG. 6 is a schematic diagram of a first scenario for a device control method according to some embodiments.
FIG. 7 is a schematic diagram of a second scenario for a device control method according to some embodiments.
FIG. 8 is a schematic diagram of a third scenario for a device control method according to some embodiments.
FIG. 9 is a block diagram of a hardware configuration of a display apparatus 100 according to some embodiments.
FIG. 10 is a schematic diagram of a software system architecture of a display apparatus 100 according to some embodiments.
FIG. 11 is a hardware configuration block diagram of an audio receiving device 200 according to some embodiments.
FIG. 12 is a hardware configuration block diagram of a control terminal 300 according to some embodiments.
FIG. 13 is a first schematic flow diagram of a device control method according to some embodiments.
FIG. 14 is a first schematic diagram of an interface for sound channel combination selection according to some embodiments.
FIG. 15 is a schematic diagram of an audio receiving device configuration interface according to some embodiments.
FIG. 16 is a second schematic flow diagram of a device control method according to some embodiments.
FIG. 17 is a schematic diagram of an interface for sound options on a display apparatus according to some embodiments.
FIG. 18 is a first schematic diagram of a page for Bluetooth surround sound configuration according to some embodiments.
FIG. 19 is a second schematic diagram of a page for Bluetooth surround sound configuration according to some embodiments.
FIG. 20 is a third schematic diagram of a page for Bluetooth surround sound configuration according to some embodiments.
FIG. 21 is a schematic diagram illustrating a transition from a page for Bluetooth surround sound configuration to an interface for audio receiving device configuration according to some embodiments.
FIG. 22 is a third schematic flow diagram of a device control method according to some embodiments.
FIG. 23 is a schematic diagram of an azimuth information list according to some embodiments.
FIG. 24 is a schematic diagram of a fourth scenario of a device control method according to some embodiments.
FIG. 25 is a schematic diagram of a fifth scenario of a device control method according to some embodiments.
FIG. 26 is a fourth schematic flow diagram of a device control method according to some embodiments.
FIG. 27 is a second schematic diagram of an interface for sound channel combination selection according to some embodiments.
FIG. 28 is a first schematic diagram of a page for sound channel configuration according to some embodiments.
FIG. 29 is a fifth schematic flow diagram of a device control method according to some embodiments.
FIG. 30 is a schematic diagram of a scenario for configuring an audio receiving device for a target sound channel according to some embodiments.
FIG. 31 is a sixth schematic flow diagram of a device control method according to some embodiments.
FIG. 32 is a schematic diagram of a scenario for configuring an audio receiving device for a target sound channel according to some embodiments.
FIG. 33 is a seventh schematic flow diagram of a device control method according to some embodiments.
FIG. 34 is a second schematic diagram of a page for sound channel configuration according to some embodiments.
FIG. 35 is a sixth schematic diagram of a scenario of a device control method according to some embodiments.
FIG. 36 is an eighth schematic flow diagram of a device control method according to some embodiments.
FIG. 37 is a third schematic diagram of a page for sound channel configuration according to some embodiments.
FIG. 38 is a ninth schematic flow diagram of a device control method according to some embodiments.
FIG. 39 is a first schematic diagram of a configuration method for broadcasting BIS audio according to some embodiments.
FIG. 40 is a second schematic diagram of a configuration method for broadcasting BIS audio according to some embodiments.
FIG. 41 is a third schematic diagram of a configuration method for broadcasting BIS audio according to some embodiments.
FIG. 42 is a tenth schematic flow diagram of a device control method according to some embodiments.
FIG. 43 is a schematic diagram of an interface displaying an application identifier of a Bluetooth speaker application in a display apparatus according to some embodiments.
FIG. 44 is a third schematic diagram of an interface for sound channel combination selection according to some embodiments.
FIG. 45 is a schematic diagram of an interface for audio output mode selection according to some embodiments.
FIG. 46 is a first schematic diagram of a setup interface for configuring a speaker combination according to some embodiments.
FIG. 47 is a schematic diagram of an interface for scanning audio receiving devices according to some embodiments.
FIG. 48 is a schematic diagram of a pairing interface according to some embodiments.
FIG. 49 is a schematic diagram of an interface showing configuration information after speaker configuration has been performed according to some embodiments.
FIG. 50 is a schematic diagram of an audio media resource playback interface according to some embodiments.
FIG. 51 is a fourth schematic diagram of an interface for sound channel combination selection according to some embodiments.
FIG. 52 is a fifth schematic diagram of an interface for sound channel combination selection according to some embodiments.
FIG. 53 is a first schematic diagram of a volume adjustment interface according to some embodiments.
FIG. 54 is a second schematic diagram of a setup interface for configuring a speaker combination according to some embodiments.
FIG. 55 is a schematic diagram of an interface displaying output prompt information according to some embodiments.
FIG. 56 is a schematic diagram of a setup success interface according to some embodiments.
FIG. 57 is a schematic diagram of a configuration interface for sound channels and volume according to some embodiments.
FIG. 58 is a schematic diagram of a configuration completion interface according to some embodiments.
FIG. 59 is a second schematic diagram of a volume adjustment interface according to some embodiments.
FIG. 60 is an eleventh schematic flow diagram of a device control method according to some embodiments.
FIG. 61 is a schematic diagram of an interface for triggering the launch of a broadcast assistant application according to some embodiments.
FIG. 62 is a schematic diagram illustrating a control terminal scanning for available Bluetooth speakers according to some embodiments.
FIG. 63 is a schematic diagram of configuring a sound channel for a connected Bluetooth speaker according to some embodiments.
FIG. 64 is a schematic diagram of an interface for volume adjustment via a control terminal according to some embodiments.
FIG. 65 is a schematic diagram of an interface for sound channel selection according to some embodiments.
FIG. 66 is a schematic diagram of an interface for setting a front left speaker according to some embodiments.
FIG. 67 is a twelfth schematic flow diagram of a device control method according to some embodiments.
FIG. 68 is a schematic diagram of a hardware structure of an electronic device according to some embodiments.

### Detailed Description

The display apparatus and the audio receiving device(s) provided in the disclosure can support Bluetooth Low Energy Audio (LE Audio) technology, where the display apparatus serves as an apparatus for audio playback or an apparatus for configuring audio receiving devices. The display apparatus may be a television, mobile phone, projector, etc., and the audio receiving device may be a Bluetooth speaker, Bluetooth earphone, etc.

Compared to Classic Bluetooth, LE Audio can offer the following advantages.
1. One audio playback device can simultaneously connect with multiple audio receiving devices.
2. One broadcast audio device can transmit broadcast audio to an unlimited number of audio receiving devices, supporting encrypted broadcasting.
3. The latest Low Complexity Communication Codec (LC3) audio format is used, providing improved sound quality.
4. Voice over Internet Protocol (VoIP) and high-definition calling are supported.
5. Hearing aid/assistive listening applications are supported.

In the application layer specification of LE Audio, the Telephony and Media Audio Profile (TMAP) can define two types of media audio applications: unicast media audio and broadcast media audio.

### Unicast Media Audio

The unicast media audio in TMAP can adopt more advanced audio codecs compared to the current Classic Bluetooth media audio application specification (Advanced Audio Distribution Profile, A2DP) to provide better sound quality, while simultaneously offering richer control functions than the current Classic Bluetooth media playback control specification (Audio/Video Remote Control Profile, AVRCP). TMAP can define two roles for unicast media audio applications: Unicast Media Sender (UMS) and Unicast Media Receiver (UMR). Unicast media audio communication between UMS and UMR is achieved through Connected Isochronous Streams (CIS).

It should be noted that the unicast media audio defined in TMAP is not limited to one-to-one audio transmission; it can also support one unicast media sender transmitting unicast media audio to two unicast media receivers.

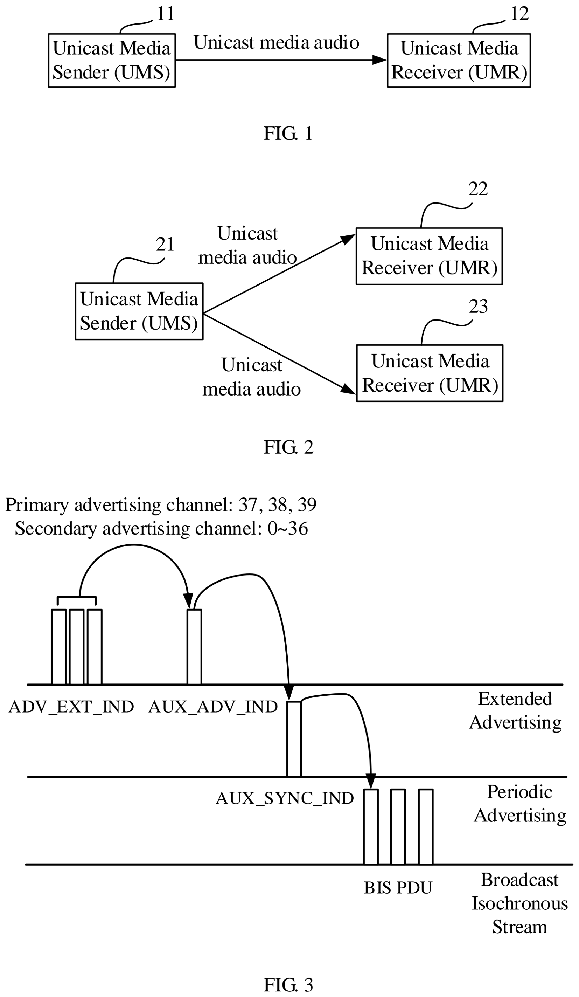

FIG. 1 is a schematic diagram of one-to-one audio transmission for unicast media audio in the related art. As shown in FIG. 1, UMS 11 transmits unicast media audio to UMR 12.

FIG. 2 is a schematic diagram of one-to-two audio transmission for unicast media audio in the related art. As shown in FIG. 2, UMS 21 transmits unicast media audio to UMR 22 and UMR 23, respectively.

### Broadcast Media Audio

The broadcast media audio in TMAP is based on the synchronous transmission of a plurality of connectionless Broadcast Isochronous Streams (BIS). The greatest advantage of broadcast media audio is its ability to synchronously transmit audio data to multiple audio receiving devices.

The broadcast synchronization channels for broadcast media audio in TMAP involve two concepts: Broadcast Isochronous Group (BIG) and BIS. One audio sending device can simultaneously transmit a plurality of BIGs. Each BIG can consist of a plurality of BISs, and one BIG can contain up to 31 BISs. Each BIS can have a unique Access Address. The Access Address of a BIS can be generated based on the Seed Access Address of the BIG it belongs to, using a unified algorithm.

Broadcast media audio can include various broadcasts with different access addresses. In some embodiments, these may include:
Extended Advertising: this is extended advertising on the primary advertising channel. It can use ADV_EXT_IND packets and point to auxiliary advertising via time and frequency information. Its access address can use the primary advertising access address specified in the Bluetooth Core Specification: 0x8E89BED6;
Periodic Advertising: Auxiliary advertising can use AUX_ADV_IND packets and point to this periodic advertising via time, frequency hopping map, access address, etc. This periodic advertising can use AUX_SYNC_IND packets and include BIG information (BIGInfo); and
Broadcast Isochronous Stream (BIS): this refers to the BIS pointed to by periodic advertising via time, frequency hopping map, access address, and BIG information (BIGInfo). It can use BIS Protocol Data Unit (PDU) packets to broadcast digital audio.

FIG. 3 is a schematic diagram illustrating the relationship between extended advertising, periodic advertising, and BIS. It should be noted that Bluetooth operates in the 2.4GHz band, which ranges from 2402MHz to 2480MHz, with one channel every 2MHz, totaling 40 channels. 3 channels are primary advertising channels (channels 37, 38, and 39), and the remaining 37 channels are secondary advertising channels (channels 0 to 36). As shown in FIG. 3, the primary advertising channels can include channels 37, 38, and 39; the secondary advertising channels include channels 0 to 36. Extended advertising on the primary advertising channels uses ADV_EXT_IND packets and points to auxiliary advertising on the secondary advertising channels via time and frequency information. Subsequently, the auxiliary advertising can use AUX_ADV_IND packets to point to periodic advertising via time, frequency hopping map, and access address. Further, this periodic advertising can use AUX_SYNC_IND packets to point to the BIS via time, frequency hopping map, access address, and BIG information (BIGInfo). The BIS then uses BIS PDU packets to broadcast digital audio.

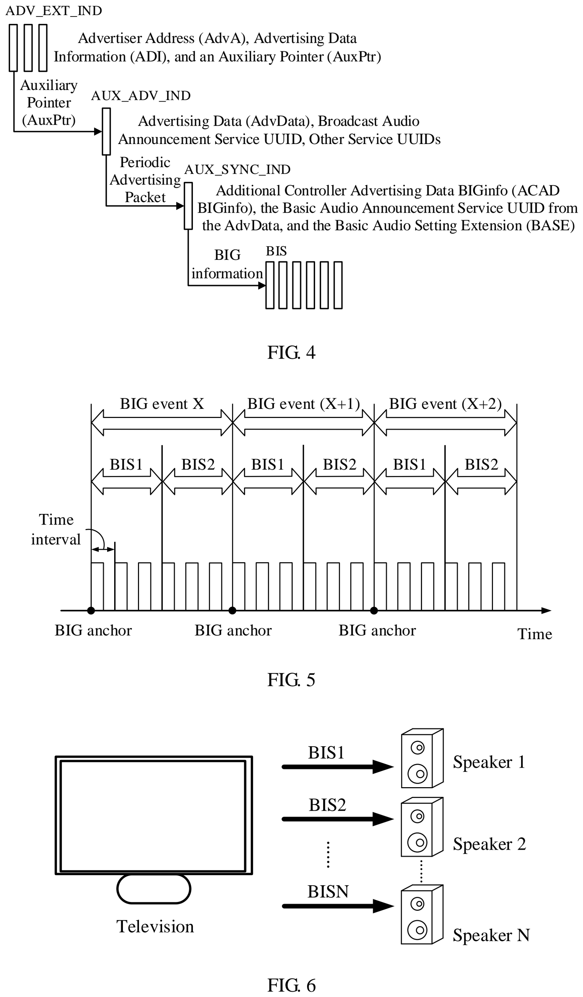

FIG. 4 is a schematic diagram illustrating the relationship between extended advertising packets, auxiliary advertising packets, periodic advertising packets, and BIS. As shown in FIG. 4, the audio sending device can transmit extended advertising packets (ADV_EXT_IND) on the primary advertising channels (37, 38, 39). The extended advertising packet can include: Advertiser Address (AdvA), Advertising Data Information (ADI), and an Auxiliary Pointer (AuxPtr). The AuxPtr indicates that auxiliary advertising will follow on the secondary advertising channels. The auxiliary advertising packet (AUX_ADV_IND) can include: Advertising Data (AdvData), Broadcast Audio Announcement Service UUID, Other Service UUIDs, and indicates the data channel and advertising period for the periodic advertising. The periodic advertising packet (AUX_SYNC_IND) can include: Additional Controller Advertising Data BIGinfo (ACAD BIGinfo), the Basic Audio Announcement Service UUID from the AdvData, and the Basic Audio Setting Extension (BASE). The periodic advertising packet can include all the information for the Broadcast Isochronous Stream (BIS). After receiving the periodic advertising packet, broadcast receivers can use the included data to receive BIS data on specific channels at specific time anchors, thereby obtaining the BIS audio stream.

In practical applications, while broadcasting digital audio via the BIS method, it can be implemented by continuously transmitting BIGs. Each transmission of a BIG can be referred to as a BIG event, and each BIG event can include a plurality of BISs.

FIG. 5 is a schematic diagram of continuously transmitting BIGs in the related art. As shown in FIG. 5, during the process of continuously transmitting BIGs, BIG events can be executed periodically and consecutively. The BIG anchors shown in FIG. 5 indicate the start time of each BIG event. The time interval between two anchors is the period for executing one BIG event. It should be noted that FIG. 5 uses an example of 3 BIG events, each containing 2 BISs. FIG. 5 can show the consecutive execution of BIG event X, BIG event (X+1), and BIG event (X+2), where each BIG event can include 2 BISs, shown as BIS1 and BIS2 in FIG. 5. During the execution of a BIG event, BISs are broadcast, and during the broadcasting of BIS, the BIS is broadcast at fixed time intervals.

The device control method in the embodiments can be implemented through a display apparatus and a plurality of audio receiving devices. The display apparatus may be a mobile phone, television, computer, etc. The audio receiving device may be a speaker, earphone, etc. The device control method provided in the embodiments of the disclosure can include the configuration of the BIS audio (BIS identifier) of the sound channels matching the audio receiving device. The configuration phase can be implemented through the display apparatus and/or a control terminal. The control terminal may be a mobile terminal, such as a mobile phone, tablet computer, remote control, wearable device, or any other device for implementing the configuration of the BIS identifier for the audio receiving devices. Wearable devices may include smart watches, smart bands, etc.

FIG. 6 is a schematic diagram of a first scenario of a device control method according to an embodiment of the disclosure. As shown in FIG. 6, the display apparatus is illustrated as a television, and the audio receiving devices are illustrated as N speakers. The scenario may include the television and the N speakers. The television pre-configures channel-matched BIS audio for different speakers, so that subsequently, during the process of broadcasting N BIS audio streams, each speaker can receive the audio data of N BIS streams based on a corresponding BIS identifier, and select the channel-matched BIS stream from the audio data of N BIS streams for playback. Herein, the sound channels corresponding to different BIS streams may be different. In some embodiments, N is greater than or equal to 1.

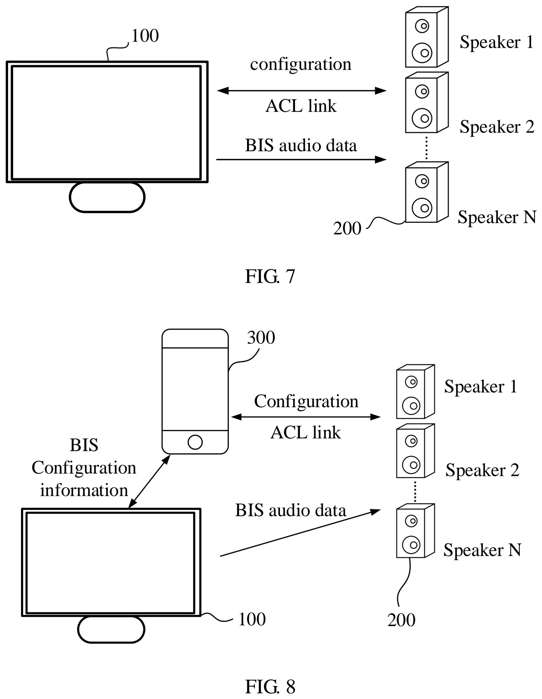

FIG. 7 is a schematic diagram of a second scenario of a device control method according to an embodiment of the disclosure. As shown in FIG. 7, the display apparatus 100 may perform sound channel configuration on a plurality of audio receiving devices 200 through an ACL link, and after the configuration is completed, transmit audio of a plurality of sound channels to the plurality of audio receiving devices 200 by broadcasting BIS streams. In FIG. 7, the plurality of audio receiving devices 200 are N speakers, denoted as speaker 1, speaker 2, ... speaker N, respectively.

The device control method provided by the disclosure may also be implemented by a display apparatus, a control terminal, and a plurality of audio receiving devices. Herein, the control terminal may be a mobile phone, a tablet computer, etc., and the control terminal is used for sound channel configuration of the audio receiving devices.

FIG. 8 is a schematic diagram of a third scenario of a device control method according to an embodiment of the disclosure. As shown in FIG. 8, the display apparatus 100 may establish a wireless connection with a mobile phone, and the display apparatus 100 may transmit BIS configuration information corresponding to target sound channel combination information to the control terminal 300. Thereafter, the control terminal 300 may, based on this configuration information, perform sound channel configuration on the plurality of audio receiving devices 200 through an ACL link; the display apparatus 100 may transmit audio of a plurality of channels to the plurality of audio receiving devices 200 by broadcasting BIS streams. In FIG. 8, the plurality of audio receiving devices 200 are N speakers, denoted as speaker 1, speaker 2, ... speaker N, respectively. Optionally, the BIS configuration information may include a corresponding relationship between audio receiving devices and BIS identifiers. After receiving the audio of the plurality of channels from the display apparatus, the plurality of audio receiving devices 200, for example, speaker 2, may receive the BIS audio data broadcast by the display apparatus 100 based on the corresponding BIS identifier.

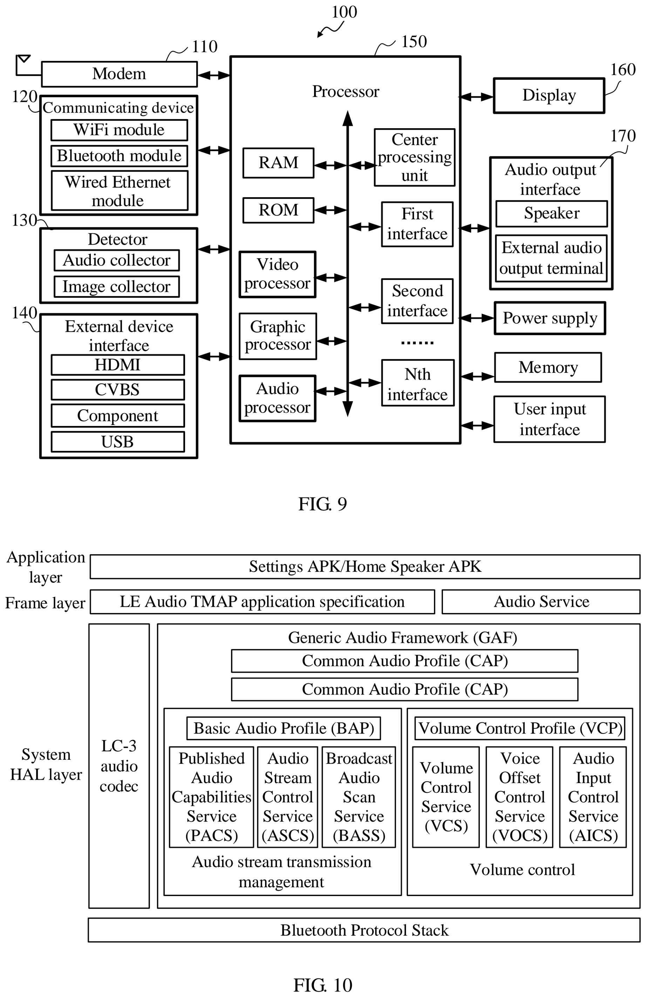

FIG. 9 is a block diagram of a hardware configuration of a display apparatus 100 according to some embodiments. As shown in FIG. 9, the display apparatus 100 can include: a modem 110, a communicating device 120, a detector 130, an external device interface 140, a processor 150, a display 160, an audio output interface 170, a memory, a power supply, etc. The processor 150 can include a central processing unit (CPU), a video processor, an audio processor, a graphics processing unit (GPU), Random Access Memory (RAM), Read-Only Memory (ROM), and first to nth interfaces for input/output. The display 160 can be at least one of a liquid crystal display, an OLED display, a touch display, or a projection display, and can also be a projection device and a projection screen. The modem 110 can receive broadcast television signals via wired or wireless means and demodulates audio and video signals, such as Electronic Program Guide (EPG) data signals, from multiple wireless or wired broadcast television signals. The detector 130 can be used to collect signals from the external environment or for interaction with the external environment. The processor 150 and the modem 110 can be located in different separate devices; that is, the modem 110 can also be in an external device of the main body device where the processor 150 is located, such as an external set-top box.

For the scenario illustrated in FIG. 7, when implementing the device control method provided by the embodiments of the disclosure, various components within the display apparatus 100 may perform the following functions.

In some embodiments, the at least one processor is further configured to execute computer instructions to cause the display apparatus to perform: in response to an instruction for selecting target sound channel combination information, initiating a broadcast corresponding to the target sound channel combination information; determining at least one audio receiving device, by scanning for audio receiving devices via a Bluetooth module and/or based on connected audio receiving devices in a device manager; determining Broadcast Isochronous Stream (BIS) configuration information corresponding to the target sound channel combination information based on azimuth information of a target audio receiving device from the at least one audio receiving device and an azimuth information list corresponding to the target sound channel combination information, thereby implementing configuration of BIS information corresponding to the target sound channel combination information; here, as the BIS configuration information may include a corresponding relationship between the target audio receiving device and a BIS identifier, the plurality of audio receiving devices, after receiving the BIS audio of the plurality of sound channels sent from the display apparatus, can receive the BIS audio data broadcast by the display apparatus based on the corresponding BIS identifier, thereby achieving the function of receiving BIS audio data corresponding to a specified sound channel.

In some embodiments, the at least one processor is further configured to execute computer instructions to cause the display apparatus to perform: before initiating the broadcast corresponding to the target sound channel combination information in response to the instruction for selecting the target sound channel combination information, determining whether the Bluetooth module has a Broadcast Media Sender (BMS); based on determining that the Bluetooth module has a BMS, displaying a page for Bluetooth surround sound configuration; where the page for Bluetooth surround sound configuration is provided with a switch for Bluetooth surround sound setting; and when the switch for Bluetooth surround sound setting is in an enabled state, initiating the broadcast corresponding to the target sound channel combination information in response to the instruction for selecting the target sound channel combination information.

In some embodiments, the at least one processor is further configured to execute computer instructions to cause the display apparatus to perform: before displaying the page for Bluetooth surround sound configuration, based on determining that the Bluetooth module does not have a BMS, determining whether the Bluetooth module is in a Bluetooth audio broadcast state; based on determining that the Bluetooth module is in the Bluetooth audio broadcast state, controlling the Bluetooth module to cease the Bluetooth broadcast.

In some embodiments, the at least one processor is further configured to execute computer instructions to cause the display apparatus to perform: in response to the instruction for selecting the target sound channel combination information, while initiating the broadcast corresponding to the target sound channel combination information, determining whether the target sound channel combination information is consistent with currently set sound channel combination information; based on determining that the target sound channel combination information is inconsistent with the currently set sound channel combination information, switching sound channels based on the target sound channel combination information and initiating the broadcast corresponding to the target sound channel combination information.

In some embodiments, the at least one processor is further configured to execute computer instructions to cause the display apparatus to perform: while determining the BIS configuration information corresponding to the target sound channel combination information, in response to an instruction for selecting a first target audio receiving device among the at least one audio receiving device, determining whether the first target audio receiving device and the display apparatus are in a Bluetooth Low Energy Audio (LE Audio) connection state; based on determining that the first target audio receiving device and the display apparatus are in the Bluetooth LE Audio connection state, establishing a BSA connection with the first target audio receiving device, and obtaining azimuth information of the first target audio receiving device based on the BSA connection; determining the BIS configuration information corresponding to the target sound channel combination information based on the azimuth information of the first target audio receiving device and the azimuth information list corresponding to the target sound channel combination information, thereby implementing configuration of the BIS information corresponding to the target sound channel combination information.

In some embodiments, the at least one processor is further configured to execute computer instructions to cause the display apparatus to perform, while determining the BIS configuration information corresponding to the target sound channel combination information based on the azimuth information of the first target audio receiving device and the azimuth information list corresponding to the target sound channel combination information, displaying the azimuth information list corresponding to the target sound channel combination information, and marking azimuth information supported by the first target audio receiving device in the azimuth information list; determining a BIS identifier corresponding to the first target audio receiving device based on the azimuth information list corresponding to the target sound channel combination information; determining the BIS configuration information corresponding to the target sound channel combination information based on the BIS identifier corresponding to the first target audio receiving device, thereby implementing configuration of the BIS information corresponding to the target sound channel combination information.

In some embodiments, the at least one processor is further configured to execute computer instructions to cause the display apparatus to perform: based on determining that the first target audio receiving device and the display apparatus are not in the Bluetooth LE Audio connection state, controlling the Bluetooth module to initiate an LE Audio pairing connection to the first target audio receiving device; and continuing to execute the step of establishing the BSA connection with the first target audio receiving device upon determining that the first target audio receiving device and the display apparatus are in the LE Audio connection state.

In some embodiments, the at least one processor is further configured to execute computer instructions to cause the display apparatus to perform: determining whether the BIS configuration information corresponding to the target sound channel combination information is consistent with current BIS configuration information; based on determining that the BIS configuration information corresponding to the target sound channel combination information is inconsistent with the current BIS configuration information, controlling the Bluetooth module to stop audio data synchronization based on the current BIS configuration information, and initiating audio data synchronization based on the BIS configuration information corresponding to the target sound channel combination information.

In some embodiments, the at least one processor is further configured to execute computer instructions to cause the display apparatus to perform, while initiating the broadcast corresponding to the target sound channel combination information, in response to the instruction for selecting the target sound channel combination information, determining whether the target sound channel combination information is consistent with current sound channel configuration information; based on determining that the target sound channel combination information is inconsistent with the current sound channel configuration information, re-establishing an audio channel between an audio HAL (Hardware Abstraction Layer) and a Bluetooth protocol stack LE Audio HAL based on the target sound channel combination information, and initiating the broadcast corresponding to the target sound channel combination information based on the audio channel.

FIG. 10 is a schematic diagram of a software system architecture of a display apparatus 100 according to some embodiments. As shown in FIG. 10, the software system may include: an Applications layer, an Application Framework layer (referred to as the "Framework layer"), a Hardware Abstraction Layer (HAL), and a Bluetooth protocol stack.

The Applications layer may include: a Settings application package (Android application package, APK) corresponding to a settings application, or a Home Speaker APK corresponding to a home speaker application. Both the Settings APK and the Home Speaker APK can be used to configure audio receiving devices, broadcast BIS streams, configure BIS identifiers corresponding to various audio receiving devices, and synchronize BIS streams as described in the embodiments of the disclosure.

The Application Framework layer may include: the LE Audio TMAP application specification and an Audio Service. The LE Audio TMAP is a technical specification for devices supporting LE Audio to implement globally universal various call and media applications. In the embodiments of the disclosure, the technical specifications for media applications within LE Audio TMAP can be used to configure audio receiving devices, broadcast BIS streams, and invoke the Broadcast Assistant Function (BASS, also known as Broadcast Audio Scan Service). The Audio Service can be responsible for receiving sound channel information configured by application(s). After the audio decoder (Decoder) can obtain the audio data by decoding, it can send the audio data to the Bluetooth communication module according to the configured sound channel information. The Bluetooth communication module then can broadcast the audio data, i.e., the BIS.

The System HAL layer may include the LC-3 audio codec, which is a low-complexity communication codec. In the embodiments of the disclosure, audio data transmitted into the Bluetooth protocol stack needs to be encoded by the LC-3 audio codec. The System HAL layer may also include the Generic Audio Framework (GAF). GAF may further include the Common Audio Profile (CAP), the Common Audio Service (CAS), audio stream transmission management, and volume control. The audio stream transmission management may include the Basic Audio Profile (BAP), the Published Audio Capabilities Service (PACS), the Audio Stream Control Service (ASCS), and the Broadcast Audio Scan Service (BASS). BASS is required for broadcast synchronization in the embodiments of the disclosure. Volume control may include: the Volume Control Profile (VCP), the Volume Control Service (VCS), the Voice Offset Control Service (VOCS), and the Audio Input Control Service (AICS). In some embodiments, when the display apparatus controls the volume of itself and the volume of a plurality of audio receiving devices, it can be implemented through services involved in the volume control.

The Bluetooth protocol stack can be responsible for scanning, connecting with, and configuring audio receiving devices, as well as configuring broadcasts and encoding audio.

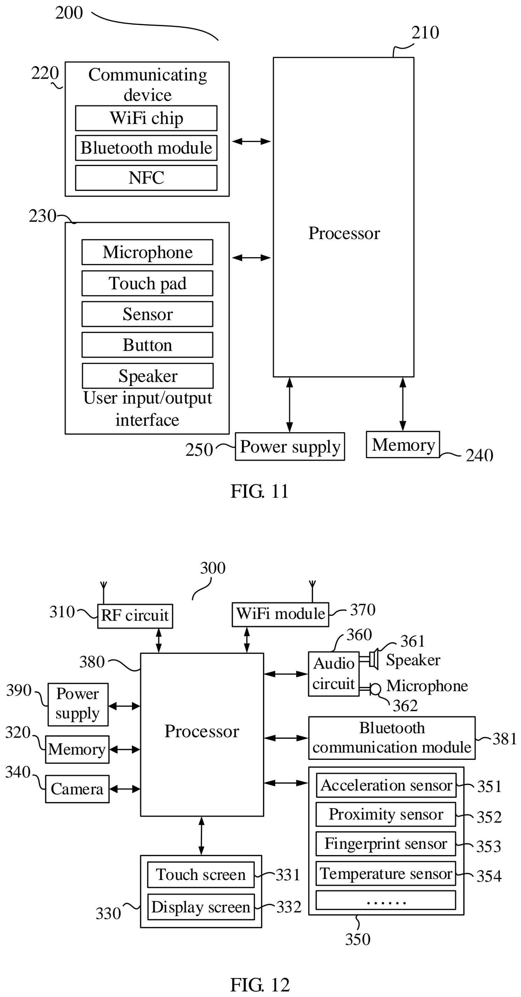

FIG. 11 is a block diagram of a hardware configuration of a scanned device 200 (i.e., an audio receiving device 200) according to some embodiments. As shown in FIG. 11, the audio receiving device 200 may include: a processor 210, a communicating device 220, a user input/output interface 230, a memory 240, and a power supply 250. The communicating device 220 is used for external communication and can include at least one of a Wi-Fi chip, a Bluetooth communication module, NFC, or a substitutable module. The user input/output interface 230 can include at least one of a speaker, a microphone, a touchpad, a sensor, a button, or a substitutable module.

For the scenario illustrated in FIG. 7, when implementing the device control method provided by the embodiments of the disclosure, various components within the audio receiving device 200 may perform the following functions.

In some embodiments, the processor 210 is configured to: control the Bluetooth module to establish an ACL link with the display apparatus; receive, via the ACL link, Broadcast Isochronous Stream (BIS) configuration information determined by the display apparatus; where the BIS configuration information may include a corresponding relationship between the target audio receiving device and a BIS identifier; after controlling the Bluetooth module to receive a plurality of BIS streams broadcast by the display apparatus, determine audio data in the corresponding BIS stream from the plurality of BIS audio streams based on the BIS identifier corresponding to the target audio receiving device; control the audio output interface to play the audio data in the corresponding BIS stream.

The aforementioned audio receiving device receives the BIS configuration information through the ACL link established with the display apparatus, so that the display apparatus can control the audio receiving device to perform the BIS identifier configuration. Subsequently, the audio receiving device determines the BIS audio data corresponding to the BIS identifier from the plurality of BIS streams based on the corresponding BIS identifier, and further the audio output interface is controlled for playback. This achieves a multi-channel stereo effect with multiple audio receiving devices.

FIG. 12 is a hardware configuration block diagram of a control terminal 300 according to an embodiment of the disclosure. It should be understood that the control terminal 300 shown in FIG. 12 is merely an example, and the control terminal 300 may have more or fewer components than those shown in FIG. 12, may combine two or more components, or may have different component configurations. The various components shown in FIG. 12 can be implemented in hardware, software, or a combination of hardware and software, including one or more signal processing and/or application-specific integrated circuits.

As shown in FIG. 12, the control terminal 300 may include: a Radio Frequency (RF) circuit 310, a memory 320, a display unit 330, a camera 340, a sensor 350, an audio circuit 360, a Wireless Fidelity (Wi-Fi) module 370, a processor 380, a Bluetooth module 381, and a power supply 390, among other components.

The RF circuit 310 can be used for receiving and transmitting signals during information reception/transmission or calls; it can receive downlink data from a base station and deliver it to the processor 380 for processing; it can also transmit uplink data to the base station. The memory 320 can be used for storing software programs and data. The memory 320 stores an operating system that enables the control terminal 300 to operate. In the disclosure, the memory 320 can store the operating system and various applications, and can also store program code for executing the device control method implemented based on the control terminal in some embodiments of the disclosure.

The display unit 330 can be used for receiving input digital or character information, generating signal inputs related to user settings and function control of the control terminal 300. Specifically, the display unit 330 may include a touch screen 331 disposed on the front of the control terminal 300, which can collect touch operations by a user on or near it, such as clicking a button.

The display unit 330 can be used for displaying information input from the user or information provided to the user, and various menus of the Graphical User Interface (GUI) of the control terminal 300. The display unit 330 may include a display screen 332 disposed on the front of the control terminal 300. The touch screen 331 may cover the display screen 332, or the touch screen 331 and the display screen 332 may be integrated to implement the input and output functions of the control terminal 300. After integration, it may be simply referred to as a touch display screen. The control terminal 300 may include at least one type of sensor 350, such as an acceleration sensor 351, a distance sensor 352, a fingerprint sensor 353, and a temperature sensor 354.

The audio circuit 360, a speaker 361, and a microphone 362 can provide an audio interface between the user and the control terminal 300. Wi-Fi is a short-range wireless transmission technology. The control terminal 300 can use the Wi-Fi module 370 to help users send and receive emails, browse web pages, and access streaming media, etc., providing users with wireless broadband Internet access.

The processor 380 is the control center of the control terminal 300, connecting various parts of the entire control terminal through various interfaces and lines. By running or executing software programs stored in the memory 320 and invoking data stored in the memory 320, the processor 380 performs various functions of the control terminal 300 and processes data. In some embodiments, the processor 380 may include one or more processing units; the processor 380 may also integrate an application processor and a baseband processor, wherein the application processor mainly handles the operating system, user interface, and applications, etc., and the baseband processor mainly handles wireless communication. It can be understood that the aforementioned baseband processor may also not be integrated into the processor 380. In the disclosure, the processor 380 can run the operating system, applications, user interface display and touch response, and the configuration method for multiple audio receiving devices executed by the control terminal in some embodiments of the disclosure. Additionally, the processor 380 is coupled to the display unit 330.

The Bluetooth module 381 is used for information interaction with other Bluetooth devices having a Bluetooth module via the Bluetooth protocol. For example, the control terminal 300 can establish a Bluetooth connection, through the Bluetooth module 381, with a display apparatus also equipped with a Bluetooth module, thereby enabling data interaction. In some embodiments, the control terminal 300 can establish an ACL link, through the Bluetooth module 381, with a display apparatus also equipped with a Bluetooth module to receive BIS configuration information sent from the display apparatus. The control terminal 300 may also include a power supply 390 (such as a battery) for supplying power to various components.

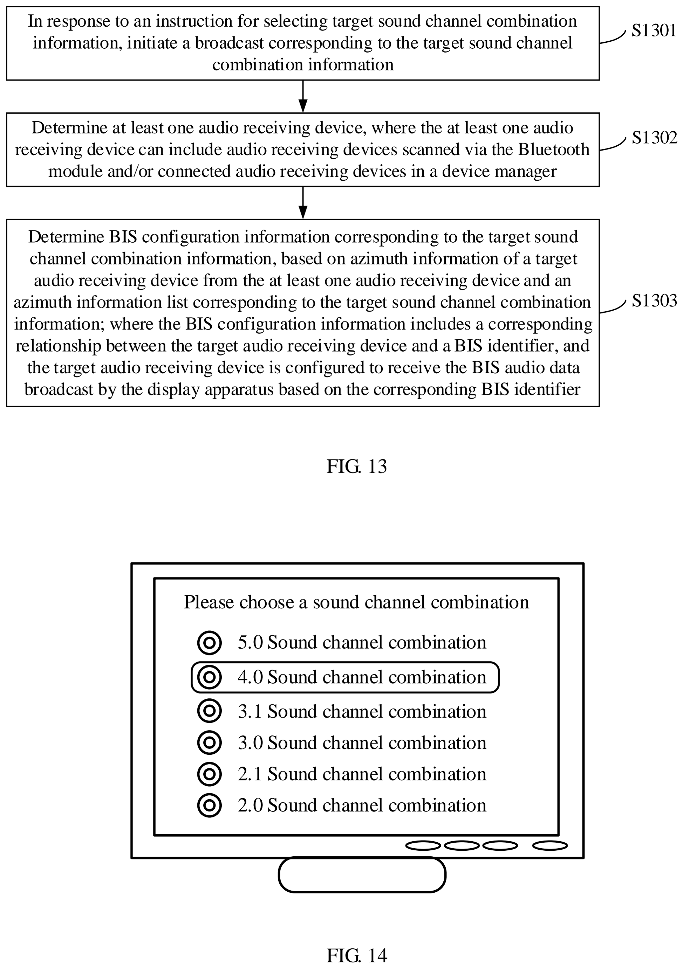

FIG. 13 is a first schematic flow diagram of a device control method according to an embodiment of the disclosure. As shown in FIG. 13, the method is implemented through interaction between a display apparatus and at least one audio receiving device. The target audio receiving device involved in the following steps S1301-S1303 may refer to any audio receiving device among the at least one audio receiving device. The method may include but is not limited to the following steps S1301-S1303.

S1301: in response to an instruction for selecting target sound channel combination information, initiate a broadcast corresponding to the target sound channel combination information.

In some embodiments, the sound channel combination information may be information about a combination of one or more sound channels. Sound channel combinations for two channels may include a 2.0 sound channel combination. Sound channel combinations for three channels may include2.1 and 3.0 sound channel combinations. Sound channel combinations for four channels may include 3.1, 2.2, and 4.0 sound channel combinations. Sound channel combination for five channels may include a 5.0 sound channel combination. Sound channel combinations for six channels may include a 5.1 sound channel combination.

In some embodiments, a plurality of sound channel combinations, such as 2.0, 2.1, 2.2, 3.0, 3.1, 4.0, 5.0, 5.1, etc., may be displayed on a page for sound channel configuration. The target sound channel combination can be any one of the aforementioned sound channel combinations.

As shown in FIG. 14, which is a first schematic diagram of a sound channel combination selection interface according to an embodiment of the disclosure, this interface for sound channel combination selection may include information on six combination methods: 2.0 sound channel combination information including Front Left channel and Front Right channel; 2.1 sound channel combination information including Front Left, Front Right, and Low Frequency Effect (LFE) channels; 3.0 sound channel combination information including Front Left, Front Right, and Center channels; 3.1 sound channel combination information including Front Left, Front Right, Center, and LFE channels; 4.0 sound channel combination including Front Left, Front Right, Left Rear Surround, and Right Rear Surround channels; and 5.0 sound channel combination information including Front Left, Front Right, Left Surround, Right Surround, and Center channels.

In some embodiments, the display apparatus may, in response to an instruction for selecting the target sound channel combination information, initiate the broadcast corresponding to the target sound channel combination information. As shown in FIG. 14, the display apparatus, in response to an instruction for selecting the 4.0 sound channel combination information, can initiate the broadcast corresponding to the 4.0 sound channel combination information.

In practical applications, there may be cases where a user wants to change the already set sound channel combination information. Therefore, in response to the instruction for selecting the target sound channel combination information, it is first determined whether the target sound channel combination information selected by the user is consistent with the currently set sound channel combination information. Based on determining that the target sound channel combination information is inconsistent with the currently set sound channel combination information, the currently set sound channel combination information is switched to the target sound channel combination information, and the broadcast corresponding to the target sound channel combination information is initiated.

Assume that the interface for sound channel combination selection displays 2.0, 2.1, 2.2, 3.0, 3.1, and 4.0 sound channel combinations, where the 4.0 sound channel combination is the user's currently set sound channel combination information. In response to an instruction for selecting the 3.0 sound channel combination information, it is determined whether the 3.0 sound channel combination information is consistent with the currently set sound channel combination information (i.e., the 4.0 sound channel combination). In this case, the two are not the same, indicating that the user wants to modify the previous sound channel combination information. At this time, the 4.0 sound channel combination is switched from a selected state to an unselected state, and the 3.0 sound channel combination is switched from an unselected state to a selected state, and the broadcast corresponding to the 3.0 sound channel combination information is initiated.

In practical applications, in the case of setting the sound channel combination information for the first time, in response to the instruction for selecting the target sound channel combination information, the quantity of sound channels for the target sound channel combination information is first set, and the sound channel configuration information corresponding to various sound channel combination information, such as the left channel, right channel, etc., is obtained. Then, based on the set quantity of sound channels, buffers for the audio and the Bluetooth protocol stack are allocated, where the quantity of buffers for the Bluetooth protocol stack can be determined based on the set quantity of sound channels. Further, an audio channel between the audio HAL and the Bluetooth protocol stack LE Audio HAL is established, and the broadcast corresponding to the target sound channel combination information is initiated based on this audio channel.

In some embodiments, the method for establishing the audio channel between the audio HAL and the Bluetooth protocol stack LE Audio HAL may include: establishing an audio channel between the audio HAL and the Bluetooth protocol stack LE Audio HAL, and sending audio data to the audio HAL of the Bluetooth protocol stack based on this audio channel; alternatively, establishing the same quantity of audio channels as the quantity of sound channels in the target sound channel combination information, and sending the audio data to the audio HAL of the Bluetooth protocol stack based on different audio channels, to initiate the broadcast corresponding to the target sound channel combination information.

In the case of non-first-time setting of the sound channel combination information, in response to the instruction for selecting the target sound channel combination information, it is first determined whether the target sound channel combination information is consistent with the current sound channel combination information. Based on determining that the target sound channel combination information is inconsistent with the current sound channel combination information, the audio channel between the audio HAL and the Bluetooth protocol stack LE Audio HAL is re-established based on the target sound channel combination information, and the broadcast corresponding to the target sound channel combination information is initiated based on this audio channel.

S1302: determine at least one audio receiving device.

Here the at least one audio receiving device can include audio receiving devices scanned via the Bluetooth module and/or connected audio receiving devices in a device manager.

In some embodiments, the display apparatus may scan for nearby audio receiving devices via the Bluetooth module while currently playing audio media resources to determine the at least one audio receiving device. The display apparatus may scan for nearby audio receiving devices via the Bluetooth module when not playing audio media resources to determine the at least one audio receiving device.

In some embodiments, the display apparatus may determine the connected audio receiving devices in the device manager as the aforementioned at least one audio receiving device.

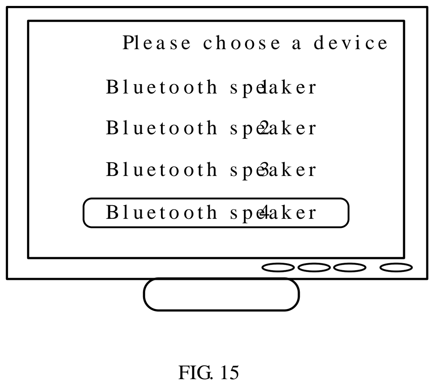

FIG. 15 is a schematic diagram of a configuration interface for an audio receiving device according to an embodiment of the disclosure. After selecting the 4.0 sound channel combination information in the interface for sound channel combination selection shown in FIG. 14, the display apparatus can be triggered to perform Bluetooth scanning, and the scanned Bluetooth devices and/or connected Bluetooth devices in the device manager are determined as available Bluetooth speakers (i.e., the at least one audio receiving device). Further, after determining the at least one audio receiving device, the interface shown in FIG. 15 can be displayed. This interface can display device identifiers corresponding to the available Bluetooth speakers, which are respectively: "Bluetooth Speaker 1", "Bluetooth Speaker 2", "Bluetooth Speaker 3", and "Bluetooth Speaker 4".

After selecting the device identifier corresponding to "Bluetooth Speaker 4" in FIG. 15, the azimuth information of "Bluetooth Speaker 4" is obtained. The specific acquisition method will be introduced in subsequent embodiments and is not detailed here.

S1303: determine Broadcast Isochronous Stream (BIS) configuration information corresponding to the target sound channel combination information, based on azimuth information of a target audio receiving device from the at least one audio receiving device and an azimuth information list corresponding to the target sound channel combination information.

Here the BIS configuration information includes a corresponding relationship between the target audio receiving device and a BIS identifier, and the target audio receiving device is configured to receive the BIS audio data broadcast by the display apparatus based on the corresponding BIS identifier.

In some embodiments, the azimuth information of the audio receiving device can be used to indicate the placement position of the audio receiving device. For example, a center channel speaker is generally placed near the center of the display screen, a front left channel speaker is generally placed to the left front of the center channel speaker (or the display screen), and so on.

In some embodiments, the azimuth information list corresponding to the sound channel combination information can be used to indicate the quantity and positions of sound channels corresponding to this sound channel combination information. For example, 2.0 channels indicate Front Left and Front Right channels. A 2.0 sound channel combination includes Front Left and Front Right channels; a 2.1 sound channel combination includes Front Left, Front Right, and LFE channels; a 3.0 sound channel combination includes Front Left, Front Right, and Center channels; a 3.1 sound channel combination includes Front Left, Front Right, Center, and LFE channels; a 2.2 channel combination includes Front Left, Front Right, and two LFE channels; a 4.0 sound channel combination includes Front Left, Front Right, Left Rear Surround, and Right Rear Surround channels; a 5.0 sound channel combination includes Front Left, Front Right, Left Rear Surround, Right Rear Surround, and Center channels; a 5.1 sound channel combination includes Front Left, Front Right, Left Rear Surround, Right Rear Surround, Center, and LFE channels, and may also include height channels, etc.

In some embodiments, the target audio receiving device can be any one or more audio receiving devices among the at least one audio receiving device. After determining the target audio receiving device, the azimuth information of the target audio receiving device is first obtained. Then, based on a matching result between the azimuth information of the target audio receiving device and the azimuth information list corresponding to the target sound channel combination information, the BIS configuration information corresponding to the target sound channel combination information is determined.

As shown in FIG. 14, the display apparatus, in response to the instruction for selecting the 4.0 sound channel combination information, initiates the broadcast for the 4.0 sound channel combination information and determines the at least one audio receiving device. During the process of displaying the at least one audio receiving device on the interface shown in FIG. 15, the display apparatus, in response to an instruction for selecting Bluetooth Speaker 4, determines Bluetooth Speaker 4 as the target audio receiving device, and then acquires the azimuth information of Bluetooth Speaker 4, for example, Front Left channel. Then, based on the Front Left channel corresponding to Bluetooth Speaker 4 and the azimuth information list (Front Left, Front Right, Left Rear Surround, Right Rear Surround) corresponding to the 4.0 sound channel combination information, the BIS configuration information corresponding to the 4.0 sound channel combination information can be determined.

In some embodiments, after initially configuring the BIS configuration information corresponding to the target sound channel combination information, audio data synchronization can be directly initiated based on the BIS configuration information corresponding to the target sound channel combination information configured this time.

In practical applications, before configuring the BIS configuration information corresponding to the target sound channel combination information this time, there may be a situation where BIS configuration information has already been set (i.e., in a non-initial configuration case). At this time, it is necessary to control the Bluetooth module to stop the audio data synchronization based on the current BIS configuration information, and initiate audio data synchronization based on the BIS configuration information corresponding to the target sound channel combination information reconfigured this time, i.e., re-push the BIS configuration information corresponding to the target sound channel combination information.

Specifically, after determining the BIS configuration information corresponding to the target sound channel combination information, it is first necessary to determine whether the BIS configuration information corresponding to the target sound channel combination information is consistent with the current BIS configuration information. Further, based on determining that the BIS configuration information corresponding to the target sound channel combination information is inconsistent with the current BIS configuration information, the Bluetooth module is controlled to stop the audio data synchronization based on the current BIS configuration information, and audio data synchronization is initiated based on the BIS configuration information corresponding to the target sound channel combination information.

Assume that the user has previously configured the BIS configuration information corresponding to the 4.0 sound channel combination information. During this configuration, if the user wants to reconfigure the BIS configuration information corresponding to the 4.0 sound channel combination information, or configure the BIS configuration information corresponding to another channel combination information, for example, the 3.0 sound channel combination information (i.e., the BIS configuration information corresponding to the target sound channel combination information is inconsistent with the current BIS configuration information), then the Bluetooth module is controlled to stop the audio data synchronization based on the already configured 4.0 sound channel combination information, and the audio data synchronization corresponding to the 3.0 sound channel combination information is initiated (or the audio data synchronization corresponding to the reconfigured 4.0 sound channel combination information is initiated).

In some embodiments, based on determining that the BIS configuration information corresponding to the target sound channel combination information is consistent with the current BIS configuration information, then there is no need to reset the BIS configuration information or push the BIS information.

In the device control method provided by this embodiment of the disclosure, first, in response to an instruction for selecting target sound channel combination information, a broadcast corresponding to the target sound channel combination information is initiated. Then, at least one audio receiving device is determined by scanning via the Bluetooth module and/or based on connected audio receiving devices in a device manager. Further, based on the azimuth information of a target audio receiving device from the at least one audio receiving device and the azimuth information list corresponding to the target sound channel combination information, the BIS configuration information corresponding to the target sound channel combination information is determined, thereby realizing the sound channel configuration function.

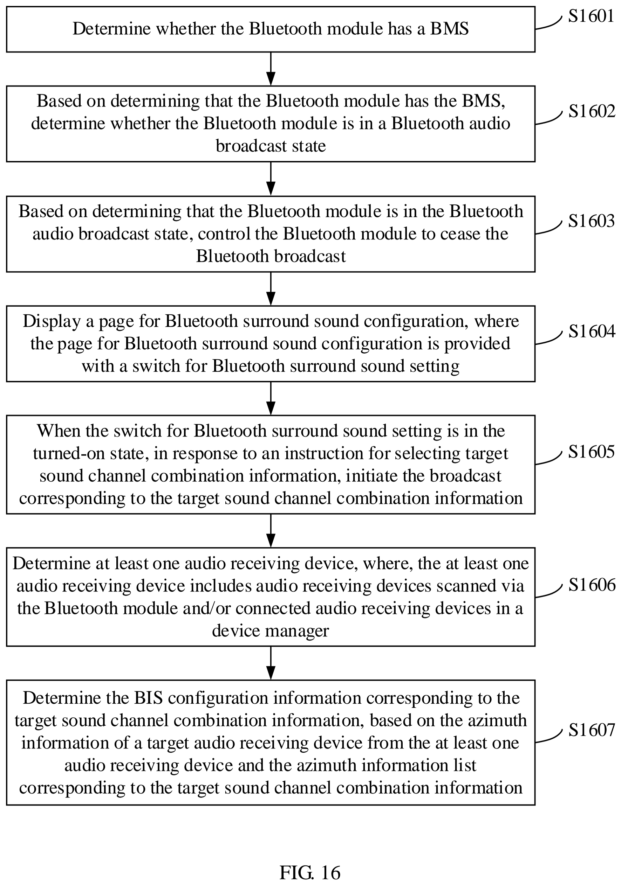

FIG. 16 is a second schematic flow diagram of a device control method according to an embodiment of the disclosure, the method includes the following steps S1601-S1605.

S1601: determine whether the Bluetooth module has a Broadcast Media Sender (BMS).

In broadcast media audio, two roles are defined: a Broadcast Media Sender (BMS) and a Broadcast Media Receiver (BMR). Broadcast media audio transmission between a BMS and a BMR is achieved through Broadcast Isochronous Streams (BIS). A Bluetooth module deployed with a BMS can transmit broadcast media audio to a Bluetooth module deployed with a BMR based on BIS.

S1602: based on determining that the Bluetooth module has the BMS, determine whether the Bluetooth module is in a Bluetooth audio broadcast state.

In some embodiments, a Bluetooth module in a Bluetooth audio broadcast state may include a Bluetooth module that is currently broadcasting media audio externally.

In some embodiments, based on determining that the Bluetooth module has a Broadcast Media Sender (BMS), a page for Bluetooth surround sound configuration is displayed; where the page for Bluetooth surround sound configuration is provided with a switch for Bluetooth surround sound setting.

S1603: based on determining that the Bluetooth module is in the Bluetooth audio broadcast state, control the Bluetooth module to cease the Bluetooth broadcast.

Since the device control method provided by the embodiments of the disclosure is implemented based on broadcast audio, it is also necessary to determine that the Bluetooth broadcast is in a ceased state before performing sound channel configuration. Specifically, based on determining that the Bluetooth module of the display apparatus is currently broadcasting media audio externally, the Bluetooth module is controlled to cease the Bluetooth broadcast to facilitate subsequent configuration steps.

In some embodiments, controlling the Bluetooth module to cease the Bluetooth broadcast may include: first determining whether the at least one audio receiving device and the display apparatus are in a BSA connection state; based on determining that the at least one audio receiving device and the display apparatus are in a BSA connection state, then establishing a Generic Attribute Profile (GATT) channel with each audio receiving device based on the BSA connection; then sending an instruction to cease the Bluetooth broadcast to each audio receiving device via the GATT channel; upon receiving a response message to the cease Bluetooth broadcast command from each audio receiving device, controlling the Bluetooth module to stop sending BIS audio data to the Bluetooth protocol stack.

Further, after disconnecting the audio channel between the audio HAL and the Bluetooth protocol stack LE Audio HAL, sending a mode switch instruction to the Bluetooth protocol stack to switch the Bluetooth protocol stack from the Broadcast Media Sender (BMS) mode to the Unicast Media Sender (UMS) mode. Then, determining whether the display apparatus and an audio receiving device are in an LE Audio connection state or a classic Bluetooth connection state. Based on that the display apparatus and the audio receiving device are in an LE Audio connection state, switching the current Bluetooth audio connection to the LE Audio connection.

In some embodiments, based on determining that the current audio receiving device and the display apparatus are not in an LE Audio connection state, then audio data is output through the local speaker of the display apparatus or other audio channels.

S1604: display a page for Bluetooth surround sound configuration.

Here, the page for Bluetooth surround sound configuration is provided with a switch for Bluetooth surround sound setting.

In some implementations, it is first determined whether the Bluetooth module of the display apparatus has a BMS. Based on determining that the Bluetooth module has a BMS, it is further determined whether the Bluetooth module is currently broadcasting media audio externally. Based on determining that the Bluetooth module is currently broadcasting media audio externally, the Bluetooth module is controlled to cease the Bluetooth broadcast, and then the page for Bluetooth surround sound configuration can be displayed on the display apparatus.

In some implementations, based on determining that the Bluetooth module of the display apparatus has a BMS and the Bluetooth broadcast of the Bluetooth module is in a ceased state, the page for Bluetooth surround sound configuration can be displayed on the display apparatus.

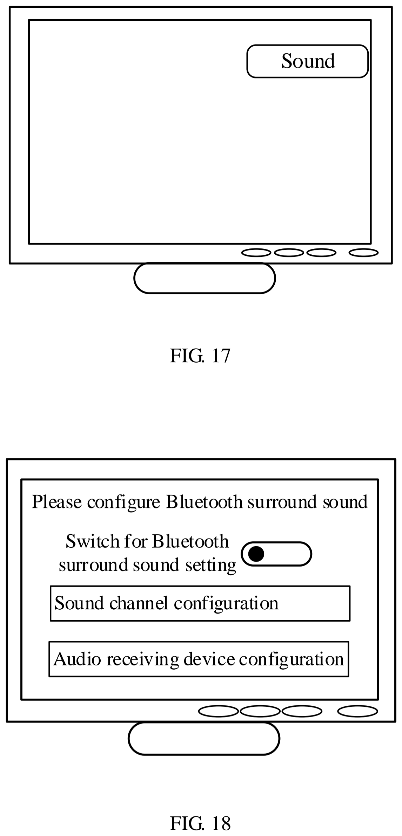

In some embodiments, determining whether the Bluetooth module has a BMS and determining whether the Bluetooth module is in a Bluetooth audio broadcast state can be triggered upon receiving a selection on a sound option from the user. As shown in FIG. 17, which is a schematic diagram of a sound options interface of a display apparatus according to an embodiment of the disclosure, where the display apparatus is a television, and an option identifier for a sound option is displayed on the screen of the television.

Upon receiving a selection on the option identifier 171 from the user, it is first determined whether the Bluetooth module of the display apparatus has a BMS. Based on determining that the Bluetooth module has a BMS, it is determined whether the Bluetooth module is currently broadcasting media audio externally. Based on determining that the Bluetooth module is currently broadcasting media audio externally, the Bluetooth module is controlled to cease the Bluetooth broadcast, and the page for Bluetooth surround sound configuration can be displayed on the display apparatus.

The page for Bluetooth surround sound configuration displays a switch for Bluetooth surround sound setting, which can include a turned-on state and a turned-off state. It should be noted that since step S1603 has already determined that the Bluetooth broadcast of the Bluetooth module is in a ceased state, when the page for Bluetooth surround sound configuration is displayed for the first time, the switch for Bluetooth surround sound setting displayed on this page defaults to the turned-off state. As shown in FIG. 18, which is a first schematic diagram of a Bluetooth surround sound configuration page according to an embodiment of the disclosure, the switch for Bluetooth surround sound setting displayed on this Bluetooth surround sound configuration page is in the turned-off state.

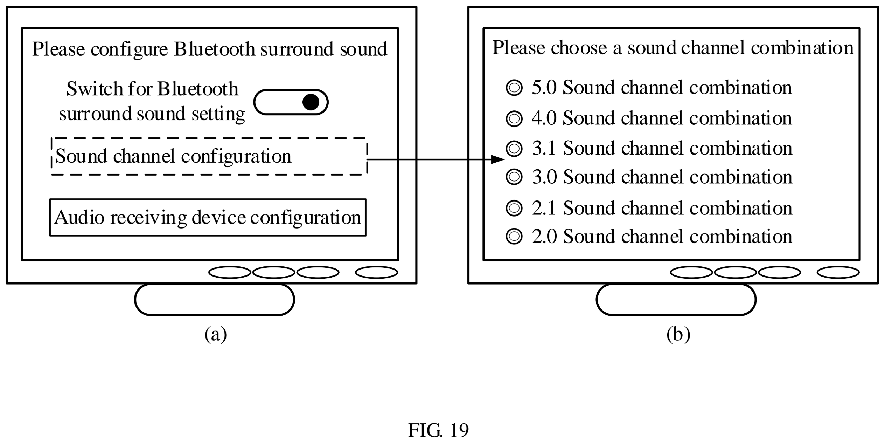

In some embodiments, when the page for Bluetooth surround sound configuration is displayed for the first time, since the switch for Bluetooth surround sound setting is in the turned-off state, the "Sound channel configuration" option is in a state that cannot be set, and the user cannot configure the sound channel combination information at this time. If the user wants to configure the sound channel combination information, the switch for Bluetooth surround sound setting needs to be turned on. Specifically, upon receiving a turn-on operation for the switch for Bluetooth surround sound setting from the user, the switch for Bluetooth surround sound setting is controlled to switch from the turned-off state to the turned-on state. At this time, the "Sound channel configuration" option becomes configurable, allowing the user to configure the sound channel combination information. As shown in FIG. 19, which is a second schematic diagram of a Bluetooth surround sound configuration page according to an embodiment of the disclosure, the switch for Bluetooth surround sound setting displayed on this Bluetooth surround sound configuration page is in the turned-on state.

When the switch for Bluetooth surround sound setting is in the turned-on state, upon receiving a selection on the "Sound channel Configuration" option in FIG. 19 (a), the interface skips to the interface for sound channel combination selection shown in FIG. 19 (b), where the interface for sound channel combination selection displays various sound channel combination information. Further, in response to an instruction for selecting target sound channel combination information, the step of initiating the broadcast corresponding to the target sound channel combination information is executed.

S1605: when the switch for Bluetooth surround sound setting is in the turned-on state, in response to an instruction for selecting target sound channel combination information, initiate the broadcast corresponding to the target sound channel combination information.

In some embodiments, when the switch for Bluetooth surround sound setting on the page for Bluetooth surround sound configuration is in the turned-on state, and upon receiving a trigger operation for the "Sound channel Configuration" option from the user, the interface skips from the page for Bluetooth surround sound configuration to the interface for sound channel combination selection, where the page for the sound channel combination selection displays various sound channel combination information, as shown in FIG. 14. In response to an instruction for selecting target sound channel combination information, the broadcast corresponding to the target sound channel combination information is initiated.

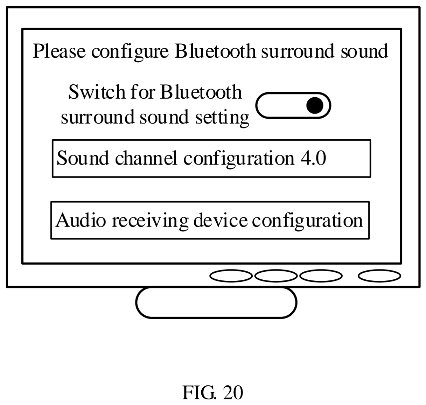

In some embodiments, when the switch for Bluetooth surround sound setting is in the turned-on state and the selection on the target sound channel combination information is completed, an identifier corresponding to the target sound channel combination information is displayed on the page for Bluetooth surround sound configuration. As shown in FIG. 20, which is a third schematic diagram of a page for Bluetooth surround sound configuration according to an embodiment of the disclosure, the identifier "4.0" corresponding to the 4.0 sound channel combination information is displayed under the "Sound channel Configuration" option.

In some embodiments, the page for Bluetooth surround sound configuration can also display an "Audio Receiving Device Configuration" option. Whether this configuration option is configurable depends on whether the sound channel combination information has been set (i.e., whether an identifier corresponding to the target sound channel combination information is displayed on the page for Bluetooth surround sound configuration). If the sound channel combination information has been set, the "Audio Receiving Device Configuration" is controlled to be in a configurable state, allowing the user to start the audio receiving device configuration page via "Audio Receiving Device Configuration" to perform subsequent sound channel configuration steps. If the sound channel combination information has not been set, the audio receiving device cannot be configured. As shown in FIG. 20, the "Audio Receiving Device Configuration" option on the page for Bluetooth surround sound configuration is in a configurable state.

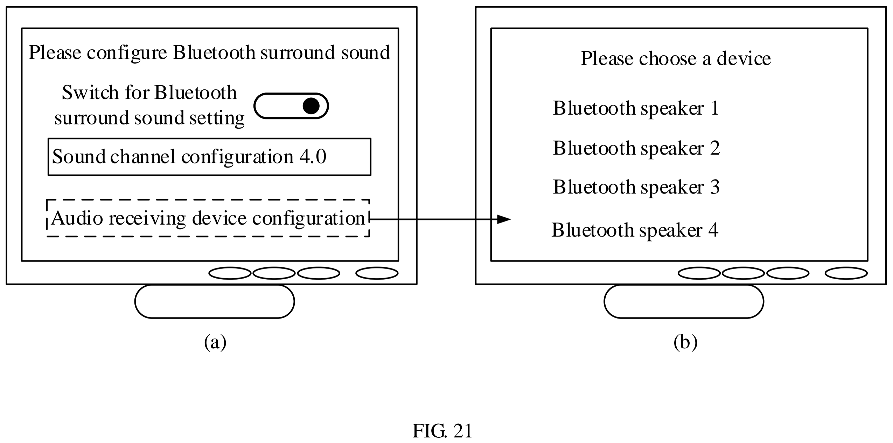

As shown in FIG. 21, which is a schematic effect diagram of transitioning from a Bluetooth surround sound configuration page to an audio receiving device configuration interface according to an embodiment of the disclosure, upon receiving a selection on the "Audio Receiving Device Configuration" option from the user, the interface transitions from the page for Bluetooth surround sound configuration shown in FIG. 21 (a) to the interface for audio receiving device configuration shown in FIG. 21 (b). Further, during the process of displaying the at least one audio receiving device on the interface for audio receiving device configuration, in response to an instruction for selecting a first target audio receiving device, the steps of obtaining the azimuth information of the first target audio receiving device and determining the BIS configuration information corresponding to the target sound channel combination information are executed.

In some embodiments, if the switch for Bluetooth surround sound setting is in the turned-on state and the user wants to turn it off, then upon receiving a turn-off operation for the switch for Bluetooth surround sound setting from the user, the Bluetooth module is controlled to cease the Bluetooth audio broadcast, and the switch for Bluetooth surround sound setting is switched to the turned-off state.

In some embodiments, upon receiving a user turn-off operation for the switch for Bluetooth surround sound setting, the Bluetooth module is first controlled to cease the Bluetooth audio broadcast. Then, upon receiving a callback status from the Bluetooth module interface, it is determined whether the Bluetooth audio broadcast was successfully ceased. If the cessation was unsuccessful, a failure prompt message is displayed on the page for Bluetooth surround sound configuration of the display apparatus. If the cessation was successful, the switch for Bluetooth surround sound setting is switched from the turned-on state to the turned-off state.

S1606: determine at least one audio receiving device.

Here, the at least one audio receiving device includes audio receiving devices scanned via the Bluetooth module and/or connected audio receiving devices in a device manager.

S1607: determine the BIS configuration information corresponding to the target sound channel combination information, based on the azimuth information of a target audio receiving device from the at least one audio receiving device and the azimuth information list corresponding to the target sound channel combination information.

The device control method provided by this embodiment of the disclosure first determines whether the Bluetooth module of the display apparatus has a BMS. Based on determining that the Bluetooth module has deployed a BMS, it is determined whether the Bluetooth module is currently broadcasting media audio externally. Based on determining that the Bluetooth module is currently broadcasting media audio externally, the Bluetooth module is controlled to cease the Bluetooth broadcast, and then the page for Bluetooth surround sound configuration is displayed on the display apparatus. Further, when the switch for Bluetooth surround sound setting is in the turned-on state, in response to an instruction for selecting target sound channel combination information, the broadcast corresponding to the target sound channel combination information is initiated. After determining at least one audio receiving device, the BIS configuration information corresponding to the target sound channel combination information is determined based on the azimuth information of a target audio receiving device from the at least one audio receiving device and the azimuth information list corresponding to the target sound channel combination information, thereby realizing the sound channel configuration function.

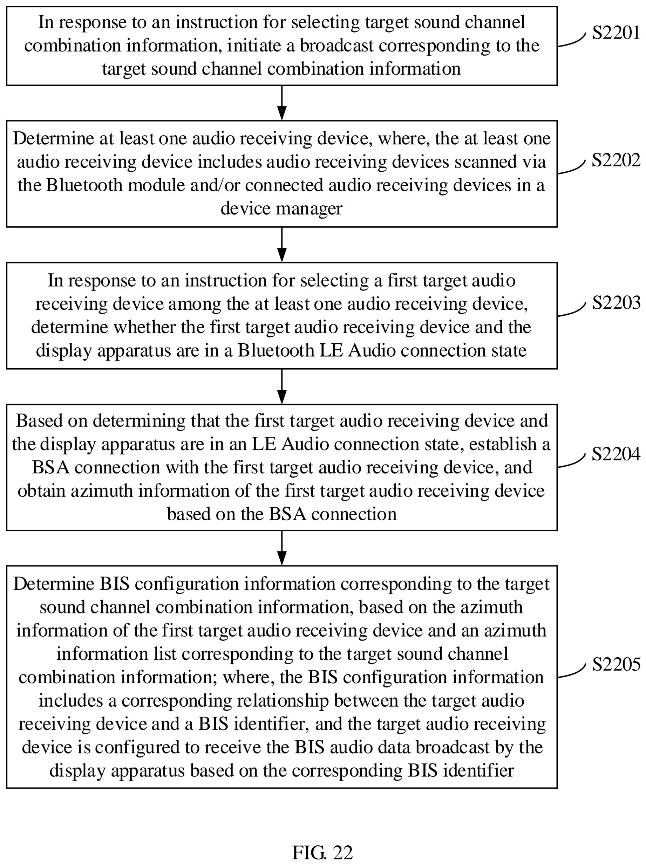

As shown in FIG. 22, which is a third schematic flow diagram of a device control method according to an embodiment of the disclosure, the method includes the following steps S2201-S2205.

S2201: in response to an instruction for selecting target sound channel combination information, initiate a broadcast corresponding to the target sound channel combination information.

S2202: determine at least one audio receiving device.

Here, the at least one audio receiving device includes audio receiving devices scanned via the Bluetooth module and/or connected audio receiving devices in a device manager.

S2203: in response to an instruction for selecting a first target audio receiving device among the at least one audio receiving device, determine whether the first target audio receiving device and the display apparatus are in a Bluetooth Low Energy Audio (LE Audio) connection state.

Here, the first target audio receiving device can be any device among the at least one audio receiving device.

In practical applications, an audio receiving device may simultaneously support both Classic Bluetooth protocol and Bluetooth Low Energy Audio (LE Audio) protocol technologies. Therefore, after determining at least one audio receiving device that supports the LE Audio protocol in step S2202, it is necessary to determine whether the selected audio receiving device and the display apparatus are in an LE Audio connection state. Only when the audio receiving device is in the LE Audio connection state can the display apparatus obtain the azimuth information of that audio receiving device.

S2204: based on determining that the first target audio receiving device and the display apparatus are in an LE Audio connection state, establish a BSA connection with the first target audio receiving device, and obtain azimuth information of the first target audio receiving device based on the BSA connection.

In some embodiments, based on determining that the first target audio receiving device and the display apparatus are in an LE Audio connection state, a Broadcast Assistant (BSA) connection is established with the first target audio receiving device, and then the azimuth information of the first target audio receiving device is obtained based on the BSA connection.

In some embodiments, assuming the first target audio receiving device is a connected audio receiving device in the device manager, the display apparatus may, in response to the instruction for selecting the first target audio receiving device, directly obtain the azimuth information of the first target audio receiving device from the information of the connected audio receiving devices stored in the device manager.

In some embodiments, based on determining that the LE Audio connection between the first target audio receiving device and the display apparatus is disconnected, the Bluetooth module is controlled to initiate an LE Audio pairing connection to the first target audio receiving device. Upon determining that the first target audio receiving device and the display apparatus are in an LE Audio connection state, a BSA connection is established with the first target audio receiving device, and further, the azimuth information of the first target audio receiving device is obtained based on the BSA connection.

S2205: determine Broadcast Isochronous Stream (BIS) configuration information corresponding to the target sound channel combination information, based on the azimuth information of the first target audio receiving device and an azimuth information list corresponding to the target sound channel combination information.

Here, the BIS configuration information includes a corresponding relationship between the target audio receiving device and a BIS identifier, and the target audio receiving device is configured to receive the BIS audio data broadcast by the display apparatus based on the corresponding BIS identifier.

In some embodiments, after obtaining the azimuth information of the first target audio receiving device, the azimuth information list corresponding to the target sound channel combination information can also be displayed on the display apparatus, and the azimuth information supported by the first target audio receiving device can be marked in the azimuth information list.

Assume the target sound channel combination information is 4.0 sound channel combination information; correspondingly, the azimuth information list corresponding to the target sound channel combination information includes Front Left, Front Right, Left Rear Surround, and Right Rear Surround channels. Assume the first target audio receiving device is "Bluetooth Speaker 4"; correspondingly, the obtained azimuth information of the first target audio receiving device includes the Front Left channel. Therefore, the Front Left channel in the azimuth information list can be marked as the azimuth information supported by "Bluetooth Speaker 4".

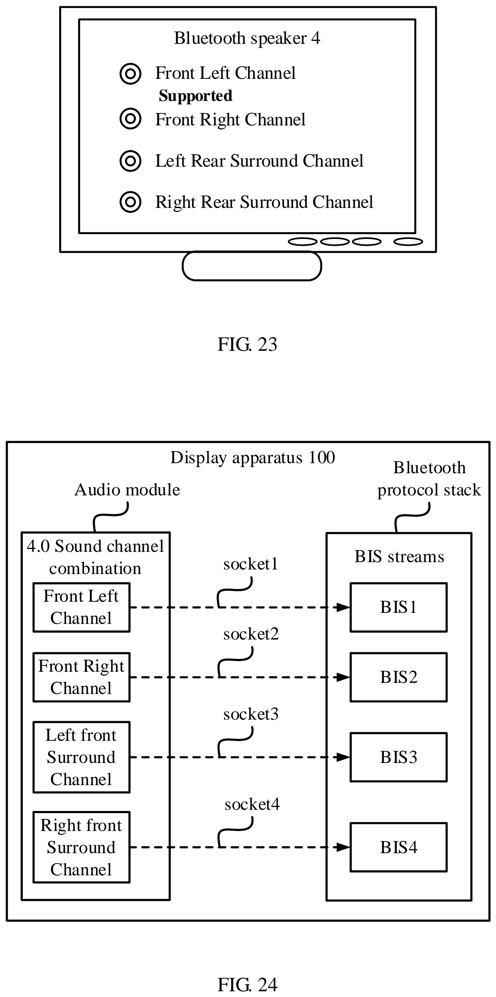

As shown in FIG. 14, the display apparatus, in response to the instruction for selecting the 4.0 sound channel combination information, initiates the broadcast corresponding to the 4.0 sound channel combination information and determines at least one audio receiving device. During the process of displaying the at least one audio receiving device on the interface shown in FIG. 15, the display apparatus, in response to an instruction for selecting "Bluetooth Speaker 4", determines "Bluetooth Speaker 4" as the first target audio receiving device, and then acquires the azimuth information of "Bluetooth Speaker 4" based on the BSA connection. After obtaining the azimuth information of "Bluetooth Speaker 4", the azimuth information list corresponding to the target sound channel combination information is displayed. As shown in FIG. 23, which is a schematic diagram of an azimuth information list according to an embodiment of the disclosure, the text "Supported" is displayed under "Front Left Channel", indicating that "Front Left Channel" is the azimuth information supported by "Bluetooth Speaker 4".

In some embodiments, after marking the azimuth information supported by the first target audio receiving device in the azimuth information list, a BIS identifier corresponding to the first target audio receiving device is first determined based on the azimuth information list marked with the azimuth information of the first target audio receiving device. Then, the BIS configuration information corresponding to the target sound channel combination information is determined based on the BIS identifier corresponding to the first target audio receiving device. Further, the display apparatus can pre-send the BIS configuration information, including the first target audio receiving device and the BIS identifier, to the audio receiving device, so that subsequently the first target audio receiving device can receive the BIS audio data broadcast by the display apparatus based on the BIS identifier.

From the above process, it can be seen that, in the device control method of this embodiment of the disclosure, the broadcast corresponding to the target sound channel combination information is initiated in response to the instruction for selecting the target sound channel combination information; then at least one audio receiving device is determined by scanning via the Bluetooth module and/or based on connected audio receiving devices in a device manager; further, the BIS configuration information corresponding to the target sound channel combination information is determined based on the azimuth information of a target audio receiving device from the at least one audio receiving device and the azimuth information list corresponding to the target sound channel combination information, thereby realizing the sound channel configuration function.

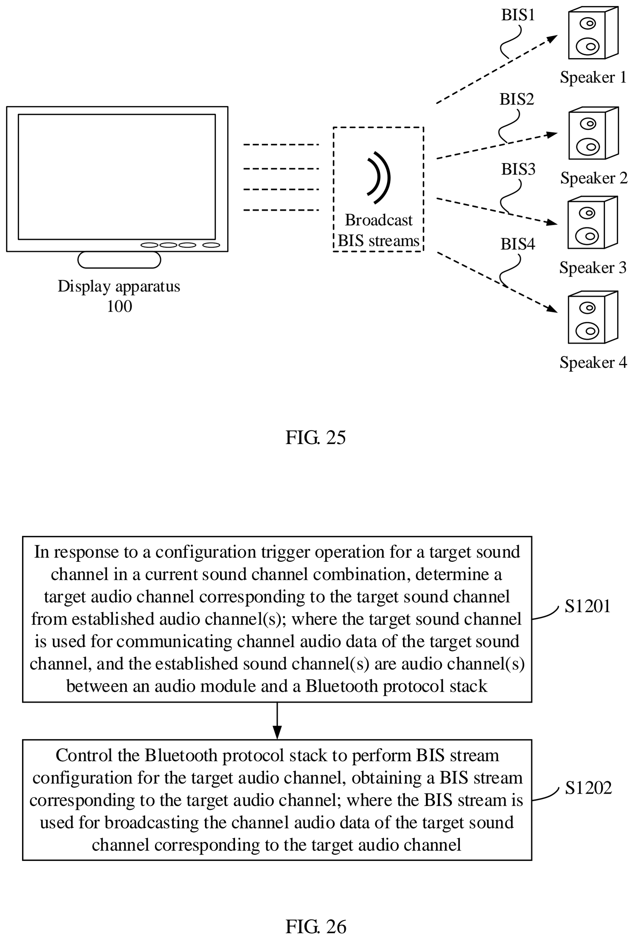

Furthermore, the device control method of this embodiment of the disclosure can also include, upon receiving an operation for triggering configuration of a target sound channel in the current sound channel combination, automatically configure a corresponding target audio channel for the target sound channel, and configure a corresponding BIS stream for the target audio channel, thereby realizing the sound channel configuration function. For details, refer to the scenarios shown in FIG. 24 and FIG. 25 below.

FIG. 24 is a fourth schematic diagram of a scenario of a device control method according to an embodiment of the disclosure. As shown in FIG. 24, the display apparatus is illustrated as a television, which includes an audio module and a Bluetooth protocol stack. Four audio channels have been established between the audio module and the Bluetooth protocol stack. When the television receives an operation for triggering configuration of the left channel in the 4.0 sound channel combination, it first determines the target audio channel corresponding to the left channel from the four established audio channels, for example, socket1. Then, the television controls the Bluetooth protocol stack to perform BIS stream configuration for socket1, for example, determining BIS1 as the BIS stream corresponding to socket1. Based on the above method, corresponding audio channels can be configured for the right channel, left surround channel, and right surround channel in the 4.0 sound channel combination, and corresponding BIS streams can be determined for each sound channel.

FIG. 25 is a fifth schematic diagram of a scenario of a device control method according to an embodiment of the disclosure. As shown in FIG. 24, the display apparatus is illustrated as a television, and the connected audio receiving devices are illustrated as speakers. Data is communicated between the television and the speakers via a BSA connection. When the television receives an operation for triggering configuration of the left channel in the 4.0 sound channel combination, it first matches the azimuth information of the connected speakers with the channel information of the left channel, and determines the successfully matched speaker, i.e., speaker 1, as the target audio receiving device corresponding to the left channel. Then, the display apparatus sends a BIS identifier, for example, BIS1, to speaker 1 via the BSA connection. During the process of the display apparatus broadcasting BIS streams, speaker 1 can synchronize the channel audio data in the corresponding BIS stream based on the BIS identifier.

In some embodiments, the device control method of the display apparatus can also be implemented by a display apparatus, a control terminal, and a plurality of audio receiving devices. Here, the control terminal may be a mobile phone, a tablet computer, etc., and the control terminal is primarily used for sound channel configuration of the audio receiving devices.

For the scenario shown in FIG. 25, when implementing the device control method of the display apparatus provided by this embodiment of the disclosure, various components in the display apparatus 100 shown in FIG. 9 can perform the following functions.

In some embodiments, the at least one processor is further configured to execute computer instructions to cause the display apparatus to: in response to an operation for triggering configuration of a target sound channel in a current sound channel combination, determine, from established audio channel(s), a target audio channel corresponding to the target sound channel; where the target audio channel is used for communicating channel audio data of the target sound channel, and the established audio channels are audio channels between an audio module and a Bluetooth protocol stack; control the Bluetooth protocol stack to perform BIS stream configuration for the target audio channel, obtaining a BIS stream corresponding to the target audio channel; where the BIS stream is used for broadcasting the channel audio data of the target sound channel corresponding to the target audio channel.

In some embodiments, the at least one processor is further configured to execute computer instructions to cause the display apparatus to: in response to an operation for triggering configuration of a target sound channel in a current sound channel combination, match azimuth information of connected audio receiving device with channel information of the target sound channel, and determine an audio receiving device whose azimuth information successfully matches the channel information of the target sound channel as a target audio receiving device; where the target audio receiving device supports the LE Audio protocol; send a BIS identifier to the target audio receiving device via an established BSA connection, so that the target audio receiving device synchronizes the channel audio data broadcast in the BIS stream corresponding to the BIS identifier.

In some embodiments, the at least one processor is further configured to execute computer instructions to cause the display apparatus to: in response to the operation for triggering configuration of the target sound channel in the current sound channel combination, while matching the azimuth information of the connected audio receiving devices with the channel information of the target sound channel, control the Bluetooth module to scan for audio receiving devices, and establish an LE Audio connection with the at least one scanned audio receiving device; obtain azimuth information of the connected audio receiving device based on the LE Audio connection, and match the azimuth information of the connected audio receiving device with the channel information of the target sound channel.

In some embodiments, the at least one processor is further configured to execute computer instructions to cause the display apparatus to: in response to the operation for triggering configuration of the target sound channel in the current sound channel combination, while matching the azimuth information of the connected audio receiving devices with the channel information of the target sound channel, determine whether the target sound channel is a dual sound channel; based on determining that the target sound channel is the dual sound channel, then determine an audio receiving device that supports dual sound channels from the connected audio receiving device, and match the azimuth information of the audio receiving device supporting dual sound channels with the channel information of the target sound channel.

In some embodiments, the at least one processor is further configured to execute computer instructions to cause the display apparatus to: before determining the audio receiving device supporting dual sound channels from the connected audio receiving device, obtain code configuration information of the connected audio receiving device through a service query method; where the code configuration information is used to indicate whether the corresponding audio receiving device supports dual sound channel; while determining the audio receiving device supporting dual sound channels from the connected audio receiving device, determine the audio receiving device supporting dual sound channels based on the code configuration information of the connected audio receiving device.

In some embodiments, the target sound channel is a dual sound channel, and the target audio channel is used for communicating merged audio data obtained by merging the channel audio data of the dual sound channels corresponding to the target sound channel.

In some embodiments, the at least one processor is further configured to execute computer instructions to cause the display apparatus to: in response to the operation for triggering configuration of the target sound channel in the current sound channel combination, while determining the target audio channel corresponding to the target sound channel from the established audio channel(s), determine whether an audio channel corresponding to the target sound channel already exists in the established audio channel(s); if no audio channel corresponding to the target sound channel exists in the established audio channel(s), then determine an idle audio channel among the established audio channel(s) as the target audio channel corresponding to the target sound channel.

In some embodiments, the at least one processor is further configured to execute computer instructions to cause the display apparatus to: before determining an idle audio channel among the established audio channel(s) as the target audio channel corresponding to the target sound channel, determine whether an idle audio channel exists in the established audio channel(s); based on determining that no idle audio channel exists in the established audio channel(s), then control the Bluetooth protocol stack to establish a target audio channel for the target sound channel.

In some embodiments, the at least one processor is further configured to execute computer instructions to cause the display apparatus to: before determining the target audio channel corresponding to the target sound channel from the established audio channel(s) in response to the operation for triggering configuration of the target sound channel in the current sound channel combination, in response to a selection on the current sound channel combination, control the Bluetooth protocol stack to establish the audio channel(s) between the audio module and the Bluetooth protocol stack.

FIG. 26 shows a fourth schematic flow diagram of a device control method according to an embodiment of the disclosure. The execution entity of this device control method can be the display apparatus 100 in the embodiment shown in FIG. 24. As shown in FIG. 26, which is a schematic flow diagram of a device control method according to an embodiment of the disclosure, the method may include but is not limited to the following steps S1201-S1202.

S1201: in response to an operation for triggering configuration of a target sound channel in a current sound channel combination, determine a target audio channel corresponding to the target sound channel from established audio channel(s); where the target sound channel is used for communicating channel audio data of the target sound channel, and the established audio channel(s) are audio channel(s) between an audio module and a Bluetooth protocol stack.

As mentioned earlier, sound channel combinations can include, for example, 2.0, 2.1, 3.0, 3.1, 2.2, 4.0, 5.0, and 5.1 sound channel combinations, etc. In some embodiments, the current sound channel combination can be any one of the aforementioned sound channel combinations.

Specifically, a 2.0 sound channel combination for 2 channels includes Left and Right channels; channel combinations for 3 channels include 2.1 and 3.0 sound channel combinations, where the 2.1 combination includes Left, Right, and LFE (subwoofer) channels, and the 3.0 combination includes Left, Right, and Center channels; for 4 channels, combinations include 3.1, 2.2, and 4.0, where the 3.1 combination includes Left, Right, Center, and LFE channels, the 2.2 combination includes Left, Right, and two LFE channels, and the 4.0 combination includes Left, Right, Left Surround, and Right Surround channels; for 5 channels, combinations include the 5.0 sound channel combination, which includes Left, Right, Left Surround, Right Surround, and LFE channels; for 6 channels, combinations include the 5.1 sound channel combination, etc.

In some embodiments, the target sound channel can be any channel in the current sound channel combination, for example, the Left channel in a 3.0 sound channel combination, or the Right Surround channel in a 5.0 sound channel combination, etc.

In some embodiments, the operation for triggering configuration of the target sound channel in the current sound channel combination may include: the display apparatus receiving a user's configuration trigger operation for the target sound channel via a remote control. For example, if the remote control receives a voice input "configure the left channel in the 3.0 sound channel combination" through its voice component, the remote control sends an instruction to configure the left channel in the 3.0 sound channel combination to the display apparatus. Upon receiving the instruction to configure the left channel in the 3.0 sound channel combination, the display apparatus determines the target audio channel corresponding to the target sound channel from the established audio channel(s).

In some embodiments, the target audio channel can be used to communicate the channel audio data of the target sound channel, where the channel audio data can represent the audio data corresponding to the target sound channel.

In practical applications, before determining the target audio channel corresponding to the target sound channel, a plurality of audio channels can be established so that the display apparatus can determine the target audio channel for the target sound channel from the established audio channels. Specifically, the display apparatus can, upon receiving a selection on the current sound channel combination, control the Bluetooth protocol stack to establish audio channels between the audio module and the Bluetooth protocol stack.

Here, the audio channels can be used to communicate the channel audio data of any channel in the current sound channel combination.

In some embodiments, the selection on the current sound channel combination may include: during the process of displaying a plurality of sound channel combinations on a page for sound channel configuration, in response to a selection on any sound channel combination among the plurality of sound channel combinations, determining that sound channel combination as the current sound channel combination, and controlling the Bluetooth protocol stack to establish audio channels between the audio module and the Bluetooth protocol stack.

In some embodiments, when the display apparatus receives the selection on the current sound channel combination, it can also control the Bluetooth protocol stack to establish audio channels between the audio module and the Bluetooth protocol stack based on the quantity of channels included in the current sound channel combination. For example, upon receiving a selection on a 2.0 sound channel combination including Left and Right channels, the Bluetooth protocol stack is controlled to establish 2 audio channels, used to configure corresponding audio channels for the Left and Right channels in the 2.0 sound channel combination respectively.

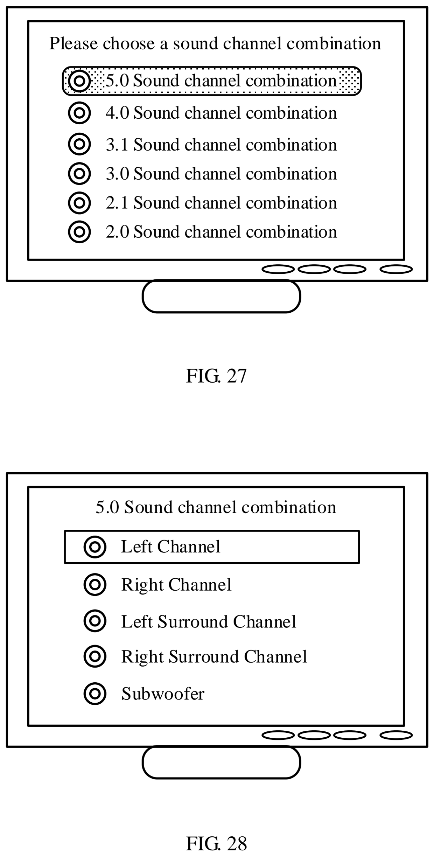

As shown in FIG. 27, which is a second schematic diagram of an interface for sound channel combination selection according to an embodiment of the disclosure, this interface for sound channel combination selection displays a plurality of sound channel combinations, such as 2.0, 2.1, 3.0, 3.1, 4.0, and 5.0 sound channel combinations. When the display apparatus receives a selection on the 5.0 sound channel combination, it controls the Bluetooth protocol stack to establish 5 audio channels between the audio module and the Bluetooth protocol stack.

In some embodiments, when the display apparatus receives the selection on the current sound channel combination, it can also display the plurality of sound channels included in the current sound channel combination on the page for sound channel configuration. Upon receiving an operation for triggering configuration of a target sound channel among the plurality of sound channels, it determines the corresponding target audio channel for the target sound channel.

As shown in FIG. 28, which is a first schematic diagram of a page for sound channel configuration according to an embodiment of the disclosure, this page for sound channel configuration displays the a plurality of sound channels included in the current sound channel combination, for example, it displays the Left, Right, Left Surround, Right Surround, and LFE channels included in the 5.0 sound channel combination. When the display apparatus receives an operation for triggering configuration of the Left channel in the 5.0 sound channel combination for the first time, it determines the target audio channel corresponding to the Left channel from the established audio channels.

In some embodiments, after the display apparatus determines the target audio channel corresponding to the target sound channel from the established audio channels in response to the operation for triggering configuration of the target sound channel in the current sound channel combination, it can establish a corresponding relationship between the target audio channel and the target sound channel. Subsequently, the channel audio data of the target sound channel can be transmitted through the target audio channel.

In some embodiments, after the display apparatus determines the corresponding target audio channel for the target sound channel, it can also use a channel descriptor to identify the corresponding relationship between the target audio channel and the target sound channel. For example, assuming three audio channels are established between the audio module and the Bluetooth protocol stack, where the socket1 channel descriptor is used to represent the corresponding relationship between the Left channel and the socket1 audio channel. After determining the corresponding relationship between the Left channel and socket1, the channel information of the Left channel and the socket1 channel descriptor can also be stored in a socket buffer channel cache.

The current sound channel combination can include a plurality of sound channels. For any channel among the plurality of sound channels, the device control method provided in this embodiment can be used for audio channel configuration. In practical applications, after configuring corresponding audio channels for all channels in the current sound channel combination, the display apparatus can broadcast audio data based on the configured sound channel combination.

In some embodiments, when the target sound channel is determined to be a dual sound channel, merged audio data obtained by merging the channel audio data of the dual sound channels can be communicated based on the target audio channel.

S1202: control the Bluetooth protocol stack to perform BIS stream configuration for the target audio channel, obtaining a BIS stream corresponding to the target audio channel; where the BIS stream is used for broadcasting the channel audio data of the target sound channel corresponding to the target audio channel.

In some embodiments, after determining the corresponding target audio channel for the target sound channel, a corresponding BIS stream can also be configured for the target audio channel. Specifically, the display apparatus controls the Bluetooth protocol stack to perform BIS configuration for the target audio channel, obtaining the BIS stream corresponding to the target audio channel, i.e., realizing the function of configuring the corresponding BIS stream for the target audio channel.

In practical applications, after determining the corresponding target audio channel for the target sound channel and determining the corresponding BIS stream for the target audio channel, based on the corresponding relationship between the target sound channel, the target audio channel, and the BIS stream, the channel audio data of the target sound channel can be communicated to the Bluetooth protocol stack through the target audio channel corresponding to the target sound channel. The Bluetooth protocol stack then encapsulates the channel audio data based on the BIS stream corresponding to the target audio channel, and subsequently broadcasts the channel audio data of the target sound channel outwardly via the BIS stream.

In some embodiments, when the display apparatus receives a trigger operation to switch from the current sound channel combination to another sound channel combination, it can control the channel cache module to clear the configuration information of the current sound channel combination to reconfigure the audio channels for the other sound channel combination. For example, upon receiving a user trigger operation to switch from the 5.0 sound channel combination to the 4.0 sound channel combination, the configuration information of the 5.0 sound channel combination is cleared, and the sound audio configuration process for the 4.0 sound channel combination is re-executed, equivalent to configuring the audio channels for the 4.0 sound channel combination for the first time.

In the device control method provided by this embodiment of the disclosure, in response to an operation for triggering configuration of a target sound channel in a current sound channel combination, a target audio channel corresponding to the target sound channel is determined from established audio channels, where the established audio channels are audio channels between an audio module and a Bluetooth protocol stack; the Bluetooth protocol stack is controlled to perform BIS stream configuration for the target audio channel, obtaining a BIS stream corresponding to the target audio channel, where the BIS stream is used for broadcasting the channel audio data of the target sound channel corresponding to the target audio channel. It can be seen that this embodiment can automatically configure a corresponding target audio channel for the target sound channel and configure a corresponding BIS stream for the target audio channel upon receiving an operation for triggering configuration of the target sound channel in the current sound channel combination, thereby realizing the sound channel configuration function.

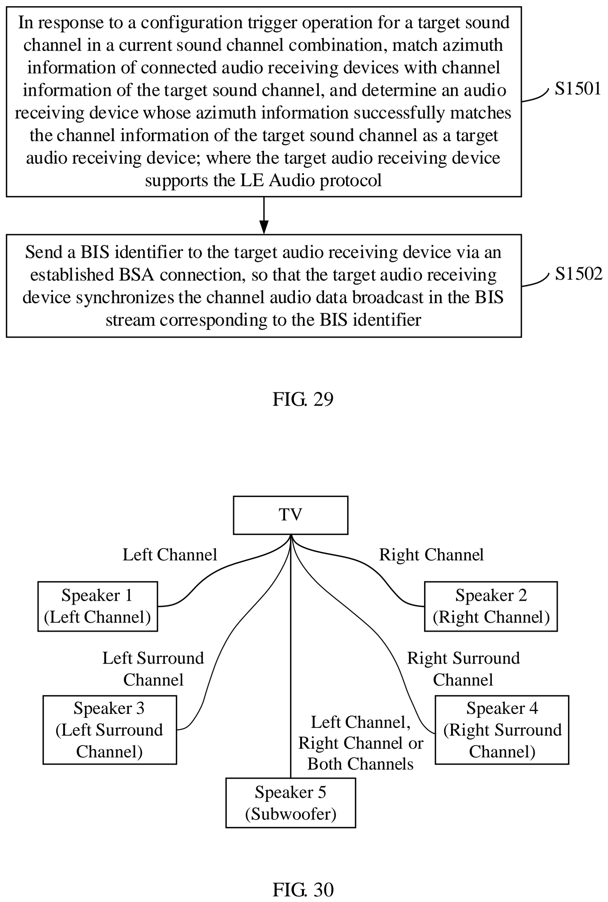

FIG. 29 shows a fifth schematic flow diagram of a device control method according to an embodiment of the disclosure. The execution entity of this device control method can be the display apparatus 100 in the embodiment shown in FIG. 25. As shown in FIG. 29, which is a schematic flow diagram of a device control method for a display apparatus according to an embodiment of the disclosure, the method includes the following steps.

S1501: in response to an operation for triggering configuration of a target sound channel in a current sound channel combination, match azimuth information of connected audio receiving devices with channel information of the target sound channel, and determine an audio receiving device whose azimuth information successfully matches the channel information of the target sound channel as a target audio receiving device; where the target audio receiving device supports the LE Audio protocol.

In practical applications, the azimuth information of an audio receiving device can be used to indicate the placement position of the audio receiving device. For example, a center channel speaker is generally placed near the center of the display screen, a left channel speaker is generally placed to the left front of the center channel speaker (or the display screen), and so on.

In some embodiments, the connected audio receiving devices refer to audio receiving devices that have already established a Bluetooth connection with the display apparatus. The channel information of the target sound channel can be used to describe whether the target sound channel is, for example, the left channel or the left surround channel, etc.

In some embodiments, when the display apparatus receives an operation for triggering configuration of a target sound channel in the current sound channel combination, it can also match the azimuth information of the connected audio receiving devices with the channel information of the target sound channel. Assume the channel description information of the target sound channel describes the left channel in a 4.0 sound channel combination, and the connected audio receiving devices include speaker A placed near the center of the display screen and speaker B placed to the left front of the center channel speaker (or the display screen). When matching the left channel with speaker A and speaker B respectively, speaker B can be determined as the target audio receiving device corresponding to the left channel.

In some embodiments, the target audio receiving device is an audio receiving device that supports the LE Audio protocol.

In some embodiments, when the display apparatus receives an operation for triggering configuration of a target sound channel in the current sound channel combination, it can also control the Bluetooth module to scan for audio receiving devices and establish LE Audio connections with the at least one scanned audio receiving device. Then, it acquires the azimuth information of the connected audio receiving devices based on the LE Audio connections and matches the azimuth information of the connected audio receiving devices with the target sound channel. Further, it determines the audio receiving device whose azimuth information successfully matches the channel information of the target sound channel as the target audio receiving device.

In practical applications, when the display apparatus receives the operation for triggering configuration of the target sound channel, it can control the Bluetooth module to scan for and connect to audio receiving devices, and then determine the audio receiving device matching the target sound channel from the connected devices. Alternatively, it can determine the audio receiving device matching the target sound channel from the already connected audio receiving devices as the target audio receiving device without performing a device scan.

S1502: send a BIS identifier to the target audio receiving device via an established BSA connection, so that the target audio receiving device synchronizes the channel audio data broadcast in the BIS stream corresponding to the BIS identifier.

In some embodiments, the BIS identifier can be used to identify a BIS stream. After receiving the BIS identifier, the audio receiving device can synchronize the channel audio data broadcast in the BIS stream corresponding to the BIS identifier.

In some embodiments, after the display apparatus determines the target audio receiving device corresponding to the target sound channel, it can also send the BIS identifier to the target audio receiving device via the established BSA connection. After receiving the BIS identifier, the target audio receiving device can receive the channel audio data in the BIS stream broadcast by the display apparatus based on the BIS identifier.

As shown in FIG. 30, which is a schematic diagram of a scenario for configuring an audio receiving device for a target sound channel according to an embodiment of the disclosure, FIG. 30 illustrates the display apparatus as a television and the connected audio receiving devices as speakers 1-5. When the television receives an operation for triggering configuration of the left channel, it matches the channel information of the left channel with the azimuth information of speakers 1-5 and configures speaker 1 for the left channel to receive the channel audio data of the left channel. When the television receives an operation for triggering configuration of the right channel, it matches the channel information of the right channel with the azimuth information of speakers 1-5 and configures speaker 2 for the right channel to receive the channel audio data of the right channel. Based on the above device control method, corresponding speakers are continued to be configured for the left surround and right surround channels.

It can be seen that this embodiment can automatically match a corresponding target audio receiving device for the target sound channel upon receiving an operation for triggering configuration of the target sound channel in the current sound channel combination, and then send a BIS identifier to the target audio receiving device via the established BSA connection, thereby enabling the target audio receiving device to receive the BIS stream corresponding to the BIS identifier broadcast by the display apparatus.

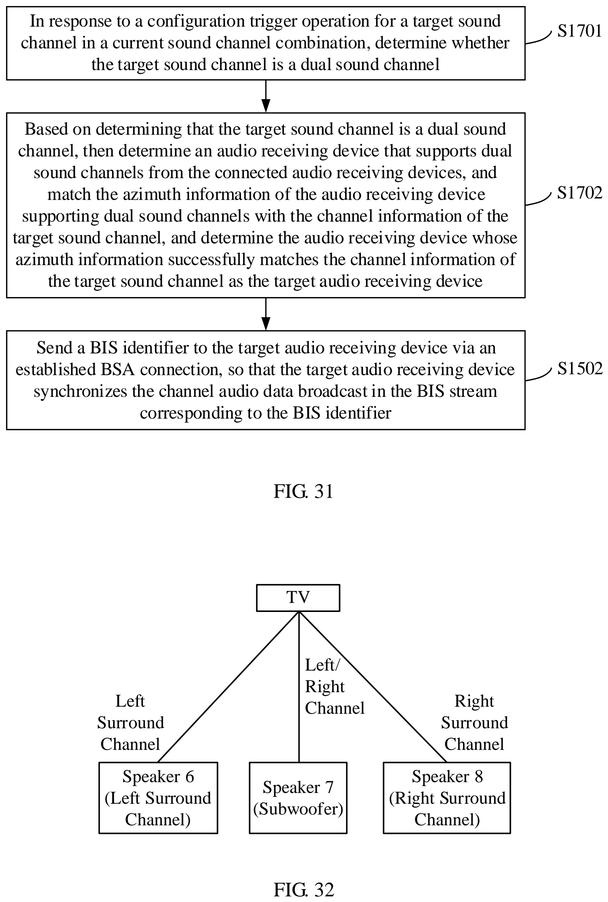

Referring to FIG. 31, as a detailed description for the embodiment shown in FIG. 29, based on steps S1501 and S1502 shown in FIG. 29, step S1501 (in response to an operation for triggering configuration of a target sound channel in a current sound channel combination, match azimuth information of connected audio receiving devices with channel information of the target sound channel, and determine an audio receiving device whose azimuth information successfully matches the channel information of the target sound channel as a target audio receiving device) is replaced with steps S1701 and S1702. The device control method provided by this embodiment of the disclosure may further include the following steps.

S1701: in response to an operation for triggering configuration of a target sound channel in a current sound channel combination, determine whether the target sound channel is a dual sound channel.

In some embodiments, the dual sound channels refer to a channel that simultaneously supports the left and right channels. Therefore, when the display apparatus receives an operation for triggering configuration of a target sound channel in the current sound channel combination, it can also determine whether the target sound channel includes dual sound channels based on the channel information of the target sound channel.

S1702: based on determining that the target sound channel is a dual sound channel, then determine an audio receiving device that supports dual sound channels from the connected audio receiving devices, and match the azimuth information of the audio receiving device supporting dual sound channels with the channel information of the target sound channel, and determine the audio receiving device whose azimuth information successfully matches the channel information of the target sound channel as the target audio receiving device.

In some embodiments, when the target sound channel is determined to be a dual sound channel, a corresponding audio receiving device is determined for the dual sound channel. Specifically, an audio receiving device that supports dual sound channels can be determined from the connected audio receiving devices, and the azimuth information of the audio receiving device supporting dual sound channels is matched with the channel information of the target sound channel.

In practical applications, since code configuration information can be used to indicate whether an audio receiving device supports dual sound channel, before determining the audio receiving device supporting dual sound channels from the connected audio receiving devices, the code configuration information of the connected audio receiving devices can be obtained through a service query method. Further, the audio receiving device supporting dual sound channels is determined based on the code configuration information of the connected devices.

As shown in FIG. 32, which is another schematic diagram of a scenario for configuring an audio receiving device for a target sound channel according to an embodiment of the disclosure, FIG. 32 illustrates the display apparatus as a television and the connected audio receiving devices as speakers 6-8. When the television receives an operation for triggering configuration of the left/right channels, it first determines whether the left/right channels are dual sound channels. Upon determining that the left/right channels are dual sound channels, it determines the speaker supporting dual sound channels (i.e., speaker 7) from speakers 6-8. Then, it sends a BIS identifier to speaker 7 via the established BSA connection. Based on the above device control method, corresponding speakers are continued to be configured for the left surround and right surround channels.

S1502: send a BIS identifier to the target audio receiving device via an established BSA connection, so that the target audio receiving device synchronizes the channel audio data broadcast in the BIS stream corresponding to the BIS identifier.

In some embodiments, after matching the azimuth information of the audio receiving device supporting dual sound channels with the channel information of the target sound channel and determining the audio receiving device whose azimuth information successfully matches the channel information of the target sound channel as the target audio receiving device, the display apparatus can send the BIS identifier to the target audio receiving device via the established BSA connection, so that the target audio receiving device synchronizes the channel audio data broadcast in the BIS stream corresponding to the BIS identifier.

It can be seen that, in this embodiment, a corresponding target audio receiving device can automatically be matched for the target sound channel upon receiving an operation for triggering configuration of the target sound channel in the current sound channel combination, and then a BIS identifier can be sent to the target audio receiving device via the established BSA connection, thereby enabling the target audio receiving device to receive the BIS stream corresponding to the BIS identifier broadcast by the display apparatus.

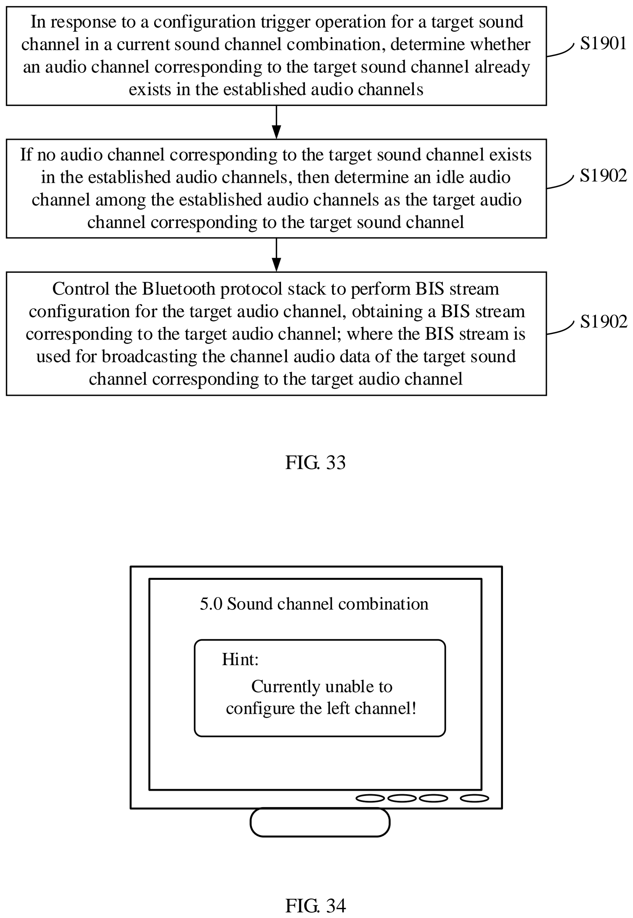

As shown in FIG. 33, which is a sixth schematic diagram of a page for sound channel configuration according to an embodiment of the disclosure, FIG. 33 serves as a detailed description of the embodiment shown in FIG. 26. Based on steps S1201 and S1202 shown in FIG. 26, step S1201 (in response to an operation for triggering configuration of a target sound channel in a current sound channel combination, determine a target audio channel corresponding to the target sound channel from established audio channels) is replaced with steps S1901 and S1902. The device control method provided by this embodiment of the disclosure may further include the following steps.

S1901: in response to an operation for triggering configuration of a target sound channel in a current sound channel combination, determine whether an audio channel corresponding to the target sound channel already exists in the established audio channels.

In some embodiments, when the display apparatus receives an operation for triggering configuration of a target sound channel in the current sound channel combination, it can also determine whether an audio channel corresponding to the target sound channel exists in the established audio channels.

In practical applications, when configuring a corresponding target audio channel for a target sound channel in the current sound channel combination, there may be a situation where an audio channel has already been configured for this target sound channel previously. For example, if the display apparatus has previously configured socket1 for the left channel and socket2 for the right channel in a 4.0 sound channel combination, then when the display apparatus receives an operation for triggering configuration of the left channel in the 4.0 sound channel combination, it first needs to determine whether an audio channel corresponding to the left channel exists in the established audio channels.

Based on determining that an audio channel corresponding to the left channel exists in the established audio channels, i.e., socket1, then there is no need to configure an audio channel for the left channel again, and the channel audio data of the left channel is directly broadcast based on the BIS stream corresponding to socket1.

S1902: if no audio channel corresponding to the target sound channel exists in the established audio channels, then determine an idle audio channel among the established audio channels as the target audio channel corresponding to the target sound channel.

In some embodiments, an idle audio channel refers to an audio channel that currently has no corresponding relationship established with any channel in any sound channel combination. Correspondingly, a non-idle audio channel is an audio channel that has already established a corresponding relationship with a channel in a sound channel combination. For non-idle audio channels, direct channel configuration is not possible.

In some embodiments, when the display apparatus determines that no audio channel corresponding to the target sound channel exists in the established audio channels, it can first determine whether an idle audio channel exists in the established audio channels. Based on determining that an idle audio channel exists in the established audio channels, any one of the idle audio channels can be determined as the target audio channel corresponding to the target sound channel, thereby realizing the function of configuring the target audio channel for the target sound channel.

In some embodiments, when it is determined that no idle audio channel exists in the established audio channels, the Bluetooth protocol stack can be controlled to establish a target audio channel for the target sound channel, and then the Bluetooth protocol stack is controlled to perform BIS stream configuration for the target audio channel to obtain the BIS stream corresponding to the target audio channel.

In other embodiments, when it is determined that no idle audio channel exists in the established audio channels, a configuration failure prompt message for the target sound channel can also be displayed on the page for sound channel configuration to prompt the user that a corresponding audio channel cannot currently be configured for the target sound channel. As shown in FIG. 34, which is a seventh schematic diagram of a page for sound channel configuration according to an embodiment of the disclosure, the text "Currently unable to configure the left channel" are displayed on the page for sound channel configuration. This display text is used to prompt the user that a corresponding audio channel cannot currently be configured for the left channel.

S1202: control the Bluetooth protocol stack to perform BIS stream configuration for the target audio channel, obtaining a BIS stream corresponding to the target audio channel; where the BIS stream is used for broadcasting the channel audio data of the target sound channel corresponding to the target audio channel.

In some embodiments, after determining any idle audio channel among the connected audio channels as the target audio channel corresponding to the target sound channel, the Bluetooth protocol stack can be controlled to perform BIS stream configuration for the target audio channel to obtain the BIS stream corresponding to the target audio channel.

It can be seen that, in this embodiment, a corresponding target audio channel can be automatically configured for the target sound channel and a corresponding BIS stream can be configured for the target audio channel upon receiving an operation for triggering configuration of the target sound channel in the current sound channel combination, thereby realizing the sound channel configuration function.

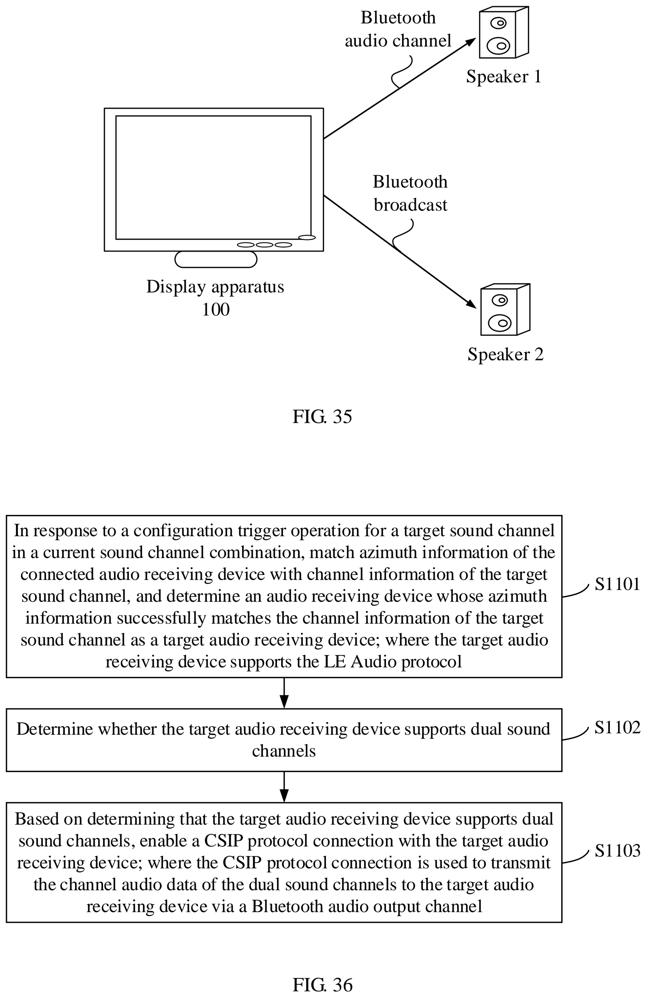

Furthermore, the device control method of this embodiment of the disclosure can also, when the display apparatus receives an operation for triggering configuration of a target sound channel in the current sound channel combination, transmit the channel configuration information of the dual sound channels to a target audio receiving device that supports dual sound channels based on a CSIP protocol connection, thereby realizing the sound channel configuration function. For details, refer to the scenario shown in FIG. 35 below.

FIG. 35 is a sixth schematic diagram of a scenario of a device control method according to an embodiment of the disclosure. As shown in FIG. 35, the display apparatus is illustrated as a television, and the connected audio receiving devices are illustrated as speaker 1 and speaker 2. Herein, speaker 1 is a device supporting left and right channels (i.e., a dual sound channel device), and speaker 2 is a device supporting the left channel (i.e., a single sound channel device). When configuring the channel information for the left channel, the display apparatus first matches the azimuth information of speaker 1 and speaker 2 with the channel information of the left channel, and determines speaker 1 and speaker 2 as the audio receiving devices corresponding to the left channel. Then, upon determining that speaker 1 is an audio receiving device supporting dual sound channels, it initiates a CSIP protocol connection with speaker 1, and upon determining that speaker 2 is an audio receiving device not supporting dual sound channels, it initiates a BSA protocol connection with speaker 2. Further, it transmits the channel audio data of the dual sound channels to speaker 1 via the Bluetooth audio output channel, thereby realizing the configuration of the right channel simultaneously while configuring the left channel. And, it sends a BIS identifier to speaker 2 via the BSA protocol connection, so that speaker 2 can synchronize the channel audio data broadcast via the BIS stream corresponding to the BIS identifier.

As shown in FIG. 35, after completing the sound channel configuration for Speaker 1 and Speaker 2, the display apparatus can transmit the audio stream to Speaker 1 via the Bluetooth sound channel while simultaneously sending the broadcast stream to Speaker 2 via Bluetooth broadcast, thereby achieving the effect of sound output based on both unicast and broadcast modes simultaneously. When implementing the device control method provided by this embodiment of the disclosure, various components in the display apparatus 100 shown in FIG. 9 can also perform the following functions.

In some embodiments, the at least one processor is further configured to execute computer instructions to cause the display apparatus to perform: after determining the audio receiving device whose azimuth information successfully matches the channel information of the target sound channel as the target audio receiving device, determining whether the target audio receiving device supports dual sound channels; based on determining that the target audio receiving device supports dual sound channels, then enabling a CSIP protocol connection with the target audio receiving device; where the CSIP protocol connection is used to transmit the channel audio data of the dual sound channels to the target audio receiving device via a Bluetooth audio output channel.

In some embodiments, the at least one processor is further configured to execute computer instructions to cause the display apparatus to perform: before enabling the CSIP protocol connection with the target audio receiving device based on determining that the target audio receiving device supports dual sound channels, obtaining UUID information of the target audio receiving device through a service query method, and determining a Bluetooth protocol supported by the target audio receiving device based on the UUID information; where the UUID information is used to identify the target audio receiving device; establishing a Bluetooth protocol connection with the target audio receiving device based on the Bluetooth protocol supported by the target audio receiving device; where the Bluetooth protocol connection includes a CSIP protocol connection.

In some embodiments, the at least one processor is further configured to execute computer instructions to cause the display apparatus to perform: after enabling the CSIP protocol connection with the target audio receiving device, disabling other protocol connections in the connections of Bluetooth protocol except for the CSIP protocol connection.

In some embodiments, the at least one processor is further configured to execute computer instructions to cause the display apparatus to perform: while establishing the Bluetooth protocol connection with the target audio receiving device based on the Bluetooth protocol supported by the target audio receiving device, establishing at least BMS protocol connection, UMS protocol connection, CSIP protocol connection, and BSA protocol connection with the target audio receiving device simultaneously based on the Bluetooth protocol supported by the target audio receiving device.

In some embodiments, the at least one processor is further configured to execute computer instructions to cause the display apparatus to perform: before determining whether the target audio receiving device supports dual sound channels, obtaining code configuration information of the target audio receiving device through a service query method; where the code configuration information is used to indicate whether the target audio receiving device supports dual sound channels; correspondingly, the determining whether the target audio receiving device supports dual sound channels includes: determining whether the target audio receiving device supports dual sound channels based on the code configuration information of the target audio receiving device.

In some embodiments, the at least one processor is further configured to execute computer instructions to cause the display apparatus to perform: based on determining that the target audio receiving device does not support dual sound channels, then enabling a BSA protocol connection with the target audio receiving device; determining a target audio channel corresponding to the target sound channel from established audio channels; where the target audio channel is used for transmitting the channel audio data of the target sound channel, and the established audio channels are audio channels between an audio module and a Bluetooth protocol stack; controlling the Bluetooth protocol stack to perform BIS stream configuration for the target audio channel, obtaining a BIS stream corresponding to the target audio channel; where the BIS stream is used for broadcasting the channel audio data of the target sound channel corresponding to the target audio channel.

In some embodiments, the at least one processor is further configured to execute computer instructions to cause the display apparatus to perform: sending a BIS identifier to the target audio receiving device via an established BSA protocol connection, so that the target audio receiving device synchronizes the channel audio data broadcast via the BIS stream corresponding to the BIS identifier.

In some embodiments, the at least one processor is further configured to execute computer instructions to cause the display apparatus to perform: before determining the target sound channel corresponding to the target audio channel from the established audio channels, in response to a selection on a current sound channel combination, controlling the Bluetooth protocol stack to establish audio channels between the audio module and the Bluetooth protocol stack.

In some embodiments, the at least one processor is further configured to execute computer instructions to cause the display apparatus to perform: while matching the azimuth information of the connected audio receiving devices with the channel information of the target sound channel in response to the operation for triggering configuration of the target sound channel in the current sound channel combination: in response to the operation for triggering configuration of the target sound channel in the current sound channel combination, controlling the Bluetooth module to scan for audio receiving devices, and establishing an LE Audio connection with the at least one scanned audio receiving device; obtaining azimuth information of the connected audio receiving device based on the LE Audio connection, and matching the azimuth information of the connected audio receiving device with the channel information of the target sound channel.

FIG. 36 shows an eighth schematic flow diagram of a device control method according to an embodiment of the disclosure. The execution entity of this device control method can be the display apparatus 100 in the embodiment shown in FIG. 35. The method may include but is not limited to the following steps S1101-S1103.

S1101: in response to an operation for triggering configuration of a target sound channel in a current sound channel combination, match azimuth information of the connected audio receiving device with channel information of the target sound channel, and determine an audio receiving device whose azimuth information successfully matches the channel information of the target sound channel as a target audio receiving device; where the target audio receiving device supports the LE Audio protocol.

When the display apparatus of the disclosure receives an operation for triggering configuration of a target sound channel in the current sound channel combination, it matches the azimuth information of the connected audio receiving devices with the channel information of the target sound channel and determines the audio receiving device whose azimuth information successfully matches the channel information of the target sound channel as the target audio receiving device. In some embodiments, the connected audio receiving devices refer to audio receiving devices that have already established a Bluetooth connection with the display apparatus. The channel information of the target sound channel can be used to describe whether the target sound channel is, for example, the left channel or the left surround channel, etc.

In some embodiments, the azimuth information of an audio receiving device can be used to represent the channel information supported by the audio receiving device. For example, the azimuth information of a left channel speaker can be used to indicate that the speaker is an audio receiving device supporting the left channel; the azimuth information of a left/right channel speaker can be used to indicate that the speaker is an audio receiving device simultaneously supporting the left and right channels.

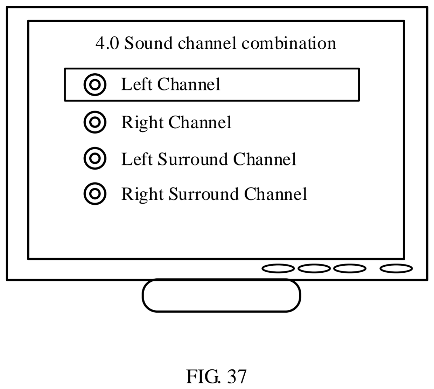

As shown in FIG. 37, which is a schematic diagram of a page for sound channel configuration according to an embodiment of the disclosure, this page for sound channel configuration displays the channels included in the 4.0 sound channel combination, namely the Left channel, Right channel, Left Surround channel, and Right Surround channel. When the display apparatus receives an operation for triggering configuration of the Left channel in the 4.0 sound channel combination, it matches the connected audio receiving devices with the Left channel.

In practical applications, when the display apparatus receives an operation for triggering configuration of a target sound channel in the current sound channel combination, it first matches the azimuth information of the connected audio receiving devices with the channel information of the target sound channel. Assume the channel description information of the target sound channel describes the Left channel in a 4.0 sound channel combination, and the connected audio receiving devices include: Speaker A supporting the Left channel, Speaker B supporting the Right channel, and Speaker C simultaneously supporting the Left and Right channels. Herein, both Speaker A and Speaker C support the Left channel, so both Speaker A and Speaker C can be determined as the target audio receiving devices that successfully match the Left channel.

In practical applications, when the display apparatus determines the corresponding target audio receiving device for the target sound channel, there might be no connected audio receiving devices. In this case, the built-in Bluetooth module of the display apparatus can be used to scan for nearby audio receiving devices that support the LE Audio protocol and establish LE Audio connections with them.

Specifically, when the display apparatus receives an operation for triggering configuration of a target sound channel in the current sound channel combination, it first controls the Bluetooth module to scan for audio receiving devices and establishes LE Audio connections with the at least one scanned audio receiving device. Then, it acquires the azimuth information of the connected audio receiving devices based on the LE Audio connections and matches the azimuth information of the connected audio receiving devices with the target sound channel. Further, it determines the audio receiving device whose azimuth information successfully matches the channel information of the target sound channel as the target audio receiving device.

In practical applications, when the display apparatus receives the operation for triggering configuration of the target sound channel, it can control the Bluetooth module to scan for and connect to audio receiving devices, and then determine the audio receiving device matching the target sound channel from the connected devices. Alternatively, it can directly determine the audio receiving device matching the target sound channel from the already connected audio receiving devices as the target audio receiving device without performing a device scan.

S1102: determine whether the target audio receiving device supports dual sound channels.

In practical applications, since code configuration information can be used to indicate whether an audio receiving device supports dual sound channels, after determining the audio receiving device whose azimuth information successfully matches the channel information of the target sound channel as the target audio receiving device, it can also determine whether the target audio receiving device supports dual sound channels based on the codec information of the target audio receiving device.

Herein, supporting dual sound channels indicates that the audio receiving device can simultaneously support both the left and right channels. Correspondingly, supporting a single sound channel indicates that the audio receiving device can support only one channel, such as only the left channel or only the left surround channel.

In some embodiments, before determining whether the target audio receiving device supports dual sound channels based on the codec information, the code configuration information of the target audio receiving device can also be obtained through a service query method, so that subsequently, it can be determined whether the target audio receiving device supports dual sound channels based on the obtained code configuration information.

In other embodiments, since the azimuth information of an audio receiving device can be used to represent the channel information supported by the device, after the display apparatus determines the target audio receiving device, it can also determine whether the target audio receiving device supports dual sound channels based on the azimuth information of the target audio receiving device. Assume the azimuth information of audio receiving device A includes the Left channel, and the azimuth information of audio receiving device B includes the Left and Right channels. Then, it can be determined that audio receiving device A supports a single sound channel, and audio receiving device B supports dual sound channels.

S1103: based on determining that the target audio receiving device supports dual sound channels, enable a CSIP protocol connection with the target audio receiving device; where the CSIP protocol connection is used to transmit the channel audio data of the dual sound channels to the target audio receiving device via a Bluetooth audio output channel.

In some embodiments, when the display apparatus determines that the target audio receiving device supports dual sound channels, it enables the CSIP protocol connection between the display apparatus and the target audio receiving device. After enabling the CSIP connection, the channel audio data of the dual sound channels can be transmitted to the target audio receiving device via the Bluetooth audio output channel, so that the target audio receiving device can play audio based on the channel audio data after receiving it.

Herein, enabling the CSIP protocol connection with the target audio receiving device means activating the CSIP protocol connection between the display apparatus and the target audio receiving device, i.e., making the CSIP protocol between the display apparatus and the target audio receiving device available. After enabling the CSIP connection, the channel audio data of the dual sound channels can be transmitted to the target audio receiving device via the Bluetooth audio output channel.

It can be seen that the display apparatus in this embodiment can complete the configuration for the right channel (or left channel) simultaneously while configuring the left channel (or right channel) for an audio receiving device that supports dual sound channels.

In practical applications, before enabling the CSIP protocol connection with the target audio receiving device, the Bluetooth protocol supported by the target audio receiving device can be determined by querying the UUID information of the target audio receiving device, and then connections related to the Bluetooth protocol can be established with the target audio receiving device based on the Bluetooth protocol supported by the target audio receiving device. Subsequently, when it is determined that the target audio receiving device supports dual sound channels, the CSIP protocol connection for transmitting dual sound channels can be enabled based on the established Bluetooth protocol connection.

Specifically, first, the UUID information of the target audio receiving device can be obtained through a service query method and the Bluetooth protocol supported by the target audio receiving device can be determined based on the UUID information. Then, a Bluetooth protocol connection can be established with the target audio receiving device based on the Bluetooth protocol supported by the target audio receiving device, where the Bluetooth protocol connection includes a CSIP protocol connection. Further, when it is determined that the target audio receiving device supports dual sound channels, the CSIP protocol connection with the target audio receiving device can be enabled.

Herein, the Universally Unique Identifier (UUID) can be used to indicate the type of Bluetooth protocol supported by the target audio receiving device. In practical applications, since the UUID information of audio receiving devices supporting the Classic Bluetooth protocol and the LE Audio protocol are different, the UUID information can be used to indicate whether the target audio receiving device is a device supporting the LE Audio protocol.

In some embodiments, before determining the Bluetooth protocol supported by the target audio receiving device based on the UUID information, the UUID information of the target audio receiving device can be obtained through a service query method. The display apparatus can use the Service Discovery Protocol (SDP) or the Attribute Protocol (ATT) to obtain the UUID information of the target audio receiving device.

In practical applications, after determining that the target audio receiving device is a device supporting the LE Audio protocol, BMS protocol connection, UMS protocol connection, CSIP protocol connection, and BSA protocol connection can be established simultaneously with the target audio receiving device based on the LE Audio protocol.

Herein, the BMS protocol connection refers to a Bluetooth connection established based on the Broadcast Media Sender (BMS), the UMS protocol connection refers to a Bluetooth connection established based on the Unicast Media Sender (UMS), and the BSA protocol connection refers to a Bluetooth connection established based on the Broadcast Assistant.

In some embodiments, since the display apparatus can transmit the channel audio data of the dual sound channels to the target audio receiving device via the Bluetooth channel after establishing the CSIP protocol connection with the audio receiving device supporting dual sound channels, the UMS protocol connection and BSA protocol connection are unnecessary at this time. Therefore, after the display apparatus determines that the target audio receiving device supports dual sound channels and enables the CSIP protocol connection with the target audio receiving device, it can also disable other protocols in the Bluetooth connection except for the CSIP protocol.

When the display apparatus receives the configuration information for the target sound channel, it first determines the audio receiving device whose azimuth information successfully matches the channel information of the target sound channel as the target audio receiving device. Then, the display apparatus acquires the UUID information of the target audio receiving device through a service query method and determines the type of Bluetooth protocol supported by the target audio receiving device based on the UUID information. Assume that based on the UUID information, it is determined that the Bluetooth protocol supported by the target audio receiving device is the LE Audio protocol. Then, based on the LE Audio protocol, BMS protocol connection, UMS protocol connection, CSIP protocol connection, and BSA protocol connection are established simultaneously with the target audio receiving device. Further, when it is determined that the target audio receiving device supports dual sound channels, the CSIP protocol connection is enabled, and the BMS protocol connection, UMS protocol connection, and BSA protocol connection are disabled.

In the device control method provided by this embodiment of the disclosure, first, in response to an operation for triggering configuration of a target sound channel in a current sound channel combination, the azimuth information of connected audio receiving devices is matched with the channel information of the target sound channel, and the audio receiving device whose azimuth information successfully matches the channel information of the target sound channel is determined as the target audio receiving device. Then, it is determined whether the target audio receiving device supports dual sound channels. Based on determining that the target audio receiving device supports dual sound channels, then a CSIP protocol connection with the target audio receiving device is enabled; where the CSIP protocol connection is used to transmit the channel audio data of the dual sound channels to the target audio receiving device via a Bluetooth audio output channel. It can be seen that the display apparatus in this embodiment can, upon receiving an operation for triggering configuration of a target sound channel in the current sound channel combination, transmit the channel configuration information of the dual sound channels to the target audio receiving device that supports dual sound channels based on the CSIP protocol connection, thereby realizing the sound channel configuration function.

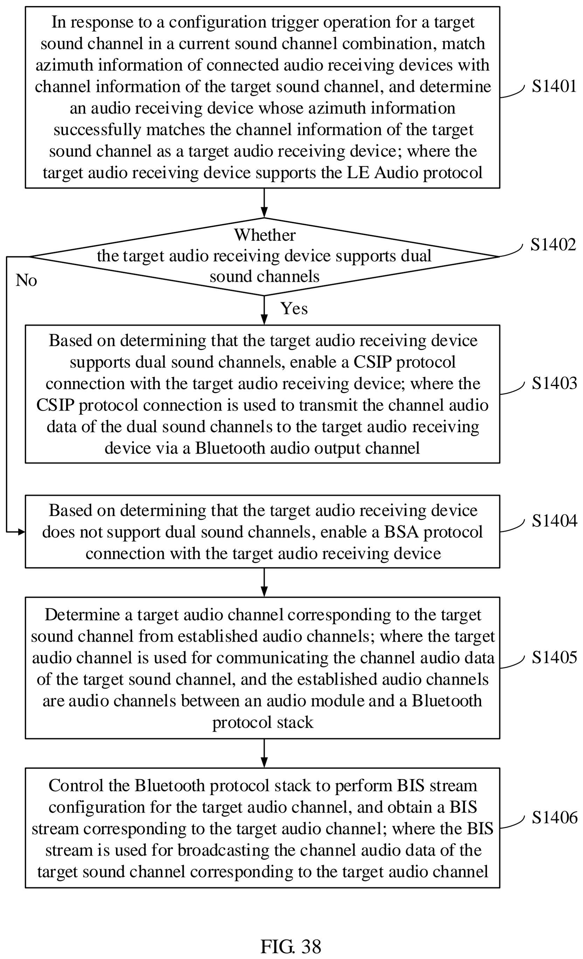

FIG. 38 shows a second schematic flow diagram of a device control method according to an embodiment of the disclosure. The execution entity of this device control method can be the display apparatus 100 in the embodiment shown in FIG. 35. As shown in FIG. 38, which is a schematic flow diagram of a device control method for a display apparatus according to an embodiment of the disclosure, the method includes the following steps.

S1401: in response to an operation for triggering configuration of a target sound channel in a current sound channel combination, match azimuth information of connected audio receiving devices with channel information of the target sound channel, and determine an audio receiving device whose azimuth information successfully matches the channel information of the target sound channel as a target audio receiving device; where the target audio receiving device supports the LE Audio protocol.

In some embodiments, when the display apparatus receives an operation for triggering configuration of a target sound channel in the current sound channel combination, it first matches the azimuth information of the connected audio receiving devices with the channel information of the target sound channel and determines the audio receiving device whose azimuth information successfully matches the channel information of the target sound channel as the target audio receiving device.

S1402: determine whether the target audio receiving device supports dual sound channels.

S1403: based on determining that the target audio receiving device supports dual sound channels, enable a CSIP protocol connection with the target audio receiving device; where the CSIP protocol connection is used to transmit the channel audio data of the dual sound channels to the target audio receiving device via a Bluetooth audio output channel.

In some embodiments, when the display apparatus determines that the target audio receiving device supports dual sound channels, it enables the CSIP protocol connection between the display apparatus and the target audio receiving device. After enabling the CSIP connection, the channel audio data of the dual sound channels can be transmitted to the target audio receiving device via the Bluetooth audio output channel, so that the target audio receiving device can play audio based on the channel audio data after receiving it.

S1404: based on determining that the target audio receiving device does not support dual sound channels, enable a BSA protocol connection with the target audio receiving device.

In this embodiment of the disclosure, when the display apparatus determines that the target audio receiving device does not support dual sound channels, it enables the BSA protocol connection with the target audio receiving device.

In some embodiments, after the display apparatus enables the BSA protocol connection with the target audio receiving device, it can send a BIS identifier to the target audio receiving device based on the BSA protocol connection, so that after receiving the BIS identifier, the target audio receiving device can receive the channel audio data in the BIS stream broadcast by the display apparatus based on the BIS identifier.

It can be seen that, in this embodiment, a corresponding target audio receiving device can be automatically matched for the target sound channel upon receiving an operation for triggering configuration of the target sound channel in the current sound channel combination, and then a BIS identifier can be sent to the target audio receiving device via the established BSA connection, thereby enabling the target audio receiving device to receive the BIS stream corresponding to the BIS identifier broadcast by the display apparatus.

In some embodiments, after the display apparatus enables the BSA protocol connection with the target audio receiving device, it can further obtain the position information of the target audio receiving device based on the BSA protocol connection and further notify the Audio Service module to perform audio configuration.

S1405: determine a target audio channel corresponding to the target sound channel from established audio channels; where the target audio channel is used for communicating the channel audio data of the target sound channel, and the established audio channels are audio channels between an audio module and a Bluetooth protocol stack.

In some embodiments, the target audio channel can be used to transmit the channel audio data of the target sound channel, where the channel audio data can represent the audio data corresponding to the target sound channel.

In some embodiments, before determining the target audio channel corresponding to the target sound channel, a plurality of audio channels can be established so that the display apparatus can determine the target audio channel for the target sound channel from the established audio channels. Specifically, the display apparatus can, upon receiving a selection operation for the current sound channel combination, control the Bluetooth protocol stack to establish audio channels between the audio module and the Bluetooth protocol stack.

Herein, the audio channels can be used to communicate the channel audio data of any channel in the current sound channel combination. After the display apparatus determines the target audio channel corresponding to the target sound channel from the established audio channels, it can establish a corresponding relationship between the target audio channel and the target sound channel. Subsequently, the channel audio data of the target sound channel can be transmitted through the target audio channel.

S1406: control the Bluetooth protocol stack to perform BIS stream configuration for the target audio channel, and obtain a BIS stream corresponding to the target audio channel; where the BIS stream is used for broadcasting the channel audio data of the target sound channel corresponding to the target audio channel.

In some embodiments, after determining the corresponding target audio channel for the target sound channel, a corresponding BIS stream can also be configured for the target audio channel. Specifically, the display apparatus controls the Bluetooth protocol stack to perform BIS configuration for the target audio channel, obtaining the BIS stream corresponding to the target audio channel, thereby realizing the function of configuring the corresponding BIS stream for the target audio channel.

In practical applications, after determining the corresponding target audio channel for the target sound channel and determining the corresponding BIS stream for the target audio channel, based on the corresponding relationship between the target sound channel, the target audio channel, and the BIS stream, the channel audio data of the target sound channel can be transmitted to the Bluetooth protocol stack through the target audio channel corresponding to the target sound channel. The Bluetooth protocol stack then encapsulates the channel audio data based on the BIS stream corresponding to the target audio channel and subsequently broadcasts the channel audio data of the target sound channel outwardly via the BIS stream.

In some embodiments, when the display apparatus receives a trigger operation to switch from the current sound channel combination to another sound channel combination, it can control the channel cache module to clear the configuration information of the current sound channel combination to reconfigure the sound channels for the other sound channel combination. For example, upon receiving a user trigger operation to switch from the 5.0 sound channel combination to the 4.0 sound channel combination, the configuration information of the 5.0 sound channel combination is cleared, and the sound channel configuration process for the 4.0 sound channel combination is re-executed, equivalent to configuring the sound channels for the 4.0 sound channel combination for the first time.

It can be seen that in the device control method provided by this embodiment, in response to an operation for triggering configuration of a target sound channel in a current sound channel combination, the audio receiving device that successfully matches the target sound channel is determined as the target audio receiving device. Based on determining that the target audio receiving device does not support dual sound channels, then a BSA protocol connection with the target audio receiving device is enabled. Then, the target audio channel corresponding to the target sound channel is determined from the established audio channels. Further, the Bluetooth protocol stack is controlled to perform BIS stream configuration for the target audio channel, obtaining the BIS stream corresponding to the target audio channel, thereby realizing the sound channel configuration for audio receiving devices supporting single sound channel.

For ease of understanding, the scenario shown in FIG. 32 is used as an example for explanation. In the scenario shown in FIG. 32, the display apparatus is a television, and the connected audio receiving devices are Speaker 6, Speaker 7, and Speaker 8. Herein, Speaker 6 is a device supporting the Left Surround channel (i.e., a single sound channel device), Speaker 7 is a device supporting the Left/Right channels (i.e., a dual sound channel device), and Speaker 8 is a device supporting the Right Surround channel (i.e., a single sound channel device).

When configuring the channel information for the Left Surround channel, the display apparatus first determines Speaker 6 as the target audio receiving device corresponding to the Left Surround channel. Then, it determines whether Speaker 6 supports dual sound channels and, upon determining that Speaker 6 does not support dual sound channels, enables the BSA connection with Speaker 6. Next, it determines the target audio channel corresponding to the Left Surround channel from the connected audio channels and controls the Bluetooth protocol stack to perform BIS stream configuration for the target audio channel, obtaining the BIS stream corresponding to the target audio channel. Further, it broadcasts the channel audio data of the Left Surround channel to Speaker 6 via Bluetooth broadcast, thereby achieving sound output based on the broadcast mode.

When configuring the channel information for the Left channel (or Right channel, or Left/Right channels), the display apparatus first determines Speaker 7 as the target audio receiving device corresponding to the Left channel (or Right channel, or Left/Right channels). Then, it determines whether Speaker 7 supports dual sound channels and, upon determining that Speaker 7 supports dual sound channels, enables the CSIP protocol connection with Speaker 7. Further, it transmits the channel audio data of the dual sound channels to Speaker 6 via the Bluetooth audio output channel, thereby achieving sound output based on the unicast mode. After completing the sound channel configuration for Speaker 6, Speaker 7, and Speaker 8, the display apparatus can transmit the audio stream to Speaker 7 via the Bluetooth sound channel while simultaneously sending the broadcast stream to Speaker 6 and Speaker 8 via Bluetooth broadcast, thereby achieving the effect of simultaneous sound output based on both unicast and broadcast modes.

In practical applications, when configuring the corresponding target audio channel for a target sound channel in the current sound channel combination, there might be a situation where an audio channel has already been configured for this target sound channel previously. For example, if the display apparatus has previously configured socket1 for the Left channel and socket2 for the Right channel in a 4.0 sound channel combination, then when the display apparatus receives an operation for triggering configuration of the Left channel in the 4.0 sound channel combination, it can first determine whether an audio channel corresponding to the Left channel exists in the established audio channels.

Based on determining that an audio channel corresponding to the Left channel exists in the established audio channels, i.e., socket1, then there is no need to configure an audio channel for the Left channel again, and the channel audio data of the Left channel is directly broadcast based on the BIS stream corresponding to socket1.

Based on determining that no audio channel corresponding to the target sound channel exists in the established audio channels, any idle audio channel among the established audio channels can be determined as the target audio channel corresponding to the target sound channel.

Herein, an idle audio channel refers to an audio channel that currently has no corresponding relationship established with any channel in any sound channel combination. Correspondingly, a non-idle audio channel is an audio channel that has already established a corresponding relationship with a channel in a sound channel combination. For non-idle audio channels, direct channel configuration is not possible.

In some embodiments, when the display apparatus determines that no audio channel corresponding to the target sound channel exists in the established audio channels, it can first determine whether an idle audio channel exists in the established audio channels. Based on determining that an idle audio channel exists in the established audio channels, any one of the idle audio channels can be determined as the target audio channel corresponding to the target sound channel, thereby realizing the function of configuring the target audio channel for the target sound channel.

In some embodiments, when it is determined that no idle audio channel exists in the established audio channels, the Bluetooth protocol stack can be controlled to establish a target audio channel for the target sound channel, and then the Bluetooth protocol stack is controlled to perform BIS stream configuration for the target audio channel to obtain the BIS stream corresponding to the target audio channel.

In other embodiments, when it is determined that no idle audio channel exists in the established audio channels, a configuration failure prompt message for the target sound channel can be displayed on the page for sound channel configuration to prompt the user that a corresponding audio channel cannot currently be configured for the target sound channel.

In practical applications, after determining any idle audio channel among the connected sound channels as the target audio channel corresponding to the target sound channel, the Bluetooth protocol stack can be controlled to perform BIS stream configuration for the target audio channel to obtain the BIS stream corresponding to the target audio channel. It can be seen that, in this embodiment, a corresponding target audio channel can be automatically configured for the target sound channel and a corresponding BIS stream can be configured for the target audio channel, upon receiving an operation for triggering configuration of the target sound channel in the current sound channel combination, thereby realizing the sound channel configuration function.

Furthermore, considering that currently, playback devices such as televisions, when playing music or videos, often establish an Access Control List (ACL) connection with a Bluetooth speaker to send the audio to be played to the Bluetooth speaker to achieve better sound playback effects. The Bluetooth speaker plays the audio after receiving the audio to be played. However, due to current limitations of the Bluetooth link in televisions, a television can usually only establish an ACL link with one Bluetooth speaker, thus only being able to play audio for one channel through one Bluetooth speaker, which cannot achieve a stereo playback effect. In practical applications, there are various configurations for broadcasting BIS audio. The following provides exemplary illustration.

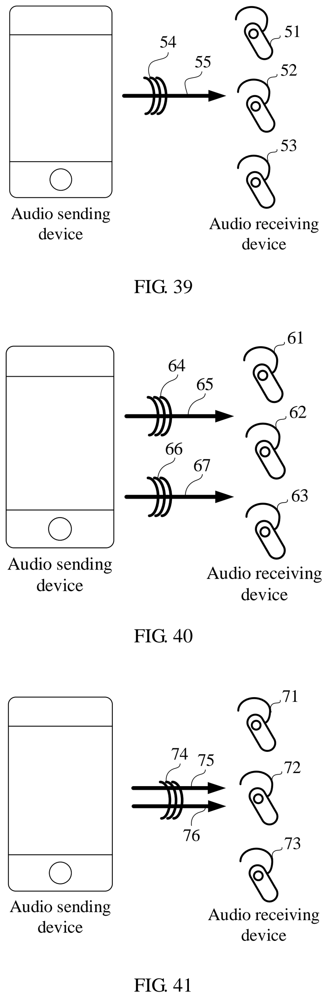

FIG. 39 is a first schematic diagram of a configuration method for broadcasting BIS audio (which can be a BIS stream) according to an embodiment of the disclosure. As shown in FIG. 39, there are three audio receiving devices, specifically Bluetooth Earphone 51, Bluetooth Earphone 52, and Bluetooth Earphone 53 as examples. In this configuration method, one audio sending device broadcasts one BIS audio stream 54, which includes audio of one sound channel 55. Nearby Bluetooth Earphone 51, Bluetooth Earphone 52, and Bluetooth Earphone 53 can receive this BIS audio stream 54 to obtain the audio of the sound channel 55 from this BIS audio stream 54.

FIG. 40 is a second schematic diagram of a configuration method for broadcasting BIS audio according to an embodiment of the disclosure. As shown in FIG. 40, there are three audio receiving devices, specifically Bluetooth Earphone 61, Bluetooth Earphone 62, and Bluetooth Earphone 63 as examples. In this configuration method, one audio sending device broadcasts two BIS audio streams, specifically BIS audio stream 64 and BIS audio stream 66 shown in FIG. 40. BIS audio stream 64 includes audio of one sound channel 65, and BIS audio stream 66 includes audio of one sound channel 67. Herein, sound channel 65 and sound channel 67 can be the same channel or different channels. Bluetooth Earphone 61, Bluetooth Earphone 62, and Bluetooth Earphone 63 can all receive this BIS audio stream 64 and BIS audio stream 66, and obtain the audio of sound channel 65 from BIS audio stream 64 and the audio of sound channel 67 from BIS audio stream 66.

FIG. 41 is a third schematic diagram of a configuration method for broadcasting BIS audio according to an embodiment of the disclosure. As shown in FIG. 41, there are three audio receiving devices, specifically Bluetooth Earphone 71, Bluetooth Earphone 72, and Bluetooth Earphone 73 as examples. In this configuration method, one audio sending device broadcasts one BIS audio stream 74, which includes audio of two sound channels, specifically audio of sound channel 75 and audio of sound channel 76 shown in FIG. 41. Nearby Bluetooth Earphone 71, Bluetooth Earphone 72, and Bluetooth Earphone 73 can receive this BIS audio stream 74 to obtain the audio of sound channel 75 and sound channel 76 from this BIS audio stream 74. In FIG. 41, the plurality of audio receiving devices are Bluetooth Earphone 71, Bluetooth Earphone 72, and Bluetooth Earphone 73. Sound channel 75 and sound channel 76 in FIG. 41 can be different channels, for example, sound channel 75 is the Front Left channel, and sound channel 76 is the Front Right channel.

In the device control method provided by this embodiment of the disclosure, the audio sending device can transmit BIS audio of a plurality of sound channels to one or more audio receiving devices by broadcasting BIS audio. In this embodiment, any one of the BIS audio broadcast configuration methods similar to those shown in FIG. 39, FIG. 40, or FIG. 41 can be used to broadcast BIS audio.

The device control method of this embodiment of the disclosure can be implemented through a display apparatus and a plurality of audio receiving devices. The display apparatus can be a mobile phone, television, computer, etc. The audio receiving devices can be speakers, earphones, etc. The device control method provided in this embodiment can include a configuration phase and a multi-channel audio output phase. The configuration phase mainly involves the configuration of the BIS audio (i.e., configuring the BIS identifier) for the sound channel matching the audio receiving device, as well as the configuration of the volume for the display apparatus and audio receiving devices. The configuration phase is mainly implemented through the display apparatus and/or a control terminal, while the multi-channel audio output phase is mainly implemented by the display apparatus broadcasting BIS audio to the audio receiving devices. Herein, the control terminal can be a mobile terminal, for example, a mobile phone, tablet computer, remote control, wearable device, etc., that can be used to implement functions such as configuring the BIS identifier and volume for audio receiving devices. The wearable device can be a smartwatch, smart bracelet, etc.

For the scenario shown in FIG. 7, when implementing the device control method according to some embodiments, the various components of the display apparatus 100 can perform the following functions.

In some embodiments, at least one processor is further configured to execute computer instructions to cause the display apparatus to perform: obtaining sound channel information to be configured; controlling the Bluetooth module in the communicating device to determine several audio receiving devices to be connected via Bluetooth scanning; controlling the Bluetooth module to establish ACL links with a plurality of audio receiving devices; configuring a BIS identifier for each audio receiving device among the plurality of audio receiving devices based on the sound channel information to be configured; sending the configured BIS identifier to each audio receiving device among the plurality of audio receiving devices via the ACL link, where the plurality of audio receiving devices are some or all of the several audio receiving devices; controlling the Bluetooth module in the communicating device 120 to broadcast a plurality of BIS streams, each BIS stream including BIS audio data and a BIS identifier corresponding to the BIS audio stream, enabling the plurality of audio receiving devices to obtain target BIS audio from the plurality of BIS streams, where the BIS identifier corresponding to the target BIS audio stream matches the configured BIS identifier.

In some embodiments, at least one processor is further configured to execute computer instructions to cause the display apparatus to perform: sending a configured volume parameter to each audio receiving device among the plurality of audio receiving devices via the ACL link.

In some embodiments, at least one processor is further configured to execute computer instructions to cause the display apparatus to perform: after determining the several audio receiving devices to be connected via Bluetooth scanning, and before controlling the Bluetooth module to establish ACL links with the plurality of audio receiving devices, determining the plurality of audio receiving devices that support Bluetooth Low Energy from among the several audio receiving devices.

In some embodiments, at least one processor is further configured to execute computer instructions to cause the display apparatus to perform: while determining the plurality of audio receiving devices that support Bluetooth Low Energy from the several audio receiving devices, obtaining a UUID corresponding to each audio receiving device among the several audio receiving devices; selecting, from the several audio receiving devices, the plurality of audio receiving devices, wherein the UUID corresponding to each of the plurality of audio receiving devices indicates that a device type supports Bluetooth Low Energy.

In some embodiments, at least one processor is further configured to execute computer instructions to cause the display apparatus to perform: while obtaining the sound channel information to be configured, obtaining sound channel information of an audio media resource being played currently; determining sound channel information to be configured that matches the sound channel information of the audio media resource from the sound channel information supported by the display apparatus.

In some embodiments, at least one processor is further configured to execute computer instructions to cause the display apparatus to perform: while obtaining the sound channel information to be configured, receiving an instruction for selecting a sound channel combination; in response to the instruction for selecting the sound channel combination, obtaining the sound channel information to be configured.

In the scenario, while implementing the device control method according to some embodiments, the various components of the audio receiving device 200 can perform the following functions.

In some embodiments, a processor in the audio receiving device 200 is configured to: control the Bluetooth module in the communicating device 220 to receive a scan signal sent by the display apparatus; in response to the scan signal sent by the display apparatus, control the Bluetooth module to establish an ACL link with the display apparatus; receive a BIS identifier configured by the display apparatus via the ACL link; control the Bluetooth module in the communicating device 220 to receive the plurality of BIS streams, each BIS stream including BIS audio data and the BIS identifier corresponding to the BIS audio stream; obtain target BIS audio from the plurality BIS audio streams, where the BIS identifier corresponding to the target BIS audio stream matches the configured BIS identifier.

For the scenario shown in FIG. 8, while implementing the device control method according to some embodiments, the various components of the display apparatus 100 can perform the following functions.

In some embodiments, the processor 150 in the display apparatus is configured to perform: determining sound channel information to be configured; and controlling the communicating device 120 to send the sound channel information to be configured to the control terminal 300, enabling the control terminal 300 to configure speakers for each sound channel of the display apparatus based on the sound channel information to be configured. After the control terminal 300 configures speakers (i.e., configures different audio receiving devices) for each sound channel of the display apparatus, broadcasting the plurality of BIS streams, so that the speakers configured for the respective sound channels of the display apparatus can receive and play the BIS audio corresponding to their own channels. In this way, the display apparatus can transmit BIS audio for the plurality of sound channels to the plurality of audio receiving devices by broadcasting BIS streams, enabling the audio receiving devices to play the BIS audio corresponding to their own channels. This achieves stereo playback effect without occupying the current Bluetooth links in the display apparatus.

In the scenario, while implementing the device control method according to some embodiments, the various components of the audio receiving device 200 can perform the following functions.

In some embodiments, in the audio receiving device 200, the Bluetooth module in the communicating device 220 is configured to: receive a scan signal sent by the control terminal 300; the processor 210 is configured to: in response to the scan signal sent by the control terminal 300, control the Bluetooth module to establish an ACL link with the control terminal 300; receive a BIS identifier configured by the control terminal 300 via the ACL link; further, the Bluetooth module is configured to: receive the plurality of BIS streams, each BIS stream including BIS audio data and the BIS identifier corresponding to the BIS audio stream; obtain target BIS audio from the plurality BIS audio stream, where the BIS identifier corresponding to the target BIS audio stream matches the configured BIS identifier.

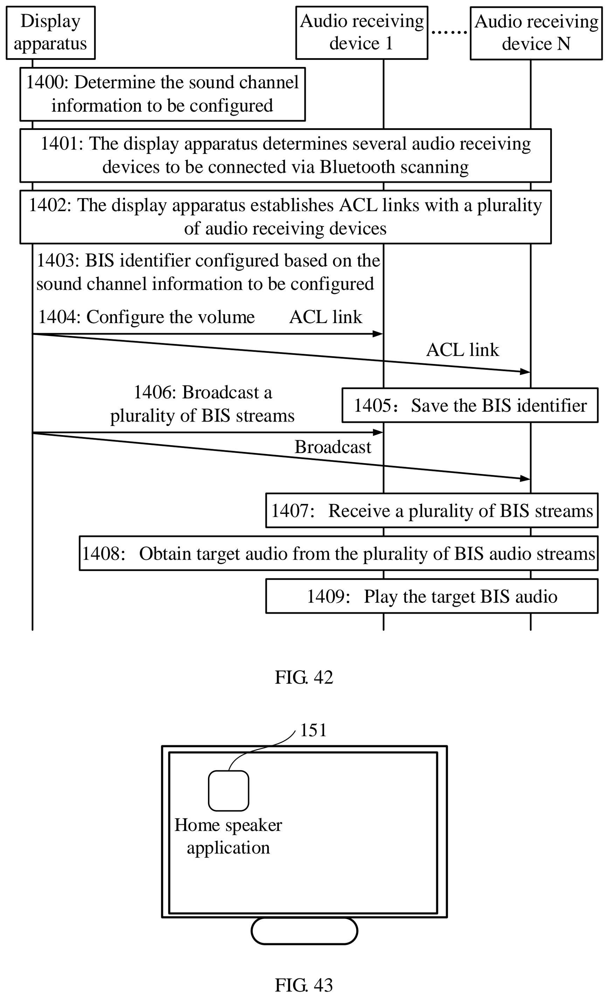

FIG. 42 is a tenth schematic flowchart of a device control method according to some embodiments. As shown in FIG. 42, the method can be implemented through interaction between the display apparatus and N audio receiving devices. FIG. 42 only can show audio receiving device 1 and audio receiving device N. The audio receiving devices involved in the following steps can be any audio receiving device among these N audio receiving devices. The method may include, but is not limited to, the following steps.

1400: the display apparatus can determine the sound channel information to be configured.

The sound channel information to be configured can be information about a sound channel combination of one or more sound channels. In some embodiments, a 2.0 sound channel combination for two sound channels can include a front left channel and a front right channel. Sound channel combinations for three sound channels include a 2.1 sound channel combination and a 3.0 sound channel combination. The 2.1 sound channel combination can include a front left channel, a front right channel, and a low-frequency effects (LFE) channel. The 3.0 sound channel combination can include a front left channel, a front right channel, and a center channel. Sound channel combinations for four channels include a 3.1 sound channel combination, a 2.2 sound channel combination, and a 4.0 sound channel combination. The 3.1 sound channel combination can include a front left channel, a front right channel, a center channel, and an LFE channel. The 2.2 sound channel combination can include a front left channel, a front right channel, and two LFE channels. The 4.0 sound channel combination can include a front left channel, a front right channel, a left surround channel, and a right surround channel.

1401: the display apparatus can determine several audio receiving devices to be connected via Bluetooth scanning.

In the embodiments, the display apparatus can select some devices from the aforementioned several audio receiving devices to serve as speakers for various sound channels based on the sound channel information to be configured.

In the embodiments, before the display apparatus can broadcast multiple BIS audio streams, it can first scan for several audio receiving devices to be connected and configure a plurality of audio receiving devices according to the sound channel combination information to be configured. During the configuration process, Bluetooth scanning for audio receiving devices is required, and configuration is performed via ACL links.

In the embodiments, the scanning and configuration of audio receiving devices can be performed while the display apparatus is currently playing audio media resource, or can be performed while the display apparatus is not playing any audio media resource.

In some embodiments, a home speaker application can be installed on the display apparatus. The home speaker application can be a third-party application or a system application. The application identifier of the home speaker application can be displayed on the interface of the display apparatus. In some embodiments, FIG. 43 is a schematic diagram of an interface displaying an application identifier of a Bluetooth speaker application in a display apparatus according to some embodiments. As shown in FIG. 43, the display apparatus is a television, and the screen of this television can display the application identifier 151 of the Bluetooth speaker application.

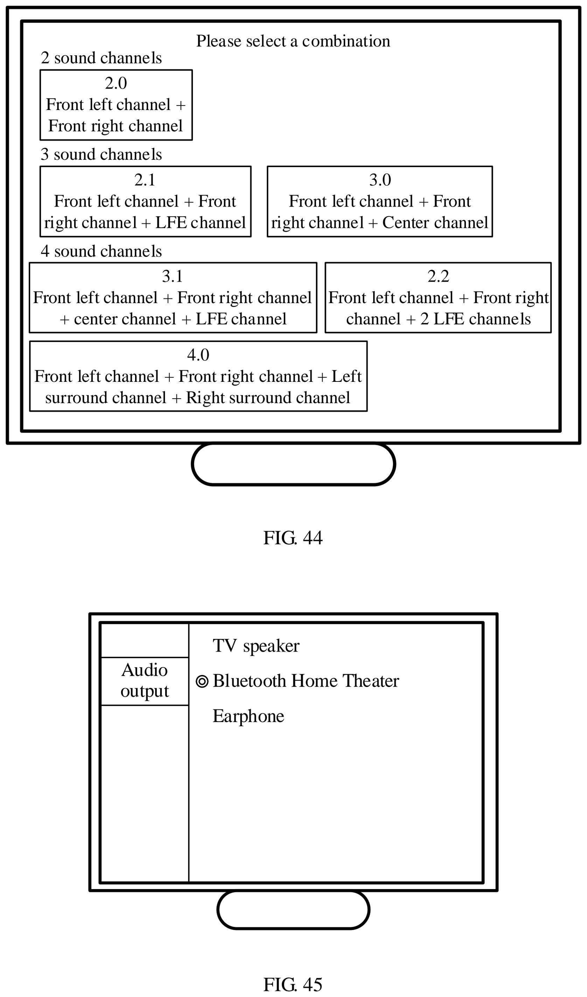

In response to a user's operation for starting the home speaker application, an interface for sound channel combination selection can be displayed on the display apparatus. FIG. 44 is a third schematic diagram of an interface for channel combination selection according to some embodiments. The operation for starting the home speaker application can be a click on the application identifier of the home speaker application. As shown in FIG. 44, the interface for channel combination selection can include identifiers for 6 combinations. A 2.0 sound channel combination for two channels can include a front left channel and a front right channel. Sound channel combinations for three channels include a 2.1 sound channel combination and a 3.0 sound channel combination. The 2.1 sound channel combination can include a front left channel, a front right channel, and an LFE channel. The 3.0 sound channel combination can include a front left channel, a front right channel, and a center channel. Sound channel combinations for four channels include a 3.1 sound channel combination, a 2.2 sound channel combination, and a 4.0 sound channel combination. The 3.1 sound channel combination can include a front left channel, a front right channel, a center channel, and an LFE channel. The 2.2 sound channel combination can include a front left channel, a front right channel, and two LFE channels. The 4.0 sound channel combination can include a front left channel, a front right channel, a left surround channel, and a right surround channel.

In some embodiments, the interface for sound channel combination selection shown in FIG. 44 can be an interface within the home speaker application, and can be displayed through triggering operations on the home speaker application.

In other embodiments, the interface for sound channel combination selection shown in FIG. 44 can be an interface within the settings interface (also called the setting interface) of the display apparatus.

For the sound channel combinations displayed in the interface for sound channel combination selection shown in FIG. 44, when the display apparatus is not currently playing audio media resource, a user command received by the display apparatus can be used to select a certain sound channel combination. This user command can be a user's touch operation on the identifier of a certain sound channel combination in the interface for sound channel combination selection, or it can be a selection command for a certain sound channel combination issued by the user via the display apparatus's remote control or other associated device.

For the sound channel combinations displayed in the interface for sound channel combination selection shown in FIG. 44, when the display apparatus is currently playing audio media resource, the sound channel information to be configured (the sound channel combination to be configured) can be determined based on the sound channel information of the audio media resource currently being played by the display apparatus. That is, the corresponding sound channel combination can be selected from the sound channel combinations displayed in the interface for sound channel combination selection.

In some embodiments, determining the sound channel combination to be configured based on the sound channel information of the audio media resource currently played by the display apparatus can involve selecting, from the sound channel combinations displayed in the interface for channel combination selection, a sound channel combination that matches the sound channel information of the audio media resource currently played by the display apparatus. If a first sound channel combination matching the sound channel information of the audio media resource exists among the sound channel combinations displayed in the interface for channel combination selection, this first sound channel combination can be selected for subsequent configuration. If no first sound channel combination matching the sound channel information of the audio media resource exists among the sound channel combinations displayed in the interface for channel combination selection, a second sound channel combination with highest similarity to the sound channel information of the audio media resource among the sound channel combinations can be selected for subsequent configuration. The sound channel combinations displayed in the interface for channel combination selection are the sound channel combinations currently supported by the display apparatus.

The second sound channel combination with the highest similarity to the sound channel information of this audio media resource can be: among the sound channel combinations currently supported by the display apparatus, the sound channel combination that has most identical sound channels with the sound channel information of the audio media resource.

In some embodiments, determining the sound channel combination to be configured based on the sound channel information of the audio media resource currently played by the display apparatus may include, if no sound channel combination matching the sound channel information of the audio media resource currently played by the display apparatus exists among the sound channel combinations supported by the display apparatus, determining a sound channel combination with highest configuration among the sound channel combinations supported by the display apparatus as the sound channel information to be configured. Here, the sound channel combination with the highest configuration may be the sound channel combination with the highest number of channels.

In some embodiments, assume the sound channel information of the audio media resource currently played by the display apparatus is a 5.1 sound channel combination, which can include a center channel, front left channel, front right channel, left surround channel, right surround channel, and low-frequency effects (LFE) channel. The sound channel combinations displayed in FIG. 44 include: 2.0 sound channel combination, 2.1 sound channel combination, 3.0 sound channel combination, 3.1 sound channel combination, 2.2 sound channel combination, and 4.0 sound channel combination. Among them, the 4.0 sound channel combination can include a front left channel, front right channel, center channel, and LFE channel. This 4.0 sound channel combination has the highest similarity to the 5.1 sound channel combination. Therefore, if the sound channel information of the audio media resource indicates 5.1 sound channel combination, the 4.0 sound channel combination can be selected for subsequent configuration.

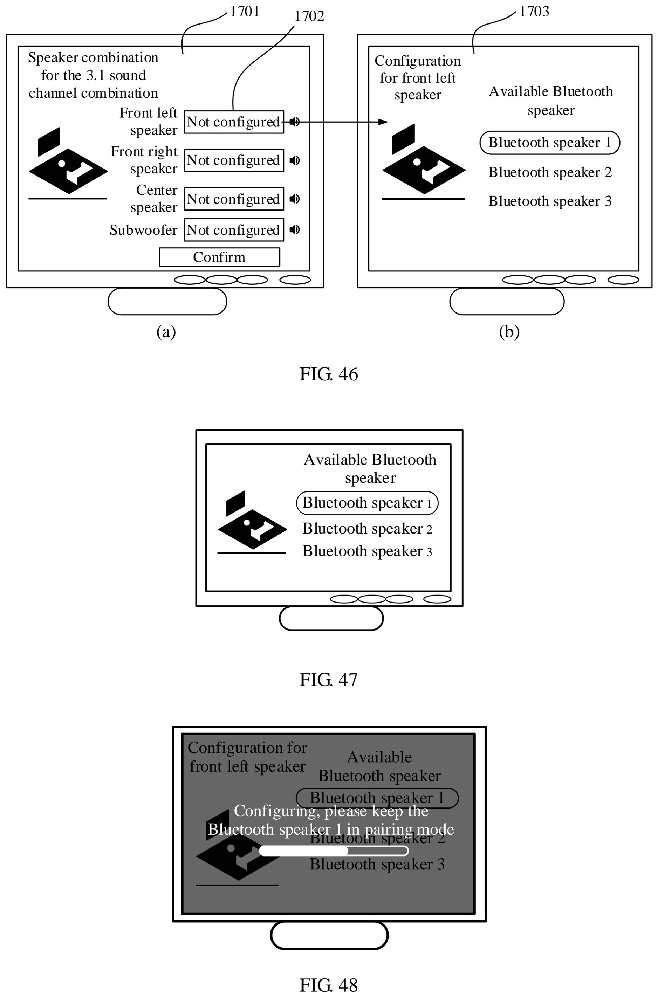

In some embodiments, assume the sound channel information of the audio media resource currently played by the display apparatus indicates a 3.1 sound channel combination. The selectable sound channel combinations displayed in FIG. 44 include: 2.0 sound channel combination, 2.1 sound channel combination, 3.0 sound channel combination, 3.1 sound channel combination, 2.2 sound channel combination, and 4.0 sound channel combination. The 3.1 sound channel combination displayed in FIG. 46 is identical to the sound channel information of the audio media resource, so the 3.1 sound channel combination can be selected for subsequent configuration.

In some embodiments, in response to a user's operation for starting the home speaker application, the interface for audio output mode selection shown in FIG. 45 is first displayed. Only in response to a selection for the "Bluetooth Home Theater" audio output mode in this interface for audio output mode selection, the interface for channel combination selection shown in FIG. 44 can be displayed. In the "Bluetooth Home Theater" audio output mode, multiple audio receiving devices can be configured for the display apparatus to output audio for different sound channels. FIG. 45 is a schematic diagram of an interface for audio output mode selection according to some embodiments.

In some embodiments, after selecting a certain sound channel combination, the speakers for different sound channels in the selected sound channel combination can be configured as different audio receiving devices, as shown in FIG. 44 and FIG. 46 below.

FIG. 46 is a first schematic diagram of a setup interface for configuring a speaker combination according to some embodiments. After selecting the 3.1 sound channel combination in the interface for channel combination selection shown in FIG. 16, interface 1701 shown in FIG. 46 (a) can be displayed. This interface 1701 is the setup interface for speaker combination for the 3.1 sound channel combination, and can show the speaker combination to be configured corresponding to this 3.1 sound channel combination, including a front left speaker, front right speaker, center speaker, and subwoofer. The front left speaker in this speaker combination corresponds to the front left channel in the 3.1 sound channel combination, the front right speaker corresponds to the front right channel, the center speaker corresponds to the center channel, and the subwoofer corresponds to the LFE channel. As shown in FIG. 46 (a), after the television can receive a user's trigger operation on the setup control 1702 for the front left speaker, it can trigger the television to determine one or more audio receiving devices to be connected via Bluetooth scanning (i.e., execute step 1401 above) and display the setup interface 1703 for the front left speaker shown in FIG. 46 (b). This front left speaker setup interface 1703 can display the identifiers of the audio receiving devices to be connected: "Bluetooth Speaker 1", "Bluetooth Speaker 2", and "Bluetooth Speaker 3".

In some embodiments, after selecting a certain sound channel combination, the audio receiving devices discovered by the display apparatus via its Bluetooth scanning function can be determined first. Then, the display apparatus can select different audio receiving devices from the discovered ones to configure as speakers for different sound channels, as shown in FIGS. 47, 48, and 49.

FIG. 47 is a schematic diagram of an interface for scanning audio receiving devices according to some embodiments. After selecting the 3.1 sound channel combination in the interface for channel combination selection shown in FIG. 44, the display apparatus can be triggered to perform Bluetooth scanning, pair with nearby Bluetooth devices, and determine the scanned Bluetooth devices as available Bluetooth speakers. The interface shown in FIG. 47 can be displayed, showing the device identifiers corresponding to the available Bluetooth speakers: "Bluetooth Speaker 1", "Bluetooth Speaker 2", and "Bluetooth Speaker 3".

After selecting the device identifier corresponding to the "Bluetooth Speaker 1" Bluetooth speaker in FIG. 47, the audio receiving device indicated by "Bluetooth Speaker 1" and the display apparatus can perform pairing and connection, and the interface shown in FIG. 48 can be displayed. FIG. 48 is a schematic diagram of a pairing interface according to some embodiments.

It should be noted that, in response to a user's operation for starting the home speaker application, the display apparatus can first determine if this is the first time performing speaker configuration (i.e., configuring speakers for the display apparatus for the first time). If it is the first time, it can trigger the display of the interface for channel combination selection shown in FIG. 44 for subsequent configuration operations. If it is not the first time, the configuration information from the previous speaker configuration can be displayed first, allowing the user to decide whether to reconfigure.

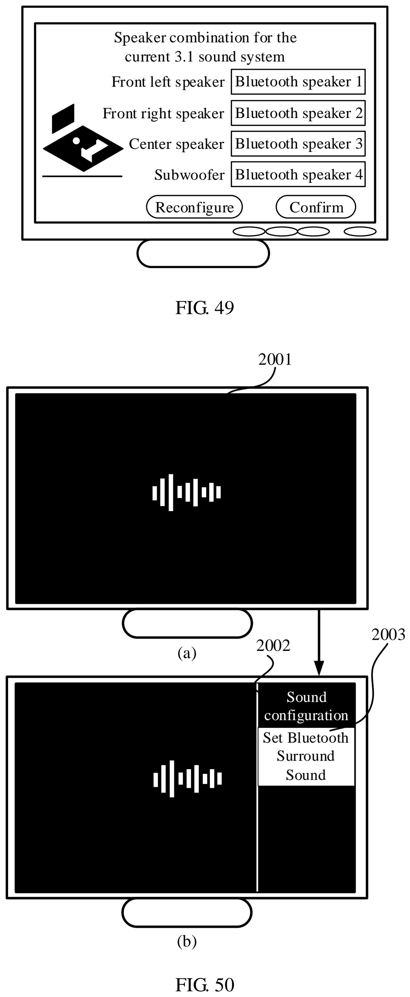

FIG. 49 is a schematic diagram of an interface showing configuration information after speaker configuration has been performed according to some embodiments. In response to a user's operation for starting the home speaker application, for cases where it is not the first configuration, the interface shown in FIG. 49 can be triggered to display. It can be seen that the interface shown in FIG. 49 can show the identifiers of the Bluetooth speakers currently configured by the display apparatus for the speakers corresponding to each sound channel. The front left speaker corresponding to the front left channel can be configured as the audio receiving device indicated by "Bluetooth Speaker 1"; the front right speaker corresponding to the front right channel can be configured as the audio receiving device indicated by "Bluetooth Speaker 2"; the center speaker corresponding to the center channel can be configured as the audio receiving device indicated by "Bluetooth Speaker 3"; the subwoofer corresponding to the LFE channel can be configured as the audio receiving device indicated by "Bluetooth Speaker 4". Furthermore, the interface also can show a "Reconfigure" control for triggering modification of the speaker configuration, and a "Confirm" control for triggering confirmation to use the currently saved speaker configuration.

In some embodiments, during the process of determining several audio receiving devices to be connected via Bluetooth scanning, the display apparatus can first enable the Bluetooth scanning function to scan for Bluetooth devices near the display apparatus. After the display apparatus can receive broadcast information sent by a Bluetooth device, it can determine the Bluetooth device that sent this broadcast information as an audio receiving device to be connected. This broadcast information can include the identifier of the Bluetooth device.

In the above embodiment, all Bluetooth devices for which the display apparatus can receive broadcast information are determined as audio receiving devices to be connected and can be displayed in the speaker setup interface. For example, the Bluetooth Speaker 1, Bluetooth Speaker 2, and Bluetooth Speaker 3 being displayed in interface 1703 shown in FIG. 46 (b) indicates that the display apparatus can receive broadcast information from these Bluetooth devices. Since BIS audio will need to be sent later based on LE Audio technology, if there is a device(s) not supporting LE Audio technology among Bluetooth Speaker 1, Bluetooth Speaker 2, and Bluetooth Speaker 3, the subsequent audio transmission process will be affected, and BIS identifiers cannot be configured. Therefore, after receiving a user's command to select a certain Bluetooth speaker (e.g., Bluetooth Speaker 1) in interface 1703, an ACL link can first be established with this Bluetooth Speaker 1. Through the ACL link, the type information of Bluetooth Speaker 1 sent by Bluetooth Speaker 1 can be obtained. Based on determining that Bluetooth Speaker 1 is a device that supports LE Audio technology, the Bluetooth Speaker 1 can be determined as an audio receiving device to be connected. The type information of Bluetooth Speaker 1 can be its UUID.

In some embodiments, during the process of determining several audio receiving devices to be connected via Bluetooth scanning, the display apparatus can first enable the Bluetooth scanning function to scan for Bluetooth devices near the display apparatus. After the display apparatus can receive broadcast information sent by a Bluetooth device, it can first obtain the type information of the Bluetooth device from the broadcast information. Based on determining that the device supports LE Audio technology, the Bluetooth device that sent the broadcast information can be determined as an audio receiving device to be connected. The broadcast information can include the identifier of the Bluetooth device and its type information.

The type information of the Bluetooth device can be its UUID. Since the UUIDs supporting Classic Bluetooth technology and LE Audio technology are different, the UUID can be used to identify whether the UUID of the Bluetooth device is of the type that supports LE Audio technology. If the UUID is determined to be of the type supporting LE Audio technology, the Bluetooth device can be considered to be a device that supports LE Audio technology.

The following describes a specific embodiment of the process for triggering the execution of the aforementioned step 1401 when the display apparatus is currently playing audio media resources.

FIG. 50 is a schematic diagram of an audio media resource playback interface according to some embodiments. As shown in FIG. 50, when the display apparatus is playing an audio media resource, the audio playback interface 2001 shown in FIG. 50 (a) can be displayed. After the display apparatus can receive a sound configuration instruction, the sound configuration interface 2002 shown in FIG. 50 (b) can be invoked on top of the audio playback interface. This sound configuration interface 2002 can include a control 2003 for "Set Bluetooth Surround Sound". After the display apparatus can receive a command for selecting control 2003, it can obtain the sound channel information of the audio media resource being played currently and proceed with the selection of a sound channel combination based on this sound channel information.

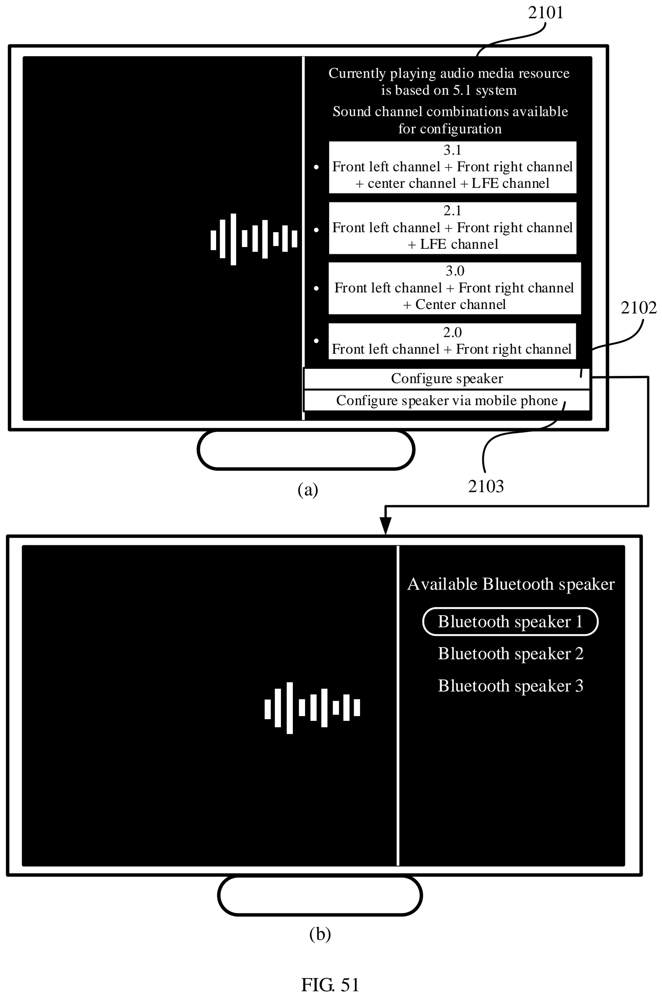

FIG. 51 is a fourth schematic diagram of an interface for sound channel combination selection according to some embodiments. FIG. 51 (a) can show an interface 2101 for sound channel combination selection. This interface can show that the currently playing audio media resource is based on 5.1 sound channel combination, and can show 4 sound channel combinations for the user to choose from for configuration. The 4 sound channel combinations are: 3.1 sound channel combination, 2.1 sound channel combination, 3.0 sound channel combination, and 2.0 sound channel combination.

In some embodiments, in the interface 2101 for channel combination selection shown in FIG. 51 (a), the user can learn the sound channel combination of the currently playing audio media resource and the available sound channel combinations, making it convenient for the user to choose. The display apparatus can then respond to the user's command to select one channel combination from the currently selectable sound channel combinations.

In some embodiments, the display apparatus can automatically select the 3.1 sound channel combination, which has the highest similarity to the 5.1 sound channel combination of the currently playing audio media resource, from the selectable sound channel combinations for configuration.

After a sound channel combination can be selected in the interface 2101 for channel combination selection shown in FIG. 51 (a), and a command for selecting the "Configure Speakers" control 2102 is received, the display apparatus can be triggered to perform Bluetooth scanning, pair with nearby Bluetooth devices, determine the scanned Bluetooth devices as available Bluetooth speakers, and display the interface shown in FIG. 51 (b). This interface can show the device identifiers corresponding to the available Bluetooth speakers: "Bluetooth Speaker 1", "Bluetooth Speaker 2", and "Bluetooth Speaker 3". Here, Bluetooth Speaker 1, Bluetooth Speaker 2, and Bluetooth Speaker 3 are Bluetooth devices scanned by the display apparatus via its Bluetooth scanning function. Furthermore, after the display apparatus can receive an instruction for selecting the device identifier "Bluetooth Speaker 1" on the interface shown in FIG. 51 (b), the display apparatus can establish an ACL link with the audio receiving device indicated by "Bluetooth Speaker 1" and further configure the BIS identifier for the corresponding sound channel and the volume of this audio receiving device via the ACL link.

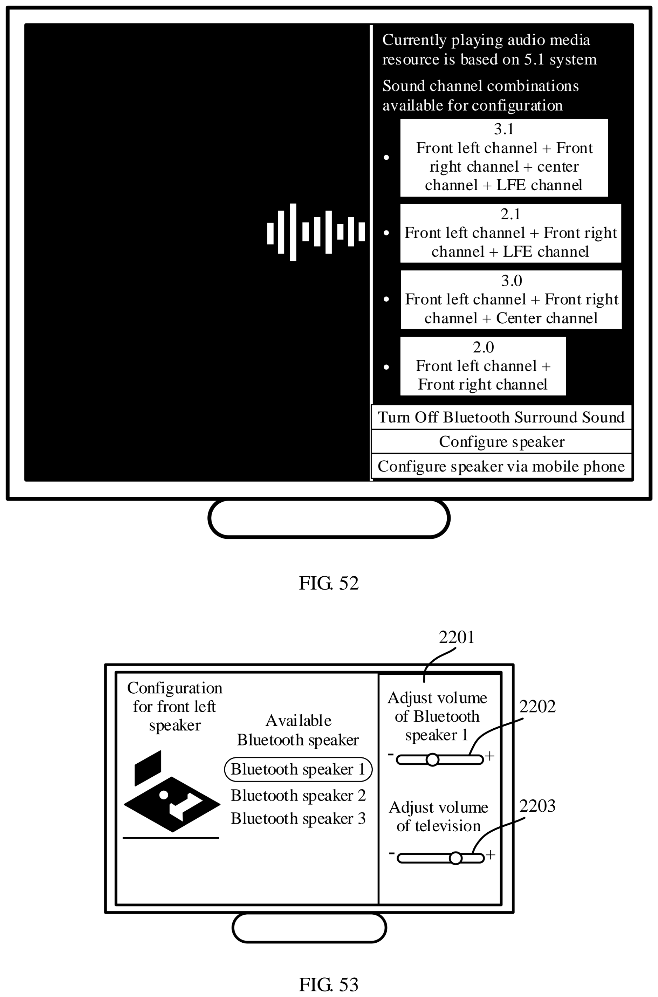

In some embodiments, in the sound configuration interface 2002 shown in FIG. 50, if an instruction for selecting the "Set Bluetooth Surround Sound" control 2003 is received, the display apparatus can first determine whether the audio output mode has already been configured as Bluetooth surround sound mode when playing the current audio media resource, i.e., whether different speakers have already been configured for different sound channels. Based on determining that the Bluetooth surround sound mode has been configured, the interface shown in FIG. 52 can be displayed. FIG. 52 is a fifth schematic diagram of another interface for sound channel combination selection according to some embodiments. As shown in FIG. 52, this interface may show that the currently configured sound channel combination is the 3.1 sound channel combination and show a "Turn Off Bluetooth Surround Sound" control. In response to a selection on the "Turn Off Bluetooth Surround Sound" control, the audio output mode can be switched to the normal output mode, i.e., the display apparatus's own speakers for output.

1402: the display apparatus can establish ACL links with a plurality of audio receiving devices.

1403: the display apparatus can send the configured BIS identifier to each audio receiving device among the plurality of audio receiving devices via the ACL link based on the sound channel information to be configured.

Different audio receiving devices correspond to different BIS identifiers. Different BIS identifiers can be used to indicate BIS audio corresponding to different sound channels.

The display apparatus can send the configured BIS identifier to the audio receiving device via the ACL link so that later, when broadcasting a plurality of BIS audio streams, after the audio receiving device can receive the plurality of BIS audio streams, the audio receiving device can select the BIS audio corresponding to the sound channel it is supposed to play based on the configured BIS identifier.

In some embodiments, the display apparatus sending the configured BIS identifier to each audio receiving device among the plurality of audio receiving devices via the ACL link based on the sound channel information to be configured can include: the display apparatus configures the BIS identifier based on the sound channel information to be configured, and the display apparatus can send the configured BIS identifier to each audio receiving device among the plurality of audio receiving devices via the ACL link.

In some embodiments, after configuring the BIS identifier based on the sound channel information to be configured, the display apparatus can directly send the configured BIS identifier to each audio receiving device among the plurality of audio receiving devices via the ACL link.

In other embodiments, after configuring the BIS identifier based on the sound channel information to be configured, the display apparatus can first activate its built-in Broadcast Assistant Function (i.e., the aforementioned BASS) to scan for broadcast sources. After scanning for a BIS broadcast stream that matches the configured BIS identifier, the display apparatus can send the configured BIS identifier to each audio receiving device among the plurality of audio receiving devices via the ACL link.

The display apparatus can broadcast preset audio. During the broadcasting process, it executes the aforementioned activation of the built-in broadcast assistant function to scan its own broadcast preset audio source to determine if a BIS broadcast stream matching the configured BIS identifier exists.

1404: the display apparatus configures the volume of the plurality of audio receiving devices via the ACL link.

The display apparatus can send the volume parameter configured for each audio receiving device to the corresponding audio receiving device via the ACL link, so that each audio receiving device can adjust its own volume after receiving the volume parameter.

The volume parameter can be default configured parameter or user-configured parameter.

In some embodiments, the display apparatus can establish ACL links with each of the plurality of audio receiving devices sequentially. After the display apparatus can establish an ACL link with one audio receiving device, it configures the volume of the audio receiving device can send the configured BIS identifier to the audio receiving device while the ACL link is maintained. After the configuration of this audio receiving device is finished, the ACL link is disconnected, and the process continues by establishing an ACL link with the next audio receiving device for volume and BIS identifier configuration.

In the embodiments, before sequentially establishing ACL links with each of the plurality of audio receiving devices for volume configuration and BIS identifier configuration, considerations can be made based on the occupancy status of the display apparatus's Bluetooth links and/or the number of ACL links the Bluetooth protocol stack supports simultaneously, to decide whether to use this sequential ACL link establishment method for configuration. The ACL links established for volume configuration and BIS identifier configuration in the embodiments can all be ACL links established based on LE Audio.

In some embodiments, if the occupancy status of the display apparatus's Bluetooth links indicates that there is currently one idle Bluetooth link, then this sequential ACL link establishment method can be used for configuration. Otherwise, the method of the display apparatus simultaneously establishing ACL links with multiple audio receiving devices can be used for configuration.

In some embodiments, if the occupancy status of the display apparatus's Bluetooth links indicates that the current Bluetooth links are occupied by other ACL links established based on Classic Bluetooth, the ACL links based on Classic Bluetooth can be disconnected, establishing ACL links based on LE Audio can be given a priority in the allocation of Bluetooth links, and volume and BIS identifier configuration can be performed. If, after disconnecting the ACL links based on Classic Bluetooth, there is only 1 idle Bluetooth link, then this sequential ACL link establishment method can be used for configuration. Otherwise, the method of the display apparatus simultaneously establishing ACL links with multiple audio receiving devices can be used for configuration.

In some embodiments, if the Bluetooth protocol stack supports establishing only 1 ACL link simultaneously, this sequential ACL link establishment method can be used for configuration. Otherwise, the method of the display apparatus simultaneously establishing ACL links with the plurality of audio receiving devices can be used for configuration.

In some embodiments, if the Bluetooth protocol stack supports establishing a plurality of ACL links simultaneously, the number of ACL links the Bluetooth protocol stack supports simultaneously can be compared with the number of ACL links already established to determine the current remaining number of ACL links that can be established. If the current remaining number of ACL links that can be established is 1, this sequential ACL link establishment method can be used for configuration. Otherwise, the method of the display apparatus simultaneously establishing ACL links with the plurality of audio receiving devices can be used for configuration.

In some embodiments, after the display apparatus can receive an instruction for selecting "Bluetooth Speaker 1" in the front left speaker setup interface 1703 shown in FIG. 46 (b), the display apparatus can establish an ACL link with the audio receiving device indicated by "Bluetooth Speaker 1". Furthermore, since the front left speaker setup interface 1703 shown in FIG. 46 (b) is for setting the speaker for the front left channel, after receiving the instruction for selecting "Bluetooth Speaker 1", the audio receiving device indicated by "Bluetooth Speaker 1" can be configured as the speaker corresponding to the front left channel. After the display apparatus can establish an ACL link with the audio receiving device indicated by "Bluetooth Speaker 1", the display apparatus can send the BIS identifier indicating the front left channel to the audio receiving device indicated by "Bluetooth Speaker 1" via the ACL link.

FIG. 53 is a schematic diagram of a volume adjustment interface according to some embodiments. After the display apparatus can receive an instruction for selecting "Bluetooth Speaker 1" in the front left speaker setup interface 1703 shown in FIG. 46 (b), it can trigger the display of the interface 2201 for volume adjustment shown in FIG. 53. This interface for volume adjustment can include a volume adjustment control 2202 for the audio receiving device indicated by "Bluetooth Speaker 1" and a volume adjustment control 2203 for television volume adjustment (the display apparatus is a television). The display apparatus can control the volume adjustment control 2202 based on the received volume adjustment command, obtain the corresponding volume parameters and send the volume parameters to the audio receiving device indicated by "Bluetooth Speaker 1" via the ACL link. The display apparatus can control the volume adjustment control 2203 based on the received volume adjustment command and obtain its own volume parameters to adjust the volume of the display apparatus itself.

The aforementioned volume adjustment commands can all be input by the user. During the process of controlling volume adjustment control 2202 and volume adjustment control 2203 based on the received volume adjustment commands, preset audio can be played. This allows the user to know the volume adjustment effect based on the preset audio during the volume adjustment process, making it easier to adjust the volume with suitable parameters. Furthermore, after the volume adjustment is finished, the settings for the front left speaker of the front left channel can be saved. The setup interface for a next speaker can then be entered to continue setting the speaker for the next sound channel.

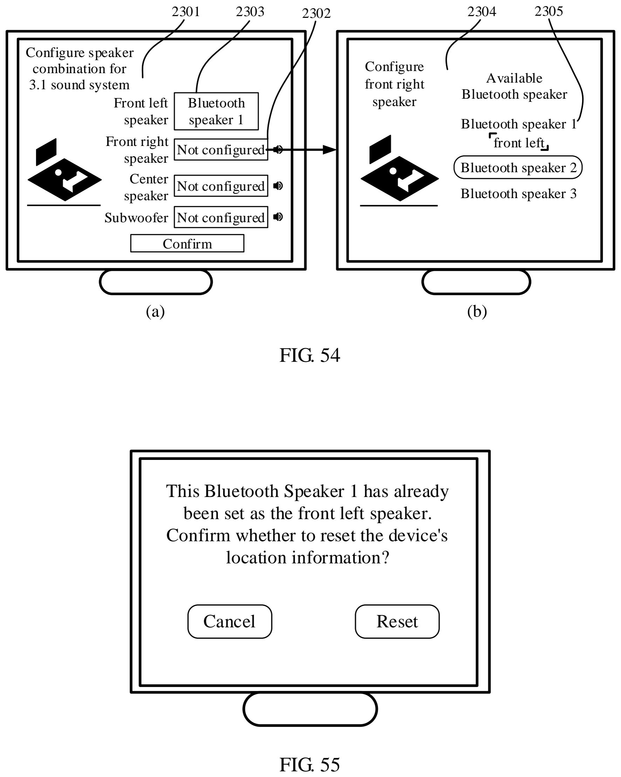

FIG. 54 is a second schematic diagram of a setup interface for configuring a speaker combination according to some embodiments. After the front left speaker configuration is finished, interface 2301 shown in FIG. 54 (a) can be displayed. This interface 2301 can show the current configuration status information 2303 of the front left speaker as "Bluetooth Speaker 1", indicating that the front left speaker is the audio receiving device indicated by "Bluetooth Speaker 1". As shown in FIG. 54 (a), in response to a trigger operation on the setup control 2302 for the front right speaker in this interface 2301, the display apparatus can determine one or more audio receiving devices to be connected via Bluetooth scanning (i.e., execute step 1401 above) and display the front right speaker setup interface 2304 shown in FIG. 54 (b). This front right speaker setup interface 2304 can show the identifiers of the audio receiving devices to be connected: "Bluetooth Speaker 1", "Bluetooth Speaker 2", and "Bluetooth Speaker 3". For "Bluetooth Speaker 1", which has already been configured as the front left speaker, identifier information 2305 "Front Left" can be displayed to indicate that "Bluetooth Speaker 1" has already been configured as the front left speaker.

In some embodiments, if an audio receiving device that has already been configured for another sound channel can be selected when configuring a speaker for a certain channel, the display apparatus can output a prompt message to indicate that this audio receiving device has already been configured for another sound channel and ask the user whether to change it. This can improve human-computer interaction performance.

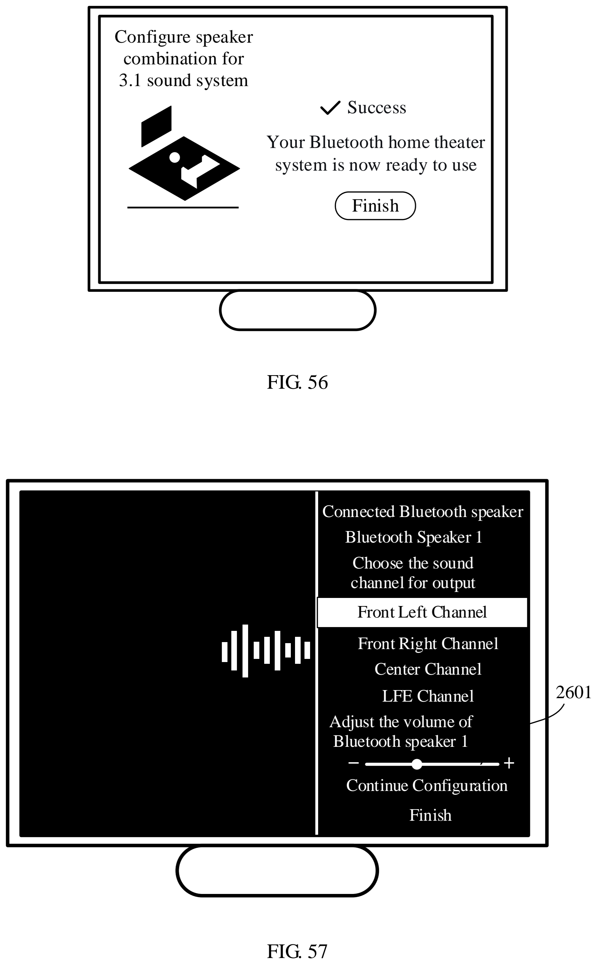

FIG. 55 is a schematic diagram of an interface for outputting a prompt message according to some embodiments. In the front right speaker setup interface 2304 shown in FIG. 54 (b), if the display apparatus can receive an instruction for selecting "Bluetooth Speaker 1", since the audio receiving device indicated by "Bluetooth Speaker 1" was previously configured as the front left speaker and is now to be configured as the front right speaker, the display apparatus can display the interface shown in FIG. 55. The prompt message in the interface, "This Bluetooth Speaker 1 has already been set as the front left speaker. Confirm whether to reset the device's location information?" is shown to alert the user. Based on the user's selection of the "Cancel" or "Reset" control, it is further confirmed whether to configure the audio receiving device indicated by "Bluetooth Speaker 1" as the front right speaker. If an instruction for selecting the "Reset" control is received, the audio receiving device indicated by "Bluetooth Speaker 1" is re-configured as the front right speaker. If an instruction for selecting the "Cancel" control is received, the front right speaker setup interface 2304 shown in FIG. 54 (b) can be shown to reselect an audio receiving device to be configured as the front right speaker. After the speakers for each sound channel are configured, the interface showing setup success shown in FIG. 56 can be displayed. FIG. 56 is a schematic diagram of an interface showing setup success according to some embodiments. This interface showing setup success shown in FIG. 56 can display a prompt message to inform the user that the speakers for all sound channels have been configured. After the display apparatus can receive an instruction for selecting the "Finish" control, it can save the current configuration and trigger the Bluetooth home theater function to start broadcasting the plurality of BIS streams.

In some embodiments, in the interface shown in FIG. 21 (b), if an instruction for selecting "Bluetooth Speaker 1" is received, the display apparatus can establish an ACL link with the audio receiving device indicated by "Bluetooth Speaker 1" and further proceed with channel and volume configuration.

FIG. 57 is a schematic diagram of an interface for channel and volume configuration according to some embodiments. As shown in FIG. 57, for the connected Bluetooth speaker "Bluetooth Speaker 1", one sound channel can be selected from "Front Left Channel", "Front Right Channel", "Center Channel", and "LFE Channel" for configuration. The volume of the connected Bluetooth speaker "Bluetooth Speaker 1" can be adjusted using the volume adjustment control 2601 for Bluetooth speaker 1 shown in FIG. 57. The adjusted volume parameters can be sent to the audio receiving device indicated by "Bluetooth Speaker 1" for volume configuration.

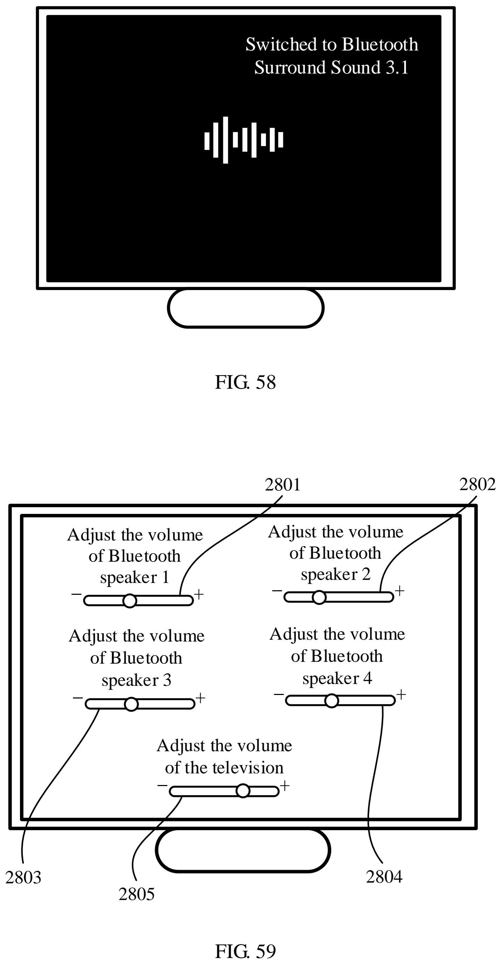

After configuring the volume and sound channel for "Bluetooth Speaker 1" in the interface for configuration shown in FIG. 57, an instruction for selecting the "Continue Configuration" control in this interface for configuration can be received to trigger configuration for the next connected Bluetooth speaker. After finishing the configuration of speakers for all sound channels, an instruction for selecting the "Finish" control in the interface for configuration can be received to end all configurations. After completing all configurations, the interface shown in FIG. 58 can be displayed. FIG. 58 is a schematic diagram of an interface showing configuration completion according to some embodiments. As shown in FIG. 58, "Switched to Bluetooth Surround Sound 3.1" can be displayed to prompt the user that the current mode for playing audio media resources is the 3.1 sound channel combination.

In the above implementation, the display apparatus sequentially can establish ACL links with one audio receiving device at a time. During the establishment of the ACL link, that one audio receiving device can be configured. After the configuration is complete, the display apparatus can disconnect the ACL link with that audio receiving device and continues to establish an ACL link with the next audio receiving device to continue configuration until speakers are configured for all sound channels. This method of sequentially establishing ACL links for configuration takes into account the limited Bluetooth links supporting ACL links in current display apparatuses. Establishing one ACL link at a time for configuration can save Bluetooth links supporting ACL links during the configuration process, preventing the Bluetooth link in the display apparatus that support ACL link from being occupied by one audio receiving device for a long time.

In some embodiments, the display apparatus can simultaneously establish ACL links with a plurality of audio receiving devices and simultaneously configure the BIS identifiers corresponding to different sound channels and perform volume configuration for the plurality of audio receiving devices.

In some embodiments, taking the example of configuring the audio receiving device indicated by "Bluetooth Speaker 1" as the front left speaker, the audio receiving device indicated by "Bluetooth Speaker 2" as the front right speaker, the audio receiving device indicated by "Bluetooth Speaker 3" as the center speaker, and the audio receiving device indicated by "Bluetooth Speaker 4" as the subwoofer, when performing volume configuration, the display apparatus can obtain the current volume parameters of the 4 audio receiving devices and display them in the same interface. This allows the display apparatus to adjust the volume of the display apparatus itself and the 4 audio receiving devices in this interface by receiving user volume adjustment commands on this interface.

FIG. 59 is a schematic diagram of an interface for volume adjustment according to some embodiments. As shown in FIG. 59, this interface for volume adjustment can show: a volume adjustment control 2801 for the audio receiving device indicated by "Bluetooth Speaker 1", a volume adjustment control 2802 for the audio receiving device indicated by "Bluetooth Speaker 2", a volume adjustment control 2803 for the audio receiving device indicated by "Bluetooth Speaker 3", a volume adjustment control 2804 for the audio receiving device indicated by "Bluetooth Speaker 4", and a volume adjustment control 2805 for television' volume adjustment (the display apparatus is a television). The volume of each audio receiving device and/or the display apparatus can be adjusted separately through control commands for different volume adjustment can control.

1405: the audio receiving device can save the BIS identifier.

In the embodiments, each audio receiving device can receive the BIS identifier corresponding to a certain sound channel sent by the display apparatus via the ACL link and can save this BIS identifier.

In some embodiments, taking the example where the display apparatus configures 4 audio receiving devices as speakers for 4 sound channels, the 4 audio receiving devices are labeled as: Bluetooth Speaker 1, Bluetooth Speaker 2, Bluetooth Speaker 3, and Bluetooth Speaker 4. Bluetooth Speaker 1 can be configured as the front left speaker, and accordingly, the display apparatus can send the BIS identifier BIS-A to Bluetooth Speaker 1, and Bluetooth Speaker 1 can save this BIS-A. Bluetooth Speaker 2 can be configured as the front right speaker, and accordingly, the display apparatus can send the BIS identifier BIS-B to Bluetooth Speaker 2, and Bluetooth Speaker 2 can save this BIS-B. Bluetooth Speaker 3 can be configured as the center speaker, and accordingly, the display apparatus can send the BIS identifier BIS-C to Bluetooth Speaker 3, and Bluetooth Speaker 3 can save this BIS-C. Bluetooth Speaker 4 can be configured as the subwoofer, and accordingly, the display apparatus can send the BIS identifier BIS-D to Bluetooth Speaker 4, and Bluetooth Speaker 3 can save this BIS-D.

1406: the display apparatus can broadcast the plurality of BIS streams.

Each BIS stream can include BIS audio data and the BIS identifier corresponding to the BIS audio stream.

In the embodiments, in the scheme shown in FIG. 42, the display apparatus first configuring the audio receiving devices and then broadcasting the plurality of BIS streams is described. It should be noted that the display apparatus can broadcast the plurality of BIS streams before configuring the audio receiving devices.

In some embodiments, the BIS audio in each BIS stream can include audio for a single sound channel or audio for a plurality of sound channels.

1407: the audio receiving device can receive the plurality of BIS streams.

After the display apparatus sends the configured BIS identifier to each audio receiving device among the plurality of audio receiving devices via the ACL link, it can broadcast the plurality of BIS streams. Each BIS stream can include BIS audio data and the BIS identifier corresponding to the BIS audio stream, enabling the plurality of audio receiving devices to obtain the target BIS audio stream from the plurality of BIS streams. The BIS identifier corresponding to the target BIS audio stream matches the configured BIS identifier.

In the embodiments, while broadcasting the plurality of BIS streams, public broadcasting can be used, or encrypted broadcasting can be used. Using encrypted broadcasting to broadcast the plurality of BIS streams requires encrypting the plurality of BIS streams. Authorized devices can obtain the decryption key to correctly decrypt the broadcast information, while unauthorized devices cannot obtain the decryption key. Even if they intercept the broadcast data, they cannot obtain the correct information. This ensures information security.

1408: the audio receiving device can obtain the target BIS audio stream from the multiple BIS audio streams.

The BIS identifier corresponding to the target BIS audio stream matches the configured BIS identifier.

In some embodiments, the display apparatus can broadcast audio data. This audio data can include BIS audio for 4 sound channels: BIS audio for the front left channel with the corresponding BIS identifier BIS-A; BIS audio for the front right channel with the corresponding BIS identifier BIS-B; BIS audio for the center channel with the corresponding BIS identifier BIS-C; and BIS audio for the LFE channel with the corresponding BIS identifier BIS-D. Accordingly, after Bluetooth Speaker 1, Bluetooth Speaker 2, Bluetooth Speaker 3, and Bluetooth Speaker 4 receive the audio data, they can match it with the saved BIS identifier and select the target BIS audio from it. In some embodiments, taking Bluetooth Speaker 1 saving BIS identifier BIS-A, Bluetooth Speaker 2 saving BIS identifier BIS-B, Bluetooth Speaker 3 saving BIS identifier BIS-C, and Bluetooth Speaker 4 saving BIS identifier BIS-D as an example, Bluetooth Speaker 1 can determine the BIS audio for the front left channel as the target BIS audio; Bluetooth Speaker 2 can determine the BIS audio for the front right channel as the target BIS audio; Bluetooth Speaker 3 can determine the BIS audio for the center channel as the target BIS audio; Bluetooth Speaker 4 can determine the BIS audio for the LFE channel as the target BIS audio.

1409: the audio receiving device plays the target BIS audio.

In the embodiments, each audio receiving device can play the BIS audio corresponding to its channel, thereby achieving stereo playback effect, i.e., the playback effect of a Bluetooth home theater.

In the above process, the display apparatus can obtain the sound channel information to be configured, determine several audio receiving devices to be connected via Bluetooth scanning, establish ACL links with a plurality of audio receiving devices among them, and after establishing the ACL links, configure a BIS identifier for each audio receiving device among the plurality of audio receiving devices based on the sound channel information to be configured, and send the configured BIS identifier to each audio receiving device among the plurality of audio receiving devices via the ACL link. The plurality of audio receiving devices are some or all of the several audio receiving devices. After the configuration is complete, the display apparatus can broadcast the plurality of BIS streams. Each BIS stream can include BIS audio data and the BIS identifier corresponding to the BIS audio stream, enabling the plurality of audio receiving devices to obtain the target BIS audio stream from the multiple BIS streams. The BIS identifier corresponding to the target BIS audio stream matches the configured BIS identifier. Based on this scheme, the display apparatus configures speakers for different sound channels (i.e., audio receiving devices corresponding to different sound channels) based on ACL links and can simultaneously send Broadcast Isochronous Streams (BIS) for a plurality of sound channels to the plurality of audio receiving devices based on broadcasting. Thus, without occupying the display apparatus's Bluetooth links, audio for a plurality of sound channels can be simultaneously played through the plurality of audio receiving devices, achieving stereo playback effect.

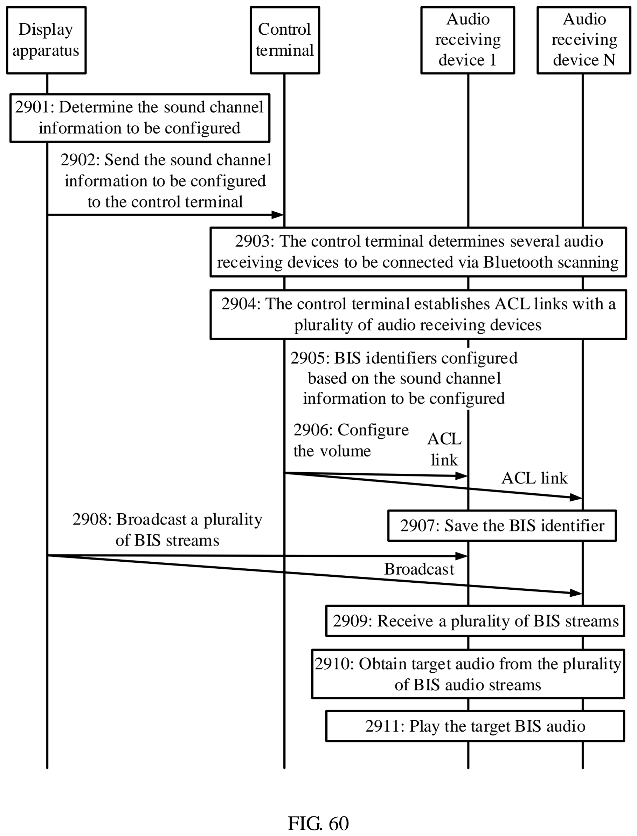

FIG. 60 is an eleventh schematic flowchart of a device control method according to some embodiments. As shown in FIG. 60, the method can be implemented through interaction between the display apparatus, control terminal, and N audio receiving devices. FIG. 60 only can show audio receiving device 1 and audio receiving device N. The audio receiving devices involved in the following steps can be any audio receiving device among these N audio receiving devices. The method may include, but is not limited to, the following steps.

2901: the display apparatus can determine the sound channel information to be configured.

The description for step 2901 can refer to the description for step 1400 above, which will not be repeated here.

2902: the display apparatus can send the sound channel information to be configured to the control terminal.

In the embodiments, the display apparatus can send the sound channel information to be configured to the control terminal, enabling the control terminal, after learning the channel information to be configured, to configure corresponding audio receiving devices as speakers for the respective sound channels for the display apparatus based on the channel information to be configured.

The display apparatus and the control terminal can establish a communication connection in a wireless manner and send the channel information to be configured based on the communication connection.

In some embodiments, the display apparatus and the control terminal can establish a Wireless Fidelity (Wi-Fi) connection through a Wi-Fi network. The display apparatus can send the sound channel information to be configured to the control terminal via the Wi-Fi connection. Alternatively, the display apparatus and the control terminal can establish an ACL link through a Bluetooth network. The display apparatus can send the sound channel information to be configured to the control terminal via the ACL link.

In some embodiments, in the interface shown in FIG. 44, after receiving an instruction for selecting the 3.1 sound channel combination, the display apparatus can determine the sound channel information to be configured. At this point, the display apparatus can be triggered to send the sound channel information to be configured to the control terminal, i.e., send the information of the 3.1 sound channel combination to the control terminal.

In some embodiments, in the interface 2101 shown in FIG. 51 (a), after receiving an instruction for selecting the "Configure Speakers via Phone" control 2103, the display apparatus can determine the sound channel information to be configured. At this point, the display apparatus can be triggered to send the sound channel information to be configured to the control terminal, i.e., send the information of the 3.1 sound channel combination to the control terminal.

2903: the control terminal determines several audio receiving devices to be connected via Bluetooth scanning.

In some embodiments, after the display apparatus sends the sound channel information to be configured to the control terminal, the control terminal can configure corresponding audio receiving devices as speakers for the respective channels for the display apparatus based on this channel information to be configured. In this case, BIS identifier configuration, and further volume configuration can be performed.

In some embodiments, a broadcast assistant application can be set up in the control terminal. This broadcast assistant application can be used to implement the function of configuring corresponding audio receiving devices as speakers for the respective channels for the display apparatus.

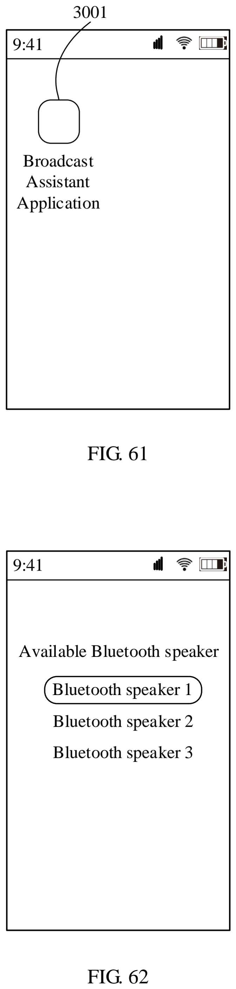

FIG. 61 is a schematic diagram of an interface for triggering the launch of a broadcast assistant application according to some embodiments. As shown in FIG. 61, the application identifier 3001 of the broadcast assistant application can be displayed on the display screen of the control terminal. After receiving a command for selecting this broadcast assistant application's identifier from a user, in response to this selection command, the broadcast assistant function can be enabled for subsequent configuration. After the broadcast assistant function is enabled and the control terminal can receive the sound channel information to be configured sent by the display apparatus, the control terminal can determine several audio receiving devices to be connected via Bluetooth scanning based on this broadcast assistant application.

FIG. 62 is a schematic diagram of a control terminal scanning for available Bluetooth speakers according to some embodiments. As shown in FIG. 62, this interface can display the device identifiers corresponding to the available Bluetooth speakers: "Bluetooth Speaker 1", "Bluetooth Speaker 2", and "Bluetooth Speaker 3". Here, Bluetooth Speaker 1, Bluetooth Speaker 2, and Bluetooth Speaker 3 are Bluetooth devices scanned by the control terminal via its Bluetooth scanning function. Furthermore, after the control terminal can receive an instruction for selecting "Bluetooth Speaker 1", the display apparatus can establish an ACL link with the audio receiving device indicated by "Bluetooth Speaker 1".

2904: the control terminal can establish ACL links with a plurality of audio receiving devices.

2905: the control terminal configures BIS identifiers based on the sound channel information to be configured can send the configured BIS identifiers to each audio receiving device among the plurality of audio receiving devices via the ACL link.

In some embodiments, after configuring the BIS identifiers based on the sound channel information to be configured, the control terminal can directly send the configured BIS identifiers to each audio receiving device among the plurality of audio receiving devices via the ACL link.

In other embodiments, after configuring the BIS identifiers based on the sound channel information to be configured, the control terminal can first activate its built-in Broadcast Assistant Function (i.e., the aforementioned BASS) to scan for broadcast sources. After discovering a BIS broadcast stream(s) matching the configured BIS identifier(s), the control terminal sends the configured BIS identifiers to each audio receiving device among the plurality of audio receiving devices via the ACL link.

After sending the sound channel information to be configured to the control terminal, the display apparatus can broadcast preset audio. During the broadcasting process, the aforementioned activation of the built-in broadcast assistant function is executed to scan for the display apparatus's broadcast preset audio to determine if a BIS broadcast stream matching the configured BIS identifiers exists.

2906: the control terminal configures the volume of the plurality of audio receiving devices via the ACL link.

It should be noted that step 2906 is an optional step. That is, the control terminal can configure the volume of the plurality of audio receiving devices via the ACL link, or it may not perform volume configuration for the plurality of audio receiving devices.

The control terminal configuring the volume of the plurality of audio receiving devices via the ACL link can be implemented as: the control terminal sends the volume parameter configured for each audio receiving device among the plurality of audio receiving devices to the corresponding audio receiving device via the ACL link.

In some embodiments, the control terminal can establish ACL links with each of the plurality of audio receiving devices sequentially. After the control terminal can establish an ACL link with one audio receiving device, it configures the volume of the audio receiving device can send the configured BIS identifier while the ACL link is maintained. After the configuration of this audio receiving device is complete, the ACL link is disconnected, and the process continues by establishing an ACL link with the next audio receiving device for volume and BIS identifier configuration.

By having the control terminal sequentially establish ACL links with one audio receiving device at a time, configure that audio receiving device during the establishment of the ACL link, disconnect the ACL link with that audio receiving device after configuration is complete, and continue establishing an ACL link with the next audio receiving device to continue configuration until speakers for all channels are configured. This method of sequentially establishing ACL links for configuration takes into account the limited Bluetooth links supporting ACL links in current control terminals. Establishing one ACL link at a time for configuration can save Bluetooth links supporting ACL links during the configuration process, preventing the Bluetooth links in the control terminal that support ACL link from being occupied by one audio receiving device for a long time.

In some embodiments, the control terminal can simultaneously establish ACL links with the plurality of audio receiving devices and simultaneously configure the BIS identifiers corresponding to different sound channels and perform volume configuration for the plurality of audio receiving devices.

Different audio receiving devices correspond to different BIS identifiers. Different BIS identifiers can be used to indicate BIS audio corresponding to different sound channels.

The aforementioned control terminal can first determine the BIS identifier corresponding to each channel based on the sound channel information to be configured. The configured BIS identifiers can be sent to the audio receiving devices via the ACL link, so that when broadcasting the plurality of BIS audio streams, after the audio receiving devices receive the plurality of BIS audio streams, they can select the BIS audio corresponding to the sound channel they are supposed to play based on the configured BIS identifiers.

In some embodiments, assume the sound channel information to be configured is for a 3.1 sound channel combination, including: front left channel, front right channel, center channel, and LFE channel. Then, BIS-A can be configured as the BIS identifier for the front left channel; BIS-B can be configured as the BIS identifier for the front right channel; BIS-C can be configured as the BIS identifier for the center channel; and BIS-D can be configured as the BIS identifier for the LFE channel.

In some embodiments, the control terminal can first connect with the Bluetooth speaker and then configure the channel.

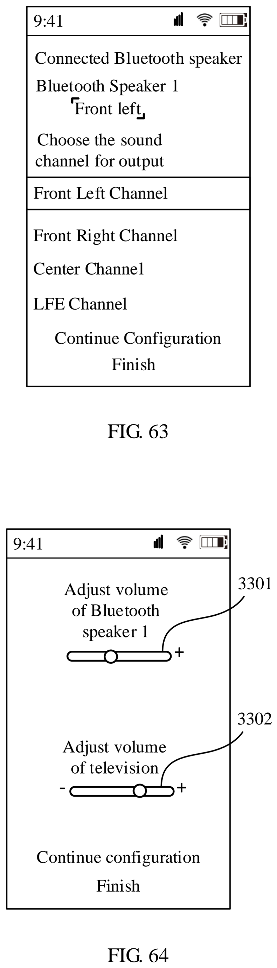

FIG. 63 is a schematic diagram illustrating configuring a sound channel for a connected Bluetooth speaker according to some embodiments. After the control terminal has connected with the audio receiving device indicated by "Bluetooth Speaker 1", it can further select the sound channel that this audio receiving device needs to play audio. As shown in FIG. 63, if the front left channel can be selected, the audio receiving device indicated by "Bluetooth Speaker 1" can be configured as the speaker for the display apparatus's front left channel. At this point, the BIS identifier corresponding to the front left channel can be sent to the audio receiving device indicated by "Bluetooth Speaker 1".

Furthermore, in the interface shown in FIG. 63, after configuring the audio receiving device indicated by "Bluetooth Speaker 1" as the speaker for the display apparatus's front left channel, the "Continue Configuration" control can be used to trigger a return to the interface for connecting other Bluetooth speakers, such as the interface shown in FIG. 62, to further connect other Bluetooth speakers and configure sound channels. After speakers are configured for all sound channels, the "Finish" control in the interface shown in FIG. 63 can be used to trigger saving the configuration.

In some embodiments, if the front left channel can be selected as shown in FIG. 63, it can further trigger the display of the interface shown in FIG. 64. FIG. 64 is a schematic diagram of an interface for volume adjustment via a control terminal according to some embodiments. As shown in FIG. 64, this interface can display a volume adjustment control 3301 corresponding to the audio receiving device indicated by Bluetooth Speaker 1, and a television volume adjustment control 3302 corresponding to the display apparatus (the display apparatus is a television). Adjusting the volume of the audio receiving device indicated by Bluetooth Speaker 1 can be achieved by operating the volume adjustment control 3301, and adjusting the volume of the display apparatus can be achieved by operating the television volume adjustment control 3302.

It should be noted that the schematic diagram of the interface for volume adjustment via the control terminal shown in FIG. 64 is based on the situation where the control terminal sequentially can establish ACL links with the plurality of audio receiving devices. For the situation where the control terminal simultaneously can establish ACL links with the plurality of audio receiving devices and simultaneously performs volume configuration for the plurality of audio receiving devices, the interface for volume adjustment on the control terminal can be similar to FIG. 57 above.

When the control terminal has established ACL links with a plurality of audio receiving devices, it can send the respective volume parameters to the plurality of audio receiving devices via the ACL links. In this case, if the control terminal is connected with the display apparatus via wireless communication, the control terminal can send the configured volume parameters to the display apparatus, thereby achieving volume adjustment for the plurality of audio receiving devices and the display apparatus through the control terminal. Furthermore, a volume setting interface similar to that shown in FIG. 57 can be set up in the control terminal, facilitating volume adjustment for the plurality of audio receiving devices and the display apparatus through the control terminal via operations on a visual interface.

In other embodiments, the control terminal can first configure the sound channel and then select the Bluetooth speaker corresponding to the sound channel.

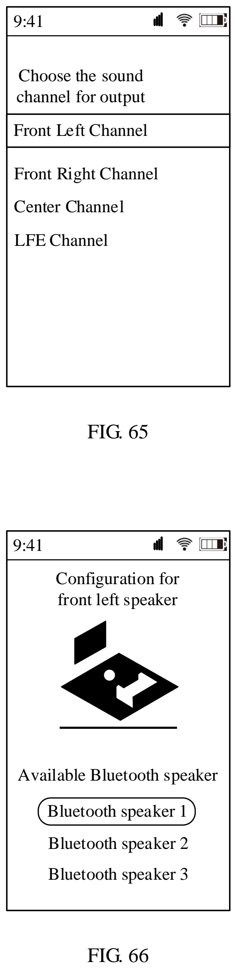

FIG. 65 is a schematic diagram of an interface for sound channel selection according to some embodiments. Before the control terminal performs Bluetooth scanning, it can first display the schematic diagram of the interface for sound channel selection shown in FIG. 65. This interface can show that the sound channels currently for play include: front left channel, front right channel, center channel, and LFE channel.

After the control terminal can receive an instruction for selecting the "Front Left Channel" shown in FIG. 65, the interface shown in FIG. 66 can be displayed. FIG. 66 is a schematic diagram of an interface for setting a front left speaker according to some embodiments. FIG. 66 can show the identifiers of the available Bluetooth speakers scanned by the control terminal via its Bluetooth scanning function, including: "Bluetooth Speaker 1", "Bluetooth Speaker 2", and "Bluetooth Speaker 3". After receiving an instruction for selecting "Bluetooth Speaker 1" shown in FIG. 66, the control terminal can establish an ACL link with the audio receiving device indicated by Bluetooth Speaker 1 and send the BIS identifier corresponding to the front left channel to the audio receiving device indicated by Bluetooth Speaker 1 via this ACL link.

2907: the audio receiving device can save the BIS identifier.

2908: the display apparatus can broadcast multiple BIS streams.

Each BIS stream can include BIS audio data and the BIS identifier corresponding to the BIS audio stream.

After the display apparatus sends the configured BIS identifiers to each audio receiving device among the plurality of audio receiving devices via the ACL link, it can broadcast the plurality of BIS streams. Each BIS stream can include BIS audio data and the BIS identifier corresponding to the BIS audio stream, enabling the plurality of audio receiving devices to obtain the target BIS audio from the plurality of BIS streams. The BIS identifier corresponding to the target BIS audio stream matches the configured BIS identifier.

2909: the audio receiving device can receive the plurality of BIS streams.

2910: the audio receiving device can obtain the target BIS audio from the plurality of BIS audio streams.

The BIS identifier corresponding to the target BIS audio stream matches the configured BIS identifier.

2911: the audio receiving device plays the target BIS audio.

The description for steps 2907 to 2911 can refer to the description for steps 1405 to 1409 above, which will not be repeated here.

Based on the above process, the display apparatus can obtain the sound channel information to be configured and send this channel information to be configured to the control terminal. The control terminal can then configure speakers for different sound channels for the display apparatus (i.e., audio receiving devices corresponding to different sound channels) based on this channel information to be configured. In an embodiment of the disclosure, several audio receiving devices to be connected can be determined via Bluetooth scanning, ACL links can be established with a plurality of audio receiving devices among them. After establishing the ACL links, BIS identifier can be configured for each audio receiving device among the plurality of audio receiving devices based on the sound channel information to be configured. The configured BIS identifiers can be sent to each audio receiving device among the plurality of audio receiving devices via the ACL link. The plurality of audio receiving devices are some or all of the several audio receiving devices. After the control terminal completes the configuration, the display apparatus can broadcast the plurality of BIS streams. Each BIS stream can include BIS audio data and the BIS identifier corresponding to the BIS audio stream, enabling the plurality of audio receiving devices to obtain the target BIS audio from the plurality of BIS streams. The BIS identifier corresponding to the target BIS audio stream matches the configured BIS identifier. Through this scheme, the control terminal can configure speakers for different sound channels for the display apparatus, and the display apparatus can simultaneously send Broadcast Isochronous Streams (BIS) for a plurality of sound channels to a plurality of audio receiving devices based on broadcasting. Thus, without occupying the display apparatus's Bluetooth links, audio for the plurality of sound channels can be simultaneously played through the plurality of audio receiving devices, achieving stereo playback effect.

In some embodiments, the aforementioned BIS identifiers can be configured by the display apparatus based on the sound channel information to be configured and sent to the control terminal. The control terminal, acting as a relay device, then forwards these BIS identifiers to the plurality of audio receiving devices.

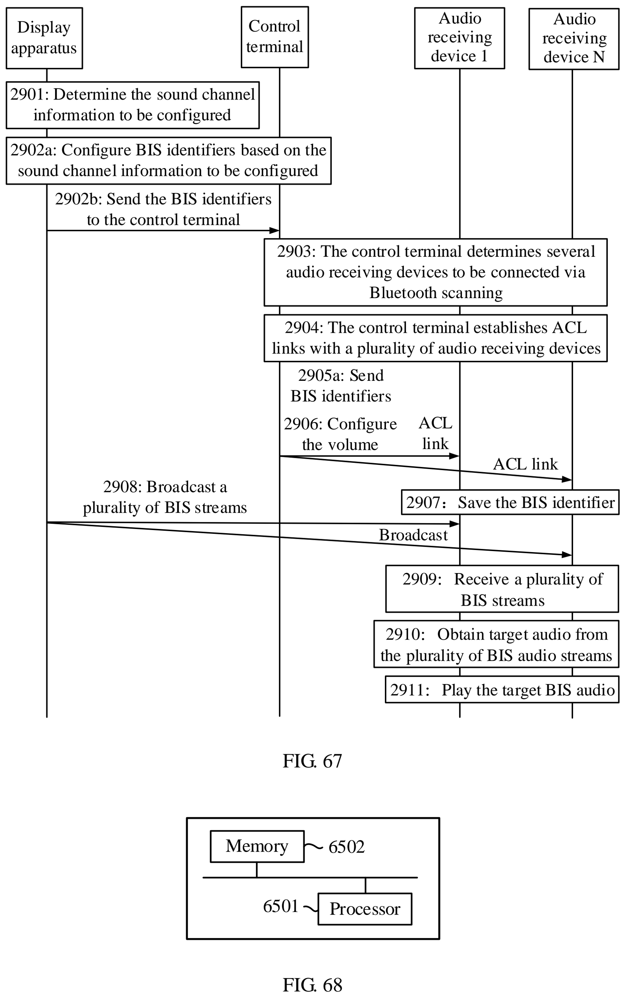

FIG. 67 is a twelfth schematic flowchart of a device control method according to some embodiments. FIG. 67 can be based on FIG. 60 above, replacing step 2902 in FIG. 60 with the following steps 2902a and 2902b.

2902a: the display apparatus configures BIS identifiers based on the sound channel information to be configured.

The method by which the display apparatus configures BIS identifiers based on the sound channel information to be configured is similar to the method by which the control terminal configures BIS identifiers based on the sound channel information to be configured, which will not be repeated here.

2902b: the display apparatus can send the configured BIS identifiers to the control terminal.

The display apparatus and the control terminal can establish a Wi-Fi connection through a Wi-Fi network. The display apparatus can send the configured BIS identifiers to the control terminal via the Wi-Fi connection. Alternatively, the display apparatus and the control terminal can establish an ACL link through a Bluetooth network. The display apparatus can send the configured BIS identifiers to the control terminal via the ACL link.

Correspondingly, in FIG. 67, step 2905 in FIG. 60 can be replaced with the following step 2905a.

2905a: the control terminal sends the BIS identifiers to each audio receiving device among the plurality of audio receiving devices via the ACL link.

The control terminal can receive the BIS identifiers sent by the display apparatus and send these BIS identifiers to different audio receiving devices respectively.

The method where the control terminal acts as a relay device to forward the BIS identifiers sent by the display apparatus can also be used for configuring speakers for different sound channels for the display apparatus through the control terminal. The display apparatus can simultaneously send Broadcast Isochronous Streams (BIS) for the plurality of sound channels to a plurality of audio receiving devices based on broadcasting. Thus, without occupying the display apparatus's Bluetooth links, audio for a plurality of sound channels can be simultaneously played through a plurality of audio receiving devices, achieving stereo playback effect.

FIG. 68 is a schematic diagram of a hardware structure of an electronic device according to some embodiments. This electronic device can be the aforementioned display apparatus, control terminal, or audio receiving device. As shown in FIG. 68, the electronic device can include: a processor 6801, a memory 6802, and a computer program stored on the memory 6802 and executable on the processor 6801. When the computer program is executed by the processor 6801, it implements the various processes of the method embodiments involving the methods.

Embodiments of the disclosure provide a computer-readable storage medium. A computer program is stored on this computer-readable storage medium. When the computer program is executed by a processor, it implements the various processes of the device control method described above and can achieve the same technical effects. To avoid repetition, details are not repeated here. The computer-readable storage medium can be a Read-Only Memory (ROM), Random Access Memory (RAM), magnetic disk, or optical disk, etc.

The disclosure provides a computer program product. This computer program product can include a computer program. When this computer program is run on a computer, it causes the computer to implement the aforementioned device control method.

## Claims

1. A display apparatus, comprising:
a display configured to display images and/or a user input interface;
the user input interface configured to receive a command from a user;
a Bluetooth module configured to perform an operation related to a Bluetooth protocol;
a communicating device configured to communicate with an external device based on a predetermined protocol;
a memory configured to store computer instructions and data associated with the display apparatus; and
at least one processor, connected with the display, the user input interface, the Bluetooth module, the communicating device, and the memory, and configured to execute the computer instructions to cause the display apparatus to perform:
in response to an instruction for selecting target sound channel combination information, initiating a broadcast corresponding to the target sound channel combination information;
determining at least one audio receiving device; wherein the at least one audio receiving device comprises an audio receiving device scanned via the Bluetooth module and/or a connected audio receiving device in a device manager;
determining Broadcast Isochronous Stream, BIS, configuration information corresponding to the target sound channel combination information, based on azimuth information of a target audio receiving device from the at least one audio receiving device and an azimuth information list corresponding to the target sound channel combination information; wherein the BIS configuration information comprises a corresponding relationship between the target audio receiving device and a BIS identifier, and the target audio receiving device is configured to receive BIS audio data broadcast by the display apparatus based on the corresponding BIS identifier.

2. The display apparatus according to claim 1, wherein the at least one processor is further configured to execute the computer instructions to cause the display apparatus to perform:
before initiating the broadcast corresponding to the target sound channel combination information in response to the instruction for selecting the target sound channel combination information, determining whether the Bluetooth module has a Broadcast Media Sender, BMS; based on determining that the Bluetooth module has the BMS, displaying a page for Bluetooth surround sound configuration; wherein the page for Bluetooth surround sound configuration is provided with a switch for Bluetooth surround sound setting;
in response to the instruction for selecting the target sound channel combination information, initiating the broadcast corresponding to the target sound channel combination information, comprises:
based on the switch for Bluetooth surround sound setting is in a turned-on state, in response to the instruction for selecting the target sound channel combination information, initiating the broadcast corresponding to the target sound channel combination information.

3. The display apparatus according to claim 2, wherein the at least one processor is further configured to execute the computer instructions to cause the display apparatus to perform:
before displaying the page for Bluetooth surround sound configuration, determining whether the Bluetooth module is in a Bluetooth audio broadcast state;
based on determining that the Bluetooth module is in the Bluetooth audio broadcast state, controlling the Bluetooth module to cease a Bluetooth broadcast.

4. The display apparatus according to claim 1, wherein the at least one processor is further configured to execute the computer instructions to cause the display apparatus to perform:
in response to the instruction for selecting the target sound channel combination information, initiating the broadcast corresponding to the target sound channel combination information, comprises:
in response to the instruction for selecting the target sound channel combination information, determining whether the target sound channel combination information is consistent with currently set sound channel combination information;
based on determining that the target sound channel combination information is inconsistent with the currently set sound channel combination information, switching a sound channel based on the target sound channel combination information and initiating the broadcast corresponding to the target sound channel combination information.

5. The display apparatus according to claim 1, wherein the at least one processor is further configured to execute the computer instructions to cause the display apparatus to perform:
determining the BIS configuration information corresponding to the target sound channel combination information, comprises:
in response to an instruction for selecting a first target audio receiving device among the at least one audio receiving device, determining whether the first target audio receiving device and the display apparatus are in a Bluetooth Low Energy Audio, LE Audio, connection state;
based on determining that the first target audio receiving device and the display apparatus are in the Bluetooth LE Audio connection state, establishing a Broadcast Assistant, BSA, connection with the first target audio receiving device, and obtaining azimuth information of the first target audio receiving device based on the BSA connection;
determining the BIS configuration information corresponding to the target sound channel combination information, based on the azimuth information of the first target audio receiving device and the azimuth information list corresponding to the target sound channel combination information.

6. The display apparatus according to claim 5, wherein the at least one processor is further configured to execute the computer instructions to cause the display apparatus to perform:
determining the BIS configuration information corresponding to the target sound channel combination information based on the azimuth information of the first target audio receiving device and the azimuth information list corresponding to the target sound channel combination information, comprises:
displaying the azimuth information list corresponding to the target sound channel combination information, and marking azimuth information supported by the first target audio receiving device in the azimuth information list;
determining a BIS identifier corresponding to the first target audio receiving device based on the azimuth information list corresponding to the target sound channel combination information;
determining the BIS configuration information corresponding to the target sound channel combination information based on the BIS identifier corresponding to the first target audio receiving device.

7. The display apparatus according to claim 5, wherein the at least one processor is further configured to execute the computer instructions to cause the display apparatus to perform:
based on determining that the first target audio receiving device and the display apparatus are not in the Bluetooth LE Audio connection state, controlling the Bluetooth module to initiate an LE Audio pairing connection to the first target audio receiving device;
upon determining that the first target audio receiving device and the display apparatus are in the Bluetooth LE Audio connection state, continuing to perform the step of establishing the BSA connection with the first target audio receiving device.

8. The display apparatus according to claim 1, wherein the at least one processor is further configured to execute the computer instructions to cause the display apparatus to perform:
determining whether the BIS configuration information corresponding to the target sound channel combination information is consistent with current BIS configuration information;
based on determining that the BIS configuration information corresponding to the target sound channel combination information is inconsistent with the current BIS configuration information, controlling the Bluetooth module to stop audio data synchronization based on the current BIS configuration information, and initiating audio data synchronization based on the BIS configuration information corresponding to the target sound channel combination information.

9. The display apparatus according to claim 1, wherein the at least one processor is further configured to execute the computer instructions to cause the display apparatus to perform:
the initiating the broadcast corresponding to the target sound channel combination information, comprises:
in response to the instruction for selecting the target sound channel combination information, determining whether the target sound channel combination information is consistent with current sound channel configuration information;
based on determining that the target sound channel combination information is inconsistent with the current sound channel configuration information, re-establishing an audio channel between an audio Hardware Abstraction Layer, HAL, and a Bluetooth protocol stack LE Audio HAL based on the target sound channel combination information, and initiating the broadcast corresponding to the target sound channel combination information based on the audio channel.

10. The display apparatus according to claim 1, wherein the at least one processor is further configured to execute the computer instructions to cause the display apparatus to perform:
in response to an operation for triggering configuration of a target sound channel in a current sound channel combination, determining a target audio channel corresponding to the target sound channel from an established audio channel; wherein the target audio channel is used for communicating channel audio data of the target sound channel, and the established audio channel is an audio channel between an audio module and a Bluetooth protocol stack;
controlling the Bluetooth protocol stack to perform BIS stream configuration for the target audio channel, obtaining a BIS stream corresponding to the target audio channel; wherein the BIS stream is used for broadcasting the channel audio data of the target sound channel corresponding to the target audio channel.

11. The display apparatus according to claim 10, wherein the at least one processor is further configured to execute the computer instructions to cause the display apparatus to perform:
in response to the operation for triggering configuration of the target sound channel in the current sound channel combination, matching azimuth information of the connected audio receiving device with channel information of the target sound channel, and determining an audio receiving device whose azimuth information successfully matches the channel information of the target sound channel as the target audio receiving device; wherein the target audio receiving device supports a Low Energy Audio, LE Audio, protocol;
sending a BIS identifier to the target audio receiving device via an established Broadcast Assistant, BSA, BSA, connection, so that the target audio receiving device synchronizes the channel audio data broadcast in the BIS stream corresponding to the BIS identifier.

12. The display apparatus according to claim 11, wherein the at least one processor is further configured to execute the computer instructions to cause the display apparatus to perform:
in response to the operation for triggering configuration of the target sound channel in the current sound channel combination, matching the azimuth information of the connected audio receiving device with the channel information of the target sound channel, comprises:
in response to the operation for triggering configuration of the target sound channel in the current sound channel combination, controlling the Bluetooth module to scan for an audio receiving device, and establishing a LE Audio connection with at least one scanned audio receiving device;
obtaining the azimuth information of the connected audio receiving device based on the LE Audio connection, and matching the azimuth information of the connected audio receiving device with the channel information of the target sound channel.

13. The display apparatus according to claim 11, wherein the at least one processor is further configured to execute the computer instructions to cause the display apparatus to perform:
in response to the operation for triggering configuration of the target sound channel in the current sound channel combination, matching the azimuth information of the connected audio receiving device with the channel information of the target sound channel, comprises:
in response to the operation for triggering configuration of the target sound channel in the current sound channel combination, determining whether the target sound channel comprises dual sound channels;
based on determining that the target sound channel comprises dual sound channels, determining an audio receiving device supporting dual sound channels from the connected audio receiving device, and matching the azimuth information of the audio receiving device supporting dual sound channels with the channel information of the target sound channel.

14. The display apparatus according to claim 13, wherein the at least one processor is further configured to execute the computer instructions to cause the display apparatus to perform:
before determining the audio receiving device supporting dual sound channels from the connected audio receiving device, obtaining code configuration information of the connected audio receiving device through a service query method; wherein the code configuration information is used to indicate whether a corresponding audio receiving device supports dual sound channels;
determining the audio receiving device supporting dual sound channels from the connected audio receiving device, comprises:
determining the audio receiving device supporting dual sound channels based on the code configuration information of the connected audio receiving device.

15. The display apparatus according to claim 10, wherein the target sound channel comprises dual sound channels, and the target sound channel is used for communicating merged audio data obtained by merging channel audio data of the dual sound channels corresponding to the target sound channel.

16. The display apparatus according to claim 10, wherein the at least one processor is further configured to execute the computer instructions to cause the display apparatus to perform:
in response to the operation for triggering configuration of the target sound channel in the current sound channel combination, determining the target audio channel corresponding to the target sound channel from the established audio channel, comprises:
in response to the operation for triggering configuration of the target sound channel in the current sound channel combination, determining whether an audio channel corresponding to the target sound channel already exists in the established audio channel;
based on that no audio channel corresponding to the target sound channel exists in the established audio channel, determining an idle audio channel from the established audio channel as the target audio channel corresponding to the target sound channel.

17. The display apparatus according to claim 16, wherein the at least one processor is further configured to execute the computer instructions to cause the display apparatus to perform:
before determining the idle audio channel from the established audio channel as the target audio channel corresponding to the target sound channel, determining whether an idle audio channel exists in the established audio channel;
based on determining that no idle audio channel exists in the established audio channel, controlling the Bluetooth protocol stack to establish a target audio channel for the target sound channel.

18. The display apparatus according to claim 10, wherein the at least one processor is further configured to execute the computer instructions to cause the display apparatus to perform:
before determining the target audio channel corresponding to the target sound channel from the established audio channel in response to the operation for triggering configuration of the target sound channel in the current sound channel combination, in response to a selection on the current sound channel combination, controlling the Bluetooth protocol stack to establish the audio channel between the audio module and the Bluetooth protocol stack.

19. The display apparatus according to claim 11, wherein the at least one processor is further configured to execute the computer instructions to cause the display apparatus to perform:
after determining the audio receiving device whose azimuth information successfully matches the channel information of the target sound channel as the target audio receiving device, determining whether the target audio receiving device supports dual sound channels;
based on determining that the target audio receiving device supports dual sound channels, enabling a Coordinated Set Identification Profile, CSIP, protocol connection with the target audio receiving device; wherein the CSIP protocol connection is used to transmit, via a Bluetooth audio output channel, channel audio data of the dual sound channels to the target audio receiving device.

20. The display apparatus according to claim 19, wherein the at least one processor is further configured to execute the computer instructions to cause the display apparatus to perform:
before enabling the CSIP protocol connection with the target audio receiving device based on determining that the target audio receiving device supports dual sound channels, obtaining Universally Unique Identifier, UUID, information of the target audio receiving device through a service query method, and determining a Bluetooth protocol supported by the target audio receiving device based on the UUID information; the UUID information is used to identify the target audio receiving device;
establishing a Bluetooth protocol connection with the target audio receiving device based on the Bluetooth protocol supported by the target audio receiving device; wherein the Bluetooth protocol connection comprises the CSIP protocol connection.

21. The display apparatus according to claim 20, wherein the at least one processor is further configured to execute the computer instructions to cause the display apparatus to perform:
after enabling the CSIP protocol connection with the target audio receiving device, disabling other protocol connection in the Bluetooth protocol connection except for the CSIP protocol connection.

22. The display apparatus according to claim 20, wherein the at least one processor is further configured to execute the computer instructions to cause the display apparatus to perform:
establishing the Bluetooth protocol connection with the target audio receiving device based on the Bluetooth protocol supported by the target audio receiving device, comprises:
establishing at least a Broadcast Media Sender, BMS, protocol connection, a Unicast Media Sender, UMS, protocol connection, the CSIP protocol connection, and a BSA protocol connection with the target audio receiving device simultaneously, based on the Bluetooth protocol supported by the target audio receiving device.

23. The display apparatus according to claim 19, wherein the at least one processor is further configured to execute the computer instructions to cause the display apparatus to perform:
before determining whether the target audio receiving device supports dual sound channels, obtaining code configuration information of the target audio receiving device through a service query method; wherein the code configuration information is used to indicate whether the target audio receiving device supports dual sound channels;
determining whether the target audio receiving device supports dual sound channels, comprises:
determining whether the target audio receiving device supports dual sound channels based on the code configuration information of the target audio receiving device.

24. The display apparatus according to claim 19, wherein the at least one processor is further configured to execute the computer instructions to cause the display apparatus to perform:
based on determining that the target audio receiving device does not support dual sound channels, enabling a BSA protocol connection with the target audio receiving device;
determining the target audio channel corresponding to the target sound channel from the established audio channel; wherein the target audio channel is used for communicating the channel audio data of the target sound channel, and the established audio channel is the audio channel between the audio module and the Bluetooth protocol stack;
controlling the Bluetooth protocol stack to perform BIS stream configuration for the target audio channel, obtaining the BIS stream corresponding to the target audio channel; wherein the BIS stream is used for broadcasting the channel audio data of the target sound channel corresponding to the target audio channel.

25. The display apparatus according to claim 24, wherein the at least one processor is further configured to execute the computer instructions to cause the display apparatus to perform:
sending a BIS identifier to the target audio receiving device via the BSA protocol connection, so that the target audio receiving device synchronizes the channel audio data broadcast in the BIS stream corresponding to the BIS identifier.

26. The display apparatus according to claim 24, wherein the at least one processor is further configured to execute the computer instructions to cause the display apparatus to perform:
before determining the target audio channel corresponding to the target sound channel from the established audio channel, in response to a selection on the current sound channel combination, controlling the Bluetooth protocol stack to establish the audio channel between the audio module and the Bluetooth protocol stack.

27. The display apparatus according to claim 19, wherein the at least one processor is further configured to execute the computer instructions to cause the display apparatus to perform:
in response to the operation for triggering configuration of the target sound channel in the current sound channel combination, matching the azimuth information of the connected audio receiving device with the channel information of the target sound channel, comprises:
in response to the operation for triggering configuration of the target sound channel in the current sound channel combination, controlling the Bluetooth module to scan for an audio receiving device, and establishing a LE Audio connection with at least one scanned audio receiving device;
obtaining the azimuth information of the connected audio receiving device based on the LE Audio connection, and matching the azimuth information of the connected audio receiving device with the channel information of the target sound channel.

28. The display apparatus according to any one of claims 1 to 27, wherein the at least one processor is further configured to execute the computer instructions to cause the display apparatus to perform:
obtaining sound channel information to be configured; controlling the Bluetooth module to determine several audio receiving devices to be connected via Bluetooth scanning;
controlling the Bluetooth module to establish Asynchronous Connection-Less, ACL, links with a plurality of audio receiving devices; configuring a BIS identifier for each audio receiving device among the plurality of audio receiving devices based on the sound channel information to be configured, and transmitting the configured BIS identifier to each audio receiving device among the plurality of audio receiving devices via the ACL link, wherein the plurality of audio receiving devices are part or all of the several audio receiving devices;
controlling the Bluetooth module to broadcast a plurality of BIS streams, each BIS stream comprising BIS audio data and a BIS identifier corresponding to the BIS audio stream, to allow the plurality of audio receiving devices to obtain target BIS audio from the plurality of BIS streams, wherein a BIS identifier corresponding to the target BIS audio matches the configured BIS identifier.

29. The display apparatus according to claim 28, wherein the at least one processor is further configured to execute the computer instructions to cause the display apparatus to perform:
transmitting, via the ACL link, a volume parameter to each audio receiving device among the plurality of audio receiving devices.

30. The display apparatus according to claim 28, wherein the at least one processor is further configured to execute the computer instructions to cause the display apparatus to perform:
after determining the several audio receiving devices to be connected via Bluetooth scanning and before controlling the Bluetooth module to establish ACL links with the plurality of audio receiving devices, determining the plurality of audio receiving devices that support Bluetooth Low Energy from the several audio receiving devices.

31. The display apparatus according to claim 30, wherein the at least one processor is further configured to execute the computer instructions to cause the display apparatus to perform:
determining the plurality of audio receiving devices that support Bluetooth Low Energy from the several audio receiving devices, comprises:
obtaining a UUID corresponding to each audio receiving device among the several audio receiving devices;
selecting, from the several audio receiving devices, the plurality of audio receiving devices, wherein the UUID corresponding to each of the plurality of audio receiving devices indicates that a device type supports Bluetooth Low Energy.

32. The display apparatus according to claim 28, wherein the at least one processor is further configured to execute the computer instructions to cause the display apparatus to perform:
the obtaining the sound channel information to be configured comprises:
obtaining channel information of an audio media resource being played currently;
determining, from channel information supported by the display apparatus, the sound channel information to be configured that matches the channel information of the audio media resource.

33. The display apparatus according to claim 28, wherein the at least one processor is further configured to execute the computer instructions to cause the display apparatus to perform:
the obtaining the sound channel information to be configured comprises:
receiving an instruction for selecting a sound channel combination;
in response to the instruction for selecting the sound channel combination, obtaining the sound channel information to be configured.

34. A device control method, comprising:
in response to an instruction for selecting target sound channel combination information, initiating a broadcast corresponding to the target sound channel combination information;
determining at least one audio receiving device; wherein the at least one audio receiving device comprises an audio receiving device scanned via a Bluetooth module and/or a connected audio receiving device in a device manager;
determining Broadcast Isochronous Stream, BIS, configuration information corresponding to the target sound channel combination information, based on azimuth information of a target audio receiving device from the at least one audio receiving device and an azimuth information list corresponding to the target sound channel combination information; wherein the BIS configuration information comprises a corresponding relationship between the target audio receiving device and a BIS identifier, and the target audio receiving device is configured to receive BIS audio data broadcast by a display apparatus based on the corresponding BIS identifier.
